(19) Europäisches Patentamt
European Patent Office
Office européen des brevets

(11) EP 4 137 529 A1

(12) **EUROPEAN PATENT APPLICATION**
published in accordance with Art. 153(4) EPC

(43) Date of publication:
**22.02.2023 Bulletin 2023/08**

(21) Application number: **21788436.0**

(22) Date of filing: **15.04.2021**

(51) International Patent Classification (IPC):
***C08G 64/02*** *(2006.01)* ***C08G 64/18*** *(2006.01)*
***C09K 5/14*** *(2006.01)*

(52) Cooperative Patent Classification (CPC):
**C08G 64/02; C08G 64/18; C09K 5/14**

(86) International application number:
**PCT/JP2021/015603**

(87) International publication number:
**WO 2021/210647 (21.10.2021 Gazette 2021/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.04.2020 JP 2020072815**

(71) Applicant: **Mitsubishi Chemical Corporation**
**Chiyoda-ku**
**Tokyo 100-8251 (JP)**

(72) Inventors:
- **FUJI Michiaki**
  **Tokyo 100-8251 (JP)**
- **FUJIMURA Atsushi**
  **Tokyo 100-8251 (JP)**
- **FUKUMOTO Kazuki**
  **Tokyo 100-8251 (JP)**
- **SHIMOGAWA Ryuichi**
  **Tokyo 100-8251 (JP)**
- **KONDO Hikaru**
  **Tokyo 100-8251 (JP)**

(74) Representative: **Hoffmann Eitle**
**Patent- und Rechtsanwälte PartmbB**
**Arabellastraße 30**
**81925 München (DE)**

# (54) COPOLYMERIZED POLYCARBONATE RESIN, AND HEAT STORAGE MATERIAL AND HEAT STORAGE MOLDED BODY CONTAINING SAME

(57) A copolymerized polycarbonate resin having, at least, a constituent unit (A) and a constituent unit (B). The constituent unit (A) is derived from a dihydroxy compound. The carbonate constituent unit (B) is derived from a polyoxyalkylene glycol. A weight ratio of the constituent unit (B) derived from a polyoxyalkylene glycol to a weight of the copolymerized polycarbonate resin is preferably more than 20 wt% and 99 wt% or less.

FIG. 1

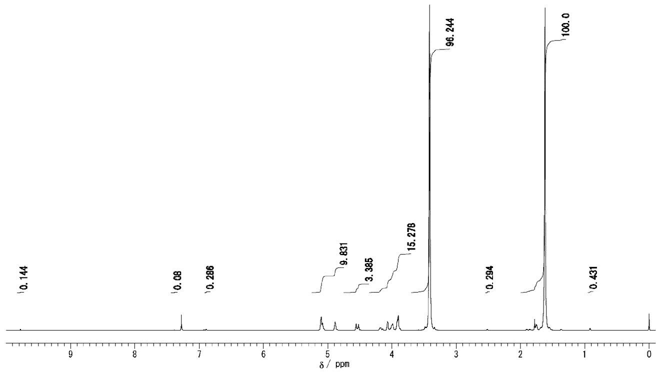

NMR spectrum in Example 4

EP 4 137 529 A1

## Description

### TECHNICAL FIELD

The present disclosure relates to a copolymerized polycarbonate resin excellent in heat storage property, heat resisting property, and shape retention property, and a heat storage material and a heat storage molded body containing the same. The present invention also relates to a phase transition material excellent in heat storage property, heat resisting property, and shape retention property.

### BACKGROUND ART

In recent years, latent heat storage materials utilizing latent heat resulted from phase transition between liquid and solid, phase transition between crystal and amorphous, phase transition of crystal polymorph, or the like have attracted attention.

As a polymer that can be applied to a latent heat storage material, there is known an acrylate-based polymer having a main chain and a long side chain, in which the side chain undergoes phase transition and exhibits heat storage performance by releasing or absorbing latent heat (Patent Literatures 1 to 3). Patent Literature 4 describes a crystalline higher $\alpha$-olefin copolymer, as a polymer having a main chain and a long side chain, which comprises two or more kinds of higher $\alpha$-olefin units having a carbon number of 10 or more.

### CITATIONS LIST

### PATENT LITERATURE

Patent Literature 1: JP 2003-268358 A
Patent Literature 2: JP 2004-27189 A
Patent Literature 3: JP 2011-528396 T
Patent Literature 4: JP 2005-75908 A

### SUMMARY OF INVENTION

### PROBLEMS TO BE SOLVED BY THE INVENTION

On the other hand, polycarbonate resins generally contain a bisphenol as a monomer component, and are widely used as so-called engineering plastics in the electric and electronic parts, automobile parts, and the optical field such as optical recording media, and lenses, taking advantage of transparency, heat resisting property, mechanical strength, and the like, but have not been sufficiently studied as resins applicable to heat storage materials so far.

An object of the present disclosure is to provide a copolymerized polycarbonate resin excellent in heat storage property, heat resisting property and shape retention property, and a heat storage material and a heat storage molded body containing the same. Another object of the present disclosure is to provide a phase transition material excellent in heat storage property, heat resisting property, and shape retention property.

### MEANS FOR SOLVING THE PROBLEMS

A first aspect of the present disclosure is a copolymerized polycarbonate resin comprising

a constituent unit (A) derived from one or more dihydroxy compounds selected from the group consisting of an aliphatic dihydroxy compound, an alicyclic dihydroxy compound, and a heteroalicyclic dihydroxy compound, and
a constituent unit (B) derived from a polyoxyalkylene glycol,
wherein a weight ratio of the constituent unit (B) to a total weight of the copolymerized polycarbonate resin is more than 20 wt% and 99 wt% or less, and
wherein a carbon number $m_1$ of an alkylene group R in a repeating unit which constitutes the polyoxyalkylene glycol and is represented by the following formula (7) and a number average molecular weight of the polyoxyalkylene glycol satisfy any one of the following relationships ($\alpha$1) to ($\alpha$3):

$m_1$ is 2 or 3, and the number average molecular weight is 3,000 or more and 20,000 or less ··· ($\alpha$1);

$m_1$ is 4, 5, or 6, and the number average molecular weight is 1,500 or more and 20,000 or less ··· (α2); and
$m_1$ is an integer of 7 or more, and the number average molecular weight is 800 or more and 20,000 or less ··· (α3),

[Chemical Formula 1]

$$-\!\!\left( O-R \right)_n\!\!- \quad (7)$$

(in the formula (7), R represents an alkylene group, and n represents a number of repetitions).

A second aspect of the present disclosure is a copolymerized polycarbonate resin comprising a constituent unit (A) derived from one or more dihydroxy compounds selected from the group consisting of an aliphatic dihydroxy compound, an alicyclic dihydroxy compound, and a heteroalicyclic dihydroxy compound, and

a constituent unit (B) derived from a polyoxyalkylene glycol,
wherein a carbon number of an alkylene group R in a repeating unit which constitutes the polyoxyalkylene glycol and is represented by the following formula (7) is 7 or more, and a number average molecular weight of the polyoxyalkylene glycol is 800 or more and 20,000 or less,

[Chemical Formula 2]

$$-\!\!\left( O-R \right)_n\!\!- \quad (7)$$

(in the formula (7), R represents an alkylene group, and n represents a number of repetitions).

A third aspect of the present disclosure is a copolymerized polycarbonate resin comprising

a constituent unit (A) derived from a dihydroxy compound, and
a constituent unit (B) derived from a polyoxyalkylene glycol,
wherein a carbon number of an alkylene group R in a repeating unit which constitutes the polyoxyalkylene glycol and is represented by the following formula (7) is 2 or more, and
wherein a weight ratio of the constituent unit (B) to a total weight of the copolymerized polycarbonate resin is more than 50 wt% and 99 wt% or less,

[Chemical Formula 3]

$$-\!\!\left( O-R \right)_n\!\!- \quad (7)$$

(in the formula (7), R represents an alkylene group, and n represents a number of repetitions).

A fourth aspect of the present disclosure is a copolymerized polycarbonate resin comprising

a constituent unit (A) derived from an alicyclic dihydroxy compound and/or a heteroalicyclic dihydroxy compound, and
a constituent unit (B) derived from a polytetramethylene glycol having a number average molecular weight of 1,500 or more and 20,000 or less,
wherein an enthalpy of fusion ΔH(L) observed in a temperature range of -30°C or higher and 80°C or lower by differential scanning calorimetry is 20 J/g or more.

A fifth aspect of the present disclosure is a heat storage material containing the copolymerized polycarbonate resin.

A sixth aspect of the present disclosure is a heat storage molded body obtained by molding the heat storage material.

A seventh aspect of the present disclosure is a phase transition material composed of a polymer, the polymer having a carbonate bond in a molecular chain thereof and having an enthalpy of fusion ΔH(L) of 20 J/g or more observed in a temperature range of -30°C or higher and 80°C or lower by differential scanning calorimetry.

ADVANTAGEOUS EFFECTS OF INVENTION

The copolymerized polycarbonate resin is excellent in heat storage property, heat resisting property, and shape retention property. By using such a copolymerized polycarbonate resin, a heat storage material and a heat storage molded body having high performance can be obtained. The phase transition material is excellent in heat storage property, heat resisting property, and shape retention property.

BRIEF DESCRIPTION OF DRAWINGS

Fig. 1 is an NMR spectrum of a polycarbonate copolymer obtained in Example 4 (i.e., copolymerized polycarbonate resin).
Fig. 2 is an NMR spectrum of a polycarbonate copolymer obtained in Example 6 (i.e., copolymerized polycarbonate resin).
Fig. 3 is an NMR spectrum of a polycarbonate copolymer obtained in Example 12 (i.e., copolymerized polycarbonate resin).
Fig. 4 is an NMR spectrum of a polycarbonate copolymer obtained in Example 13 (i.e., copolymerized polycarbonate resin).
Fig. 5 is an NMR spectrum of a polycarbonate copolymer obtained in Example 14 (i.e., copolymerized polycarbonate resin).
Fig. 6 is an NMR spectrum of a polycarbonate copolymer obtained in Example 7 (i.e., copolymerized polycarbonate resin).
Fig. 7 is an NMR spectrum of a polycarbonate copolymer obtained in Example 8 (i.e., copolymerized polycarbonate resin).
Fig. 8 is an NMR spectrum of a polycarbonate copolymer obtained in Example 9 (i.e., copolymerized polycarbonate resin).
Fig. 9 is a DSC curve of a polycarbonate copolymer obtained in Example 15 (i.e., copolymerized polycarbonate resin).

MODES FOR CARRYING OUT THE INVENTION

Hereinafter, the present invention will be described in detail. The present invention is not limited to the following description, and can be arbitrarily modified and implemented without departing from the gist of the present invention.

Herein, when numerical values or physical property values are put before and after the term "to" to express a range, the term "to" is used in the sense that the range includes the values before and after the term "to".

As used herein, the term "repeating constituent unit" means a constituent unit which repeatedly appears, as the same structure, in a resin, and which is connected to each other to constitute the resin. For example, in the case of a polycarbonate resin, a structure including also a carbonyl group is referred to as repeating constituent unit. In addition, the "constituent unit" means a partial structure that constitutes a resin and the "constituent unit" means a specific partial structure that is included in the repeating constituent unit. For example, it refers to a partial structure sandwiched between adjacent linking groups in a resin, or a partial structure sandwiched between a polymerizable reactive group present at a terminal portion of a polymer and a linking group adjacent to the polymerizable reactive group. More specifically, in the case of a polycarbonate resin, a partial structure sandwiched between adjacent carbonyl groups as linking groups is referred to as constituent unit. The constituent unit including a carbonyl group is appropriately referred to as carbonate constituent unit.

[I] First Aspect

First, the copolymerized polycarbonate resin according to the first aspect of the present disclosure will be described. The first aspect of the present disclosure is, as described above, a copolymerized polycarbonate resin having, at least,

a constituent unit (A) derived from one or more dihydroxy compounds selected from the group consisting of an aliphatic dihydroxy compound, an alicyclic dihydroxy compound, and a heteroalicyclic dihydroxy compound, and
a constituent unit (B) derived from a polyoxyalkylene glycol,
wherein a weight ratio of the constituent unit (B) to a total weight of the copolymerized polycarbonate resin is more than 20 wt% and 99 wt% or less, and
wherein a carbon number $m_1$ of an alkylene group R in a repeating unit which constitutes the polyoxyalkylene glycol and is represented by the following formula (7) and a number average molecular weight of the polyoxyalkylene glycol satisfy any one of the following relationships ($\alpha$1) to ($\alpha$3).

$m_1$ is 2 or 3, and the number average molecular weight is 3,000 or more and 20,000 or less ··· ($\alpha$1);

$m_1$ is 4, 5, or 6, and the number average molecular weight is 1,500 or more and 20,000 or less ··· ($\alpha$2); and
$m_1$ is an integer of 7 or more, and the number average molecular weight is 800 or more and 20,000 or less ··· ($\alpha$3).

[Chemical Formula 4]

$$\left( O - R \right)_n \quad (7)$$

In the formula (7), R represents an alkylene group, and n represents a number of repetitions.

The first aspect is, for example, specified as the following aspects 1-1 to 1-3.

Aspect 1-1 is a copolymerized polycarbonate resin comprising, at least,

a constituent unit (A) derived from one or more dihydroxy compounds selected from the group consisting of an aliphatic dihydroxy compound, an alicyclic dihydroxy compound, and a heteroalicyclic dihydroxy compound, and
a constituent unit (B) derived from a polyoxyalkylene glycol,
wherein a weight ratio of the constituent unit (B) to a total weight of the copolymerized polycarbonate resin is more than 20 wt% and 99 wt% or less, and
wherein a carbon number of an alkylene group R in a repeating unit which constitutes the polyoxyalkylene glycol and is represented by the following formula (7) is 2 or 3, and a number average molecular weight of the polyoxyalkylene glycol is 3,000 or more and 20,000 or less. Aspect 1-1 satisfies the relationship of Formula ($\alpha$1) in the first aspect.

Aspect 1-2 is a copolymerized polycarbonate resin comprising, at least,

a constituent unit (A) derived from one or more dihydroxy compounds selected from the group consisting of an aliphatic dihydroxy compound, an alicyclic dihydroxy compound, and a heteroalicyclic dihydroxy compound, and
a constituent unit (B) derived from a polyoxyalkylene glycol,
wherein a weight ratio of the constituent unit (B) to a total weight of the copolymerized polycarbonate resin is more than 20 wt% and 99 wt% or less, and
wherein a carbon number of an alkylene group R in a repeating unit which constitutes the polyoxyalkylene glycol and is represented by the following formula (7) is 4 to 6, and a number average molecular weight of the polyoxyalkylene glycol is 1,500 or more and 20,000 or less. Aspect 1-1 satisfies the relationship of Formula ($\alpha$2) in the first aspect.

Aspect 1-3 is a copolymerized polycarbonate resin comprising, at least,

a constituent unit (A) derived from one or more dihydroxy compounds selected from the group consisting of an aliphatic dihydroxy compound, an alicyclic dihydroxy compound, and a heteroalicyclic dihydroxy compound, and
a constituent unit (B) derived from a polyoxyalkylene glycol,
wherein a weight ratio of the constituent unit (B) to a total weight of the copolymerized polycarbonate resin is more than 20 wt% and 99 wt% or less, and
wherein a carbon number of an alkylene group R in a repeating unit which constitutes the polyoxyalkylene glycol and is represented by the following formula (7) is 7 or more, and a molecular weight of the polyoxyalkylene glycol is 800 or more and 20,000 or less. Aspect 1-3 satisfies the relationship of Formula ($\alpha$3) in the first aspect. From the viewpoint of availability, the carbon number of the alkylene group R is preferably 30 or less (that is, $m_1$ is an integer of 30 or less), more preferably 25 or less (that is, $m_1$ is an integer of 25 or less), and further preferably 20 or less (that is, $m_1$ is an integer of 20 or less).

• Constituent unit (A)

The copolymerized polycarbonate resin has a constituent unit (A) derived from one or more dihydroxy compounds selected from the group consisting of an aliphatic dihydroxy compound, an alicyclic dihydroxy compound, and a heteroalicyclic dihydroxy compound. That is, the copolymerized polycarbonate resin has at least any one of a constituent unit derived from an aliphatic dihydroxy compound, a constituent unit derived from an alicyclic dihydroxy compound, and a constituent unit derived from a heteroalicyclic dihydroxy compound. The copolymerized polycarbonate resin may also have, for example, a constituent unit derived from an aliphatic dihydroxy compound, a constituent unit derived from an alicyclic dihydroxy compound, and a constituent unit derived from a heteroalicyclic dihydroxy compound. In such a case, these constituent units are collectively referred to as constituent unit (A).
The dihydroxy compound forming the constituent unit (A) is one or more dihydroxy compounds selected from the group consisting of an aliphatic dihydroxy compound, an alicyclic dihydroxy compound, and a heteroalicyclic dihydroxy compound.
The aliphatic dihydroxy compound is defined herein as dihydroxy compound which does not have aromaticity and does not have a carbocyclic structure. The alicyclic dihydroxy compound is defined as carbocyclic dihydroxy compound having no aromaticity. The heteroalicyclic dihydroxy compound herein is defined as cyclic dihydroxy compound containing one or more heteroatoms as atoms constituting the ring. The heteroalicyclic dihydroxy compound herein is a concept that does not include the alicyclic dihydroxy compound described above.
The constituent unit (A) derived from one or more dihydroxy compounds selected from the group consisting of an aliphatic dihydroxy compound, an alicyclic dihydroxy compound, and a heteroalicyclic dihydroxy compound is a segment contributing to heat resisting property and shape retention property in the copolymerized polycarbonate resin. The copolymerized polycarbonate resin has the constituent unit (A) and thus is excellent in heat resisting property and shape retention property.
The aliphatic dihydroxy compound is not particularly limited, and examples thereof include a linear aliphatic dihydroxy compound and an aliphatic dihydroxy compound having a branched chain.
Examples of the linear aliphatic dihydroxy compound include ethylene glycol, 1,3-propanediol, 1,2-propanediol, 1,4-butanediol, 1,5-heptanediol, 1,6-hexanediol, 1,7-peptanediol, 1,8-octanediol, 1,9-nonanediol, 1,10-decanediol, 1,11-undecanediol, 1,12-dodecanediol, 1,13-tridecanediol, 1,14-tetradecanediol, 1,15-pentadecanediol, 1,16-hexadecanediol, 1,17-heptadecanediol, and 1,18-octadecanediol.
Examples of the aliphatic dihydroxy compound having a branched chain include 1,3-butanediol, 1,2-butanediol, neopentyl glycol, and hexylene glycol.
The carbon number of the aliphatic dihydroxy compound is not particularly limited, but is preferably 1 to 30, more preferably 2 to 25, further preferably 5 to 22, and particularly preferably 10 to 20. In this case, crystals are easily generated, the enthalpy of fusion increases, and the heat storage performance is improved.
From the viewpoint of availability of raw materials, a linear aliphatic dihydroxy compound having a carbon number of 1 to 30 is preferable, a linear aliphatic dihydroxy compound having a carbon number of 2 to 25 is more preferable, a linear dihydroxy compound having a carbon number of 5 to 22 is further preferable, and a linear dihydroxy compound having a carbon number of 10 to 20 is particularly preferable. Among them, 1,10-decanediol, 1,12-dodecanediol, and 1,18-octadecanediol are particularly preferable.
The alicyclic dihydroxy compound is not particularly limited, and examples thereof include dihydroxy compounds containing one or more four-membered ring structures in a part of the structure, and dihydroxy compounds containing one or more five-membered ring structures or six-membered ring structures in a part of the structure. The six-membered ring structure may be fixed in a chair shape or a boat shape by a covalent bond. The alicyclic dihydroxy compound contains at least one five-membered ring structure or at least one six-membered ring structure in the structure, and thus the heat resisting property of the copolymerized polycarbonate resin may be further improved. Therefore, the alicyclic dihydroxy compound is preferably a compound containing one or more five-membered ring structures or one or more six-membered ring structures in a part of the structure. The carbon number of the alicyclic dihydroxy compound is usually 70 or less, preferably 50 or less, and more preferably 30 or less. When the carbon number is excessively large, the heat resisting property of the copolymerized polycarbonate resin is increased, but it tends to be difficult to synthesize and purify the alicyclic dihydroxy compound and/or the production cost of the alicyclic dihydroxy compound tends to become expensive. The smaller the carbon number, the easier the purification of the alicyclic dihydroxy compound, and the easier the availability of the alicyclic dihydroxy compound tends to be. From the viewpoint of further improving the heat resisting property, the hydroxy compound containing one or more five-membered ring structures or one or more six-membered ring structures in a part of the structure is preferably an alicyclic dihydroxy compound and/or a dihydroxy compound having a cyclic ether structure, containing one or more five-membered ring structures or one or more six-membered ring structures in a part of the structure.
Specific examples of the alicyclic dihydroxy compound having one or more five-membered ring structures or one or more six-membered ring structures as a part of the structure include alicyclic dihydroxy compounds represented

by the following general formula (I) or (II).

$$HOCH_2\text{-}R^5\text{-}CH_2OH \qquad (I)$$

$$HO\text{-}R^6\text{-}OH \qquad (II)$$

In Formulas (I) and (II), $R^5$ and $R^6$ each independently represent a substituted or unsubstituted divalent group containing a cycloalkyl structure having 4 to 30 carbon atoms.

Cyclohexane dimethanol (hereinafter, referred to as "CHDM in some cases"), which is an alicyclic dihydroxy compound represented by the above general formula (I), includes various isomers of the general formula (I) in which $R^5$ is represented by the following general formula (Ia), (wherein $R^7$ represents a hydrogen atom or a substituted or unsubstituted alkyl group having a carbon number of 1 to 12). Specifically, such compounds include 1,2-cyclohexanedimethanol, 1,3-cyclohexanedimethanol, and 1,4-cyclohexanedimethanol.

[Chemical Formula 5]

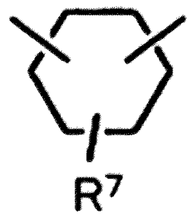

(I a)

Tricyclodecane dimethanol (hereinafter, referred to as "TCDDM" in some cases) and pentacyclopentadecane dimethanol, which are alicyclic dihydroxy compounds represented by the general formula (I), include various isomers represented by the general formula (I) in which $R^5$ is represented by the following general formula (Ib), wherein n represents 0 or 1.

[Chemical Formula 6]

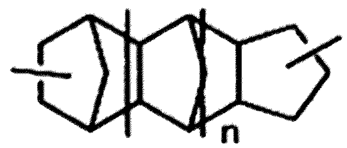

(I b)

Decalin dimethanol or tricyclotetradecane dimethanol, which is an alicyclic dihydroxy compound represented by the general formula (I), include various isomers of the general formula (I) in which $R^5$ is represented by the following general formula (Ic), wherein m represents 0 or 1. Specifically, such compounds include 2,6-decalin dimethanol, 1,5-decalin dimethanol, and 2,3-decalin dimethanol.

[Chemical Formula 7]

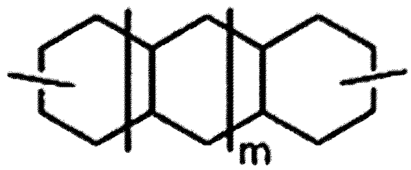

(I c)

Norbornane dimethanol, which is an alicyclic dihydroxy compound represented by the general formula (I), includes various isomers of the general formula (I) in which $R^5$ is represented by the following general formula (Id), wherein p represents 1 or 2. Specifically, such compounds include bicyclo[2.2.1]heptane-2,3-dimethanol (2,3-norbornane dimethanol) and bicyclo[2.2.1]heptane 2,5-dimethanol when p = 1.

[Chemical Formula 8]

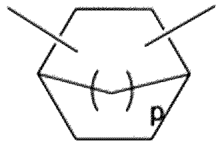

(I d)

When p = 2, bicyclooctane dimethanol, which is an alicyclic dihydroxy compound, includes various isomers of the general formula (I) in which $R^5$ is represented by the following general formula (Id). Specifically, such compounds include bicyclo[2,2,2]octane-1,4-dimethanol (hereinafter, referred to as "BODM" in some cases) represented by the following formula (Id-1).

[Chemical Formula 9]

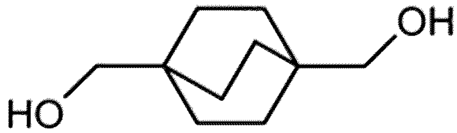

(I d-1)

Adamantane dimethanol (hereinafter, referred to as "ADDM" in some cases), which is an alicyclic dihydroxy compound represented by the general formula (I), includes various isomers of the general formula (I) in which $R^5$ is represented by the following general formula (Ie). Specifically, such compounds include tricyclo[3,3,1,$1^{3,7}$]-1, 3-dimethanol and tricyclo[3,3,1,$1^{3,7}$]-2,2-dimethanol.

[Chemical Formula 10]

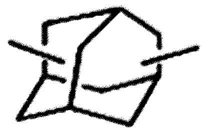

(I e)

Cyclohexanediol, which is an alicyclic dihydroxy compound represented by the general formula (II), includes various isomers of the general formula (II) in which $R^6$ is represented by the following general formula (IIa), wherein $R^7$ represents a hydrogen atom or a substituted or unsubstituted alkyl group having a carbon number of 1 to 12. Specifically, such compounds include 1,2-cyclohexanediol, 1,3-cyclohexanediol, 1,4-cyclohexanediol, and 2-methyl-1,4-cyclohexanediol.

[Chemical Formula 11]

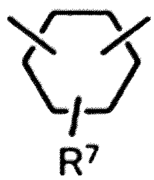

(I I a)

Tricyclodecanediol and pentacyclopentadecanediol, which are alicyclic dihydroxy compounds represented by the general formula (II), include various isomers of the general formula (II) in which $R^6$ is represented by the following general formula (IIb), wherein n represents 0 or 1.

[Chemical Formula 12]

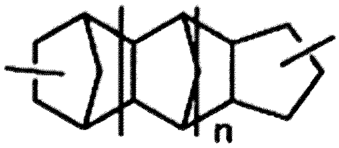

( I I b )

Decalinediol or tricyclotetradecanediol, which are alicyclic dihydroxy compounds represented by the general formula (II), include various isomers of the general formula (II) in which $R^6$ is represented by the following general formula (IIc), wherein m represents 0 or 1. Specifically, 2,6-decalinediol, 1,5-decalinediol, 2,3-decalinediol and the like are used as such compounds.

[Chemical Formula 13]

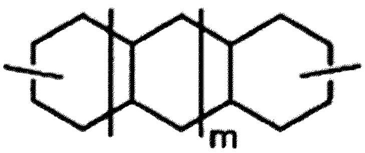

( I I c )

Norbomanediol, which is an alicyclic dihydroxy compound represented by the general formula (II), includes various isomers of the general formula (II) in which $R^6$ is represented by the following general formula (IId), wherein p represents 1 or 2. Specifically, when P = 1, bicyclo[2.2.1]heptane-2,3-diol (2,3-norbomanediol), bicyclo[2.2.1]heptane-2,5-diol, or the like is used as such a compound.

[Chemical Formula 14]

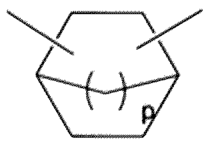

( I I d )

In Formula (IId), when p = 2, bicyclooctanediol, which is an alicyclic dihydroxy compound represented by the general formula (II), includes various isomers of the general formula (II) in which $R^6$ is represented by the following general formula (IId). Specifically, such compounds include bicyclo[2,2,2] octane- 1, 4-diol represented by the following formula (IId-1).

[Chemical Formula 15]

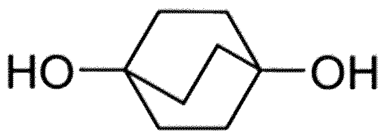

( I I d - 1 )

Adamantanediol, which is an alicyclic dihydroxy compound represented by the general formula (II), include various isomers of the general formula (II) in which $R^6$ is represented by the following general formula (IIe). Specifically, such compounds include tricyclo[3,3,1,$1^{3,7}$]-1,3-diol and tricyclo[3,3,1,$1^{3,7}$]-2,2-diol.

[Chemical Formula 16]

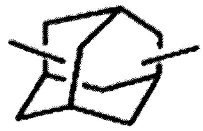

(I I e)

The exemplary compounds described above are examples of the alicyclic dihydroxy compound that can be used, and the alicyclic dihydroxy compound is not limited thereto at all. These alicyclic dihydroxy compounds may be used alone, or two or more kinds thereof may be used in combination. When two or more alicyclic dihydroxy compounds are used in combination, the copolymerized polycarbonate resin has a constituent unit derived from each alicyclic dihydroxy compound. In this case, constituent units derived from each alicyclic dihydroxy compound are collectively referred to as constituent unit (A).

Among the alicyclic dihydroxy compounds containing one or more five-membered ring structures or one or more six-membered ring structures in a part of the structure described above, compounds containing two or more five-membered ring structures and six-membered ring structures in total in a part of the structure are preferred, from the viewpoints that the molecular skeleton is more rigid and that the heat resisting property, shape retention property, and moldability of the copolymerized polycarbonate resin are further improved. In this case, a plurality of rings may be fused rings or spiro rings. Preferred specific examples of such compounds include ADDM represented by the following formula (3), BODM represented by the following formula (4), and TCDDM represented by the following formula (5).

[Chemical Formula 17]

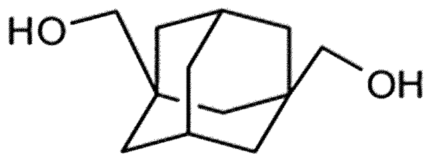

(3)

[Chemical Formula 18]

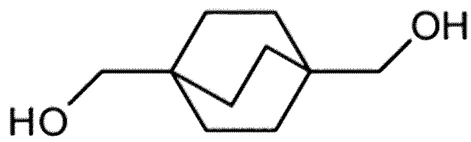

(4)

[Chemical Formula 19]

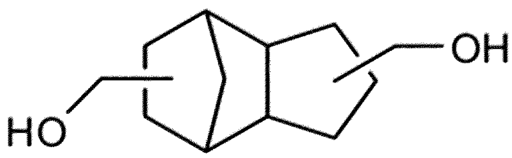

(5)

Among the alicyclic dihydroxy compounds containing one or more five-membered ring structures or one or more six-membered ring structures in a part of the structure described above, one or more compounds selected from the group consisting of CHDM represented by the following formula (6), TCDDM, BODM, and ADDM are preferred, from the viewpoint of availability.

[Chemical Formula 20]

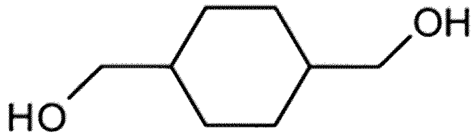

(6)

Among the alicyclic dihydroxy compounds containing one or more five-membered ring structures or one or more six-membered ring structures in a part of the structure described above, one or more compounds selected from the group consisting of TCDDM, BODM, and ADDM are preferred, from the viewpoint that heat resisting property can be imparted to polycarbonate, and BODM and/or ADDM are/is more preferred from the viewpoint that crystallinity can be imparted in addition to heat resisting property.

Examples of the hetero atom in the heteroalicyclic dihydroxy compound include an oxygen atom, a sulfur atom, a nitrogen atom, and a halogen atom. The hetero atom is preferably an oxygen atom and/or a sulfur atom from the viewpoint of low water absorption, coloration prevention, and light resistance. The hetero atom is more preferably an oxygen atom from the viewpoint of coloration prevention and light resistance.

The heteroalicyclic dihydroxy compound is not particularly limited, and examples thereof include a dihydroxy compound having a cyclic ether structure and a dihydroxy compound having a cyclic thioether structure. The heteroalicyclic dihydroxy compound is preferably a dihydroxy compound having a cyclic ether structure from the viewpoint of preventing coloration and generation of an acidic substance.

Specific examples of the dihydroxy compound having a cyclic ether structure include a dihydroxy compound represented by the following formula (1) and a dihydroxy compound represented by the following formula (2).

[Chemical Formula 21]

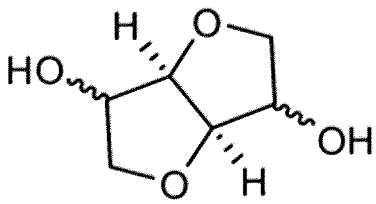

(1)

[Chemical Formula 22]

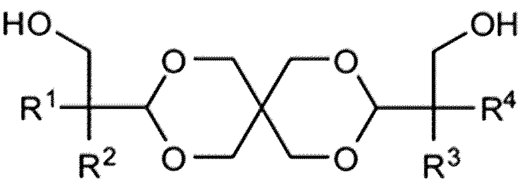

(2)

In the above formula (2), $R^1$ to $R^4$ each independently represent an alkyl group having a carbon number of 1 to 3.

The dihydroxy compound represented by Formula (1) includes isosorbide, isomannide, and isoidet having a stereoisomeric relationship. These compounds may be used alone, or two or more kinds thereof may be used in combination. Among these dihydroxy compounds, isosorbide, which is obtained by dehydration condensation of sorbitol produced from various starches abundantly present as plant-derived resources and easily available, is most preferable from the viewpoint of availability and easy production, light resistance, optical properties, moldability, heat resisting property, and carbon neutrality.

Examples of the dihydroxy compound represented by the above formula (2) include 3,9-bis(1, 1-dimethyl-2-hydroxyethyl)-2,4,8,10-tetraoxaspiro(5.5)undecane (common name: spiroglycol), 3,9-bis(1,1-diethyl-2-hydroxyethyl)-2,4,8,10-tetraoxaspiro(5.5)undecane, 3,9-bis(1,1-dipropyl-2-hydroxyethyl)-2,4,8,10-tetraoxaspiro(5.5)undecane, and dioxane glycol. These compounds may be used alone, or two or more kinds thereof may be used in combination. Spiroglycol is preferred as the dihydroxy compound represented by Formula (2) from the viewpoint of availability and

an increase in glass transition temperature of the resin.

Among the dihydroxy compounds having a cyclic ether structure, compounds containing two or more five-membered ring structures and six-membered ring structures in total in a part of the structure are preferred, from the viewpoints that the molecular skeleton is more rigid and that the heat resisting property and moldability of the copolymerized polycarbonate resin are further improved. In this case, a plurality of rings may be fused rings or spiro rings. Preferred examples of such a compound include the dihydroxy compound represented by the above formula (1) and the dihydroxy compound represented by the above formula (2).

The dihydroxy compound having a cyclic ether structure is more preferably the dihydroxy compound represented by the above formula (1) and/or the dihydroxy compound represented by the above formula (2), from the viewpoints that the heat resisting property and moldability of the copolymerized polycarbonate resin are further improved and that raw materials are easily available.

From the viewpoint that the heat resisting property, shape retention property, and moldability of the copolymerized polycarbonate resin are improved, the constituent unit (A) is preferably a constituent unit derived from the alicyclic dihydroxy compound containing one or more five-membered ring structures or one or more six-membered ring structures in a part of the structure and/or a constituent unit derived from the dihydroxy compound having the cyclic ether structure, and more preferably a constituent unit derived from the alicyclic dihydroxy compound containing two or more five-membered ring structures and six-membered ring structures in total in a part of the structure and/or a constituent unit derived from a dihydroxy compound having a cyclic ether structure containing two or more five-membered ring structures and six-membered ring structures in total in a part of the structure. From the same viewpoint, the constituent unit (A) is preferably a constituent unit derived from one or more dihydroxy compounds selected from the group consisting of CHDM, TCDDM, BODM, ADDM, the dihydroxy compound represented by the above formula (1), and the dihydroxy compound represented by the above formula (2). The constituent unit (A) is more preferably a constituent unit derived from one or more dihydroxy compounds selected from the group consisting of TCDDM, BODM, ADDM, the dihydroxy compound represented by the above formula (1), and the dihydroxy compound represented by the above formula (2).

In a case where the constituent unit (A) includes a constituent unit derived from the alicyclic dihydroxy compound containing two or more five-membered ring structures and six-membered ring structures in total in a part of the structure and/or the dihydroxy compound having the cyclic ether structure containing two or more five-membered ring structures and six-membered ring structures in total in a part of the structure, the constituent unit (A) can further include a constituent unit derived from an alicyclic dihydroxy compound and/or a heteroalicyclic dihydroxy compound different from the alicyclic dihydroxy compound containing two or more five-membered ring structures and six-membered ring structures in total in a part of the structure and the dihydroxy compound having a cyclic ether structure containing two or more five-membered ring structures and six-membered ring structures in total in a part of the structure. When the constituent unit (A) includes a constituent unit derived from the alicyclic dihydroxy compound containing two or more five-membered ring structures and six-membered ring structures in total in a part of the structure and/or the dihydroxy compound having a cyclic ether structure containing two or more five-membered ring structures and six-membered ring structures in total in a part of the structure, it is preferable that the constituent unit (A) further has a constituent unit derived from an alicyclic dihydroxy compound containing only one five-membered ring structure or only one six-membered ring structure in the structure. In this case, the heat storage property of the copolymerized polycarbonate resin may be able to be further improved. Preferred specific examples of the constituent unit derived from the alicyclic dihydroxy compound containing only one five-membered ring structure or only one six-membered ring structure in the structure include the constituent unit derived from CHDM.

From the viewpoints that the heat storage property, heat resisting property, shape retention property, and moldability of the copolymerized polycarbonate resin are excellent in a more balanced manner, and that raw materials are easily available, the constituent unit (A) is particularly preferably composed only of the constituent unit derived from the dihydroxy compound represented by the above formula (1), or composed of the constituent unit derived from the dihydroxy compound represented by the above formula (1) and the constituent unit derived from TCDDM and/or CHDM. From the viewpoint that heat storage property is further improved, the constituent unit (A) is most preferably composed only of the constituent unit derived from the dihydroxy compound represented by the above formula (1), or composed of the constituent unit derived from the dihydroxy compound represented by the above formula (1) and the constituent unit derived from CHDM.

From the viewpoint that the heat storage property and heat resisting property of the copolymerized polycarbonate resin are further improved, the constituent unit (A) is particularly preferably composed only of the constituent unit derived from ADDM or composed of the constituent unit derived from ADDM and the constituent unit derived from TCDDM and/or CHDM. From the viewpoint that heat storage property is further improved, the constituent unit (A) is most preferably composed only of the constituent unit derived from ADDM, or composed of the constituent unit derived from ADDM and the constituent unit derived from CHDM.

From the viewpoint that the heat storage property and heat resisting property of the copolymerized polycarbonate resin are further improved, the constituent unit (A) is particularly preferably composed only of the constituent unit derived

from BODM or composed of the constituent unit derived from BODM and the constituent unit derived from TCDDM and/or CHDM. From the viewpoint that heat storage property is further improved, the constituent unit (A) is most preferably composed only of the constituent unit derived from BODM, or composed of the constituent unit derived from BODM and the constituent unit derived from CHDM.

From the viewpoints that the heat storage property, heat resisting property, and shape retention property of the copolymerized polycarbonate resin are further improved, and that raw materials are easily available, the constituent unit (A) is particularly preferably composed only of the constituent unit derived from the dihydroxy compound represented by the above formula (2), or composed of the constituent unit derived from the dihydroxy compound represented by the above formula (2) and the constituent unit derived from TCDDM and/or CHDM. From the viewpoint that heat storage property is further improved, the constituent unit (A) is most preferably composed only of the constituent unit derived from the dihydroxy compound represented by the above formula (2), or composed of the constituent unit derived from the dihydroxy compound represented by the above formula (2) and the constituent unit derived from CHDM.

A weight ratio of the constituent unit (A) to a total weight of the polycarbonate resin is not particularly limited, but is preferably 5 wt% or more and 75 wt% or less. A lower limit of the weight ratio of the constituent unit (A) is more preferably 15 wt%, further preferably 20 wt%, and particularly preferably 30 wt%. On the other hand, the upper limit is more preferably 70 wt%, further preferably 60 wt%, and particularly preferably 45 wt%. When the weight ratio of the constituent unit (A) is within the above range, the balance among heat storage property, heat resisting property, and molding retention property is further improved. Herein, the weight ratio of the constituent unit derived from the dihydroxy compound (for example, the constituent unit (A), a constituent unit (B) which will be described later, and the like) in the copolymerized polycarbonate resin is for a constituent unit containing one carbonyl group as a linking group, that is, for a repeating constituent unit.

• Constituent unit (B)

The copolymerized polycarbonate resin has a constituent unit (B) derived from a polyoxyalkylene glycol.

In the dihydroxy compound (specifically, polyoxyalkylene glycol) forming the constituent unit (B), a carbon number $m_1$ of an alkylene group R in a repeating unit which is contained in the polyoxyalkylene glycol and is represented by Formula (7) and a number average molecular weight of the polyoxyalkylene glycol satisfy any of the relationships of Formulas ($\alpha$1) to ($\alpha$3).

[Chemical Formula 23]

$$\left( O - R \right)_n \quad (7)$$

(In the formula(7), R represents an alkylene group, and n represents a number of repetitions.)

The copolymerized polycarbonate resin has the constituent unit (B), and thus the copolymerized polycarbonate resin has a large enthalpy of fusion and is excellent in heat storage property. In addition, as will be described later, the present inventors have found that the melting peak temperature can be adjusted by selecting a polyoxyalkylene glycol having a carbon number of 2 or more in the repeating unit into which the constituent unit (B) is introduced so as to satisfy specific conditions.

Herein, the repeating unit of the polyoxyalkylene glycol refers to a partial constituent unit put in parentheses in the following formula (8).

[Chemical Formula 24]

$$H \left( O - R \right)_n OH \quad (8)$$

(In the formula (8), R represents an alkylene group, and n represents a number of repetitions of the polyoxyalkylene glycol.)

The weight ratio of the constituent unit (B) to the total weight of the copolymerized polycarbonate resin is more than 20 wt% and 99 wt% or less. When the weight ratio of the constituent unit (B) exceeds 20 wt%, the crystallinity of the copolymerized polycarbonate resin increases and the enthalpy of fusion increases, so that the copolymerized polycarbonate resin is excellent in heat storage property. When the weight ratio of the constituent unit (B) is 99 wt% or less, the copolymerized polycarbonate resin is excellent in heat resisting property and shape retention property. From the viewpoint of further improving the heat storage property of the copolymerized polycarbonate resin, the weight ratio of the constituent unit (B) is preferably 25 wt% or more, more preferably 30 wt% or more, further preferably 50 wt% or more, and particularly preferably 65 wt% or more. On the other hand, from the viewpoint of further improving the heat resisting property and shape retention property of the copolymerized polycarbonate resin, the weight ratio of the constituent unit (B) is preferably 95 wt% or less, more preferably 90 wt% or less, further preferably 88 wt% or less, and particularly preferably 85 wt% or less. Herein, the "weight ratio of the constituent unit (B) to the total weight of the copolymerized polycarbonate resin" is substantially synonymous with the "weight ratio of the constituent unit (B) to all the constituent units constituting the copolymerized polycarbonate resin". Similarly, the "weight ratio of the constituent unit (A) to the total weight of the copolymerized polycarbonate resin" is substantially synonymous with the "weight ratio of the constituent unit (A) to all the constituent units constituting the copolymerized polycarbonate resin". In addition, the carbonate constituent unit means a constituent unit containing a carbonyl group, and the weight ratio of the constituent unit derived from the dihydroxy compound in the copolymerized polycarbonate resin is for a constituent unit containing one carbonyl group as a linking group, that is, a repeating constituent unit. Therefore, the weight ratio of the constituent unit (that is, the constituent unit A or the constituent unit B) to all the constituent units constituting the copolymerized polycarbonate resin is substantially synonymous with the weight ratio of the carbonate constituent unit (that is, the carbonate constituent unit A or the carbonate constituent unit B) to all the constituent units constituting the copolymerized polycarbonate resin.

It is preferable that the carbon number of the alkylene group R in the repeating unit which constitutes the polyoxyalkylene glycol and is represented by Formula (7) be 2 to 3, and that the number average molecular weight of the polyoxyalkylene glycol be 3,000 or more and 20,000 or less. In this case, the copolymerized polycarbonate resin exhibits a melting peak temperature (that is, a melting peak temperature exceeding 35°C) higher than room temperature (specifically, 20 to 35°C), and exhibits excellent heat storage property in a high temperature range (specifically, higher than 35°C and 80°C or lower). Therefore, the copolymerized polycarbonate resin is preferably used as a heat storage material required to have heat storage performance in a high temperature range (specifically, higher than 35°C and 80°C or lower). From the same viewpoint, it is more preferable that the carbon number of the alkylene group R in the repeating unit which constitutes the polyoxyalkylene glycol and is represented by Formula (7) be 2 to 3, and that the number average molecular weight be 3,500 or more and 15,000 or less, and it is particularly preferable that the carbon number of the alkylene group R in the repeating unit which constitutes the polyoxyalkylene glycol and is represented by Formula (7) be 2 to 3, and that the number average molecular weight be 4,000 or more and 12,000 or less.

Also, it is preferable that the carbon number of the alkylene group R in the repeating unit which constitutes the polyoxyalkylene glycol and is represented by Formula (7) be 4 to 6, and that the number average molecular weight be 1,500 or more and 20,000 or less. In this case, the copolymerized polycarbonate resin exhibits a melting peak temperature close to room temperature (specifically, 20 to 35°C) and exhibits excellent heat storage property at room temperature. Therefore, the copolymerized polycarbonate resin is preferably used as a heat storage material required to have heat storage performance at room temperature (specifically, 20 to 35°C). From the same viewpoint, it is more preferable that the carbon number of the alkylene group R in the repeating unit which constitutes the polyoxyalkylene glycol and is represented by Formula (7) be 4 to 6, and that the number average molecular weight be 2,000 or more and 15,000 or less, it is further preferable that the carbon number of the alkylene group R in the repeating unit which constitutes the polyoxyalkylene glycol and is represented by Formula (7) be 4 to 6, and that the number average molecular weight be 2,500 or more and 10,000 or less, and it is particularly preferable that the carbon number of the alkylene group R in the repeating unit which constitutes the polyoxyalkylene glycol and is represented by Formula (7) be 4 to 6, and that the number average molecular weight be 3,500 or more and 7,000 or less.

Also, it is preferable that the carbon number of the alkylene group R in the repeating unit which constitutes the polyoxyalkylene glycol and is represented by Formula (7) be 7 or more, and that the number average molecular weight be 800 or more and 20,000 or less. In this case, the copolymerized polycarbonate resin exhibits a melting peak temperature (that is, a melting peak temperature exceeding 35°C) higher than room temperature (20°C to 35°C), and exhibits excellent heat storage property in a high temperature range. Therefore, the copolymerized polycarbonate resin is preferably used as a heat storage material required to have heat storage performance in a high temperature range (specifically, higher than 35°C and 80°C or lower). From the same viewpoint, it is more preferable that the carbon number of the alkylene group R in the repeating unit which constitutes the polyoxyalkylene glycol and is represented by Formula (7) be 7 or more and 15 or less, and that the number average molecular weight be 800 or more and 15,000 or less, it is further preferable that the carbon number of the alkylene group R in the repeating unit which constitutes the polyoxyalkylene glycol and is represented by Formula (7) be 8 or more and 12 or less, and that the number average molecular weight be 800 or more and 10,000 or less, and it is particularly preferable that the carbon number of the alkylene group R in the repeating unit which constitutes the polyoxyalkylene glycol and is represented by Formula (7) be 9 or more and 10 or less, and that the number average molecular weight be 900 or more and 8,000 or less.

The number average molecular weight of the polyoxyalkylene glycol can be calculated by, for example, a method of measuring the number average molecular weight by gel permeation chromatography (GPC), a method of determining the number average molecular weight from a hydroxyl value of a terminal group, or the like. The number average molecular weight of the polyoxyalkylene glycol constituting the constituent unit (B) in the copolymerized polycarbonate resin can be calculated, for example, from the area ratio between a main chain signal of the constituent unit (B) and a terminal signal of the constituent unit (B) in a 1H or 13 C-NMR spectrum.

As the polyalkylene glycol, for example, a polyalkylene glycol produced by a method described in Example 1 of JP 2018-165343 A can be used. Specifically, a polyalkylene glycol having an alkylene chain with an appropriate carbon number is first produced from an alkylene diol having an alkylene chain with an appropriate carbon number so as to, for example, produce a polydecamethylene glycol using a polycondensation reaction using 1,10-decanediol as a raw material. Subsequently, by hydrolyzing this polyalkylene glycol in an acidic or basic aqueous solution while adjusting conditions such as temperature, catalyst type, catalyst amount, polymerization temperature, and polymerization reaction time, a polyalkylene glycol having an appropriate carbon number of an alkylene chain and an appropriate molecular weight can be obtained.

In the copolymerized polycarbonate resin, the constituent unit (B) preferably includes a constituent unit derived from a polyethylene glycol having a number average molecular weight of 3,000 or more and 20,000 or less. In this case, the copolymerized polycarbonate resin exhibits a melting peak temperature (that is, a melting peak temperature exceeding 35°C) higher than room temperature (specifically, 20°C to 35°C), and exhibits excellent heat storage property in a high temperature range. Therefore, the copolymerized polycarbonate resin is preferably used as a heat storage material required to have heat storage performance in a high temperature range (specifically, higher than 35°C and 80°C or lower). From the same viewpoint, the constituent unit (B) more preferably includes a constituent unit derived from a polyethylene glycol having a number average molecular weight of 3,500 or more and 15,000 or less, and particularly preferably includes a constituent unit derived from a polyethylene glycol having a number average molecular weight of 4,000 or more and 12,000 or less.

In the copolymerized polycarbonate resin, the constituent unit (B) preferably includes a constituent unit derived from a polytetramethylene glycol (that is, PTMG) having a number average molecular weight of 1,500 or more and 20,000 or less. In this case, the copolymerized polycarbonate resin exhibits a melting peak temperature close to room temperature (specifically, 20 to 35°C) and exhibits excellent heat storage property at room temperature. Therefore, the copolymerized polycarbonate resin is preferably used as a heat storage material required to have heat storage performance at room temperature (specifically, 20 to 35°C). From the same viewpoint, the constituent unit (B) more preferably includes a constituent unit derived from PTMG having a number average molecular weight of 2,000 or more and 15,000 or less, more preferably includes a constituent unit derived from PTMG having a number average molecular weight of 2,500 or more and 10,000 or less, further preferably includes a constituent unit derived from PTMG having a number average molecular weight of 3,000 or more and 8,000 or less, and particularly preferably includes a constituent unit derived from PTMG having a number average molecular weight of 3,500 or more and 8,000 or less.

PTMG can be obtained as a commercial product. Further, for example, PTMG can be produced by the method described in Example 1 of JP 2004-161893 A.

In the copolymerized polycarbonate resin, the constituent unit (B) preferably includes a constituent unit derived from a polyhexamethylene glycol (that is, PHMG) having a number average molecular weight of 1,500 or more and 20,000 or less. In this case, the copolymerized polycarbonate resin exhibits a melting peak temperature in a room temperature to high temperature range (specifically, 20°C to 80°C), and exhibits excellent heat storage property in the room temperature to high temperature range. Therefore, the copolymerized polycarbonate resin is preferably used as a heat storage material required to have heat storage performance in the room temperature to high temperature range. From the same viewpoint, the constituent unit (B) more preferably includes a constituent unit derived from PHMG having a number average molecular weight of 2,000 or more and 15,000 or less, and particularly preferably includes a constituent unit derived from PHMG having a number average molecular weight of 2,500 or more and 10,000 or less.

In the copolymerized polycarbonate resin, the constituent unit (B) preferably includes a constituent unit derived from a polynonamethylene glycol (that is, PNMG) having a number average molecular weight of 800 or more and 20,000 or less. In this case, the copolymerized polycarbonate resin exhibits a melting peak temperature (specifically, a melting peak temperature of more than 35°C) in a high temperature range and exhibits excellent heat storage property in a high temperature range (specifically, higher than 35°C and 80°C or lower). Therefore, the copolymerized polycarbonate resin is preferably used as a heat storage material required to have heat storage performance in a high temperature range (specifically, higher than 35°C and 80°C or lower). From the same viewpoint, the constituent unit (B) more preferably includes a constituent unit derived from PNMG having a number average molecular weight of 900 or more and 15,000 or less, and particularly preferably includes a constituent unit derived from PNMG having a number average molecular weight of 1,000 or more and 10,000 or less.

In the copolymerized polycarbonate resin, the constituent unit (B) preferably includes a constituent unit derived from a polydecamethylene glycol (that is, PDMG) having a number average molecular weight of 800 or more and 20,000

or less. In this case, the copolymerized polycarbonate resin exhibits a melting peak temperature (specifically, a melting peak temperature of higher than 35°C) in a high temperature range and exhibits excellent heat storage property in a high temperature range (specifically, higher than 35°C and 80°C or lower). Therefore, the copolymerized polycarbonate resin is preferably used as a heat storage material required to have heat storage performance in a high temperature range (specifically, higher than 35°C and 80°C or lower). From the same viewpoint, the constituent unit (B) more preferably includes a constituent unit derived from PDMG having a number average molecular weight of 900 or more and 15,000 or less, and particularly preferably includes a constituent unit derived from PDMG having a number average molecular weight of 1,000 or more and 10,000 or less.

The copolymerized polycarbonate resin may contain a constituent unit other than the constituent unit (A) and the constituent unit (B) described above. Hereinafter, the constituent unit other than the constituent unit (A) and the constituent unit (B) is referred to as "constituent unit (C) in some cases". The dihydroxy compound forming the constituent unit (C) does not contain the dihydroxy compound forming the constituent unit (A) or the dihydroxy compound forming the constituent unit (B). Examples of the dihydroxy compound constituting the constituent unit (C) include acetal-containing dihydroxy compounds other than the dihydroxy compound represented by the above formula (2). As the compound forming the constituent unit (C), a hydroxy compound containing three or more hydroxy groups in the molecule may be used. The polycarbonate resin may have a constituent unit derived from a diester compound. A polycarbonate resin partially incorporating a constituent unit derived from a diester compound is referred to as polyester carbonate resin. Herein, the polycarbonate resin includes a polyester carbonate resin.

Examples of the diester compound include the following dicarboxylic acids: aromatic dicarboxylic acids such as terephthalic acid, phthalic acid, isophthalic acid, 4,4'-diphenyldicarboxylic acid, 4,4'-diphenyl ether dicarboxylic acid, 4,4'-benzophenone dicarboxylic acid, 4,4'-diphenoxyethane dicarboxylic acid, 4,4'-diphenylsulfonedicarboxylic acid, and 2,6-naphthalenedicarboxylic acid; alicyclic dicarboxylic acids such as 1,2-cyclohexanedicarboxylic acid, 1,3-cyclohexanedicarboxylic acid, and 1,4-cyclohexanedicarboxylic acid; and aliphatic dicarboxylic acids such as malonic acid, succinic acid, glutaric acid, adipic acid, pimelic acid, suberic acid, azelaic acid, and sebacic acid. These dicarboxylic acids can be used as raw materials for polyester carbonates resin as dicarboxylic acids themselves, but dicarboxylic acid derivatives such as dicarboxylic acid esters including methyl ester bodies and phenyl ester bodies of dicarboxylic acids, and dicarboxylic acid halides can also be used as raw materials depending on the production method.

Examples of the hydroxy compound containing three or more hydroxy groups in the molecule include the following hydroxy compounds: polyhydric alcohols having three hydroxyl groups, such as glycerin, trimethylolpropane, and triethanolamine; polyhydric alcohols having four hydroxyl groups, such as pentaerythritol, diglycerin, xylose, and sorbitan; polyhydric alcohols having five hydroxyl groups, such as xylitol, triglycerin, glucose, and fructose; polyhydric alcohols having six hydroxyl groups, such as sorbitol, malbitol, tetraglycerin, and inositol; polyglycerin having more than six hydroxyl groups, disaccharides such as sucrose, trehalose, and lactose; and trisaccharides such as maltotriose. These compounds may be used alone, or two or more kinds thereof may be used in combination. Among them, trimethylolpropane and glycerin are suitably used.

When the constituent unit (C) is introduced into the copolymerized polycarbonate resin, a content of the constituent unit (C) is set to a relatively small amount, and the constituent unit (C) is preferably used, for example, for the purpose of improving heat storage property.

When the copolymerized polycarbonate resin has the constituent unit (C), a weight ratio of the constituent unit (C) to the total weight of the copolymerized polycarbonate resin is preferably 1 wt% or more, and more preferably 3 wt% or more, from the viewpoint that heat storage property can be more sufficiently improved. In addition, the weight ratio of the constituent unit (C) to the total weight of the copolymerized polycarbonate resin is preferably 10 wt% or less, and more preferably 7 wt% or less, from the viewpoint that the heat storage property and the shape retention property are excellent in a more balanced manner.

When the copolymerized polycarbonate resin contains, as the constituent unit (C), a constituent unit derived from a hydroxy compound having 3 or more hydroxy groups in the molecule, the weight ratio of the constituent unit derived from a hydroxy compound having 3 or more hydroxy groups in the molecule to the total weight of the copolymerized polycarbonate resin is preferably 0.1 wt% or more, and more preferably 0.3 wt% or more, from the viewpoint that the heat storage property and the shape retention property are excellent in a more balanced manner. From the same viewpoint, the weight ratio of the constituent unit derived from the hydroxy compound having three or more hydroxy groups in the molecule is preferably 3 wt% or less, and more preferably 1 wt% or less.

From the viewpoint that heat storage property is further improved, the copolymerized polycarbonate resin preferably has an enthalpy of fusion (hereinafter, referred to as $\Delta H(L)$ in some cases) of 20 J/g or more, more preferably 30 J/g or more, further preferably 40 J/g or more, even more preferably 50 J/g or more, and particularly preferably 55 J/g or more, observed in a temperature range of -30°C or higher and 80°C or lower by differential scanning calorimetry. From the viewpoint of difficulty in realization, $\Delta H(L)$ is usually 500 J/g or less, more preferably 200 J/g or less, and particularly preferably 150 J/g or less.

Herein, the enthalpy of fusion is heat of fusion obtained by analyzing a portion within a specific temperature

range of a melting curve as measured by differential scanning calorimetry according to the method of JIS K7122-1987. When a plurality of melting peaks are present within a specific temperature range, a sum of peak areas within the temperature range is defined as enthalpy of fusion.

Herein, a temperature range of 160°C or higher and 280°C or lower is selected in differential scanning calorimetry, and the enthalpy of fusion may be measured in addition to the enthalpy of fusion ΔH(L) observed in the temperature range of -30°C or higher and 80°C or lower. Herein, the enthalpy of fusion observed in the temperature range of 160°C or higher and 280°C or lower by differential scanning calorimetry is referred to as ΔH(H) in some cases.

The copolymerized polycarbonate resin may have ΔH(H) in addition to ΔH(L). It is presumed that ΔH(L) is mainly an enthalpy of fusion derived from the constituent unit (B), and that ΔH(H) is mainly an enthalpy of fusion derived from the constituent unit other than the constituent unit (B) (specifically, the constituent unit (A) or the like). When the copolymerized polycarbonate resin has ΔH(H) described above, ΔH(H) is preferably 1 J/g or more, more preferably 5 J/g or more, and further preferably 15 J/g from the viewpoint of moldability and shape retention property. From the viewpoint that shape retention property and molding processability are further improved, ΔH(H) is usually 100 J/g or less, preferably 70 J/g or less, and particularly preferably 50 J/g or less.

ΔH(L) can be adjusted to the above range, for example, by increasing or decreasing the content of the constituent unit (B) or preparing the type of the constituent unit (B). Specifically, ΔH(L) tends to increase by increasing the content of the constituent unit (B), and ΔH(L) tends to decrease by decreasing the content of the constituent unit (B). In addition, ΔH(L) can be increased by selecting the type of the constituent unit (B).

ΔH(H) can be adjusted to the above range, for example, by increasing or decreasing the content of the constituent unit (A) or selecting the type of the constituent unit (A). Specifically, ΔH(H) tends to increase by increasing the content of the constituent unit (A), and ΔH(H) tends to decrease by decreasing the content of the constituent unit (A). In addition, ΔH(H) tends to increase when a type having high crystallinity of the constituent unit (A) is selected, and ΔH(H) tends to decrease when a type having low crystallinity of the constituent unit (A) is selected. ΔH(H) tends to increase when an amount of the constituent unit (A) increases, and ΔH(H) tends to decrease when an amount of the constituent unit (A) decreases. The enthalpy of fusion can be adjusted to a desired value by selecting the types and content ratios of the constituent unit (A) and the constituent unit (B).

The enthalpies of fusion (ΔH(L) and ΔH(H) described above) are specifically measured as follows. When the melting peak temperature (Tm) is 200°C or lower, first, an aluminum sample pan enclosing about 10 mg of a measurement sample (specifically, a copolymerized polycarbonate resin) is cooled to -120°C in a nitrogen atmosphere using a differential scanning calorimeter "EXSTAR 6220" manufactured by SII NanoTechnology Inc., then heated from about - 120°C to 200°C at a temperature rising rate of 20°C/min. Subsequently, the sample pan is cooled at a temperature lowering rate of 20°C/min, and the temperature is lowered to -120°C. Thereafter, the sample pan is heated again at a temperature rising rate of 20°C/min, and the temperature is raised to 200°C. A differential scanning calorimetry curve obtained by the second temperature increase is taken as a measurement curve. ΔH(L) is obtained by analyzing a portion in a temperature range of -30°C or higher and 80°C or lower according to the method of JIS K7122:1987.

When the melting peak temperature (Tm) is higher than 200°C, the measurement is performed by changing an upper limit temperature of the measurement to, for example, 300°C, and using the same other conditions (for example, start temperature, temperature rising rate, temperature lowering rate, and retention time). For example, when the melting peak temperature (Tm) is 280°C or lower, first, an aluminum sample pan enclosing about 10 mg of a measurement sample (specifically, a copolymerized polycarbonate resin) is cooled to -120°C in a nitrogen atmosphere using a differential scanning calorimeter "EXSTAR 6220" manufactured by SII NanoTechnology Inc., then heated from about -120°C to 280°C at a temperature rising rate of 20°C/min. Subsequently, the sample pan is cooled at a temperature lowering rate of 20°C/min, and the temperature is lowered to -120°C. Thereafter, the sample pan is heated again at a temperature rising rate of 20°C/min, and the temperature is raised to 280°C. A differential scanning calorimetry curve obtained by the second temperature increase is taken as a measurement curve. ΔH(L) is obtained by analyzing a portion in a temperature range of -30°C or higher and 80°C or lower, and ΔH(H) is obtained by analyzing a portion in a temperature range of 160°C or higher and 280°C or lower, in accordance with the method of JIS K7122:1987.

As shown in Fig. 9, when the melting peak temperature (Tm) of the constituent unit (A) and the melting peak temperature (Tm) of the constituent unit (B) are present at positions close to each other, there may be a plurality of peaks where the enthalpy of fusion is not separated (unseparated) on one baseline. Fig. 9 shows an example in which two peaks, a first peak (specifically, a peak of the constituent unit (B)) and a second peak (specifically, a peak of the constituent unit (A)) are present. In this case, the individual peaks are divided by a perpendicular line $L_2$ drawn from a point where data between the peaks became maximum (for example, a point on the DCS curve at 35°C existing between the first peak and the second peak in Fig. 9), to the baseline $L_1$. Such a peak separation method is referred to as "vertical division". The maximum point (for example, point at 35°C on the DSC curve in Fig. 9) of the data between the first peak and the second peak is a peak end of the first peak and a peak start of the second peak. A peak start of the first peak is the same point as a base start on the low temperature side (for example, point on the DSC curve at -14°C in Fig. 9). Each peak area is an area of a region surrounded by the DSC curve, the division line (that is, perpendicular line $L_2$),

and the baseline $L_1$, and the enthalpy of fusion is determined by calculating this area.

The first peak on the low temperature side is the enthalpy of fusion of the constituent unit (B), and the second peak on the high temperature side is the enthalpy of fusion of the constituent unit (A). Fig. 9 shows an example (specifically, Example 15 which will be described later) of the DSC curve at the time of the second temperature rise and results of peak separation by vertical division.

[Physical Properties of Copolymerized Polycarbonate Resin]

The physical properties of the copolymerized polycarbonate resin are not particularly limited, but those satisfying the following physical properties are preferred.

• Reduced viscosity

The molecular weight of the copolymerized polycarbonate resin can be represented by reduced viscosity, and the higher the reduced viscosity, the larger the molecular weight. From the viewpoint that the shape retention property of the copolymerized polycarbonate resin is further improved, the reduced viscosity is preferably 0.30 dL/g or more, and more preferably 0.40 dL/g or more. On the other hand, it is possible to produce a molded body while maintaining fluidity during molding of the copolymerized polycarbonate resin, and thus the reduced viscosity is preferably 2.0 dL/g or less, more preferably 1.50 dL/g or less, and still more preferably 1.00 dL/g or less, from the viewpoints that productivity and moldability are further improved and that the strength of the molded body is further improved.

The reduced viscosity of the copolymerized polycarbonate resin is measured as follows. First, the copolymerized polycarbonate resin is dissolved using a solvent to prepare a polycarbonate solution having a concentration of 1.00 g/dl. As the solvent, a mixed solvent of phenol and 1,1,2,2-tetrachloroethane is used. A mixing ratio between phenol and 1,1,2,2-tetrachloroethane is 1:1 in mass ratio. A value measured under the condition of a temperature of 30.0°C ± 0.1°C by an Ubbelohde viscometer is used as the reduced viscosity. Details of a method for measuring the reduced viscosity will be described in the Examples.

• Glass transition temperature (Tg)

When the copolymerized polycarbonate resin has a glass transition temperature (Tg), Tg is preferably 80°C or higher, and more preferably 100°C or higher, from the viewpoint that the shape retention property and heat resisting property of the copolymerized polycarbonate resin are further improved. From the viewpoint of difficulty in realization, Tg is preferably 300°C or lower, and more preferably 200°C or lower.

The glass transition temperature is measured in accordance with the method specified in JIS K7121-1987. Specifically, measurement is performed using a differential scanning calorimeter (for example, "EXSTAR 6220" manufactured by SII NanoTechnology Inc.). As conditions for the measurement, an aluminum sample pan enclosing about 10 mg of a sample of a copolymerized polycarbonate resin is cooled to -120°C in a nitrogen atmosphere, then heated from about -120°C to 200°C at a temperature rising rate of 20°C/min. Then, the sample pan is cooled to -120°C at a temperature lowering rate of 20°C/min. Thereafter, the sample pan is heated again at a temperature rising rate of 20°C/min, and the temperature is raised to 200°C. An extrapolated glass transition start temperature can be determined from the DSC data obtained at the second temperature rise. A midpoint glass transition start temperature is determined from a temperature at which a straight line equidistant in the vertical axis direction from a straight line extending a low-temperature side baseline and a high-temperature side baseline intersects with a curve of a stepwise change portion of the glass transition. This midpoint glass transition start temperature is treated as glass transition temperature Tg.

When the glass transition temperature Tg is higher than 200°C, the measurement is performed by changing an upper limit temperature of the measurement to, for example, 300°C, and using the same other conditions (for example, start temperature, temperature rising rate, temperature lowering rate, and retention time).

The glass transition temperature of the copolymerized polycarbonate can be adjusted, for example, by copolymerization composition of the constituent unit (A) and the constituent unit (B).

• Melting peak temperature (Tm)

Herein, the melting peak temperature (Tm) is a temperature at an apex of a melting peak obtained by analyzing, by the method in accordance with JIS K7121-1987, a melting curve as measured by differential scanning calorimetry in the same way as in the case of the glass transition temperature described above. Herein, a melting peak temperature obtained by analyzing a portion in a temperature range of -30°C or higher and 80°C or lower by the method in accordance with JIS K7121-1987 is defined as Tm (L), and a melting peak temperature obtained by similarly analyzing a portion in a temperature range of 160°C or higher and 280°C or lower is defined as Tm (H).

The copolymerized polycarbonate resin usually has Tm (L), but may have both Tm (L) and Tm (H). It is presumed that the former is mainly a melting peak derived from the constituent unit (B), and that the latter is mainly a melting peak derived from the constituent unit (specifically, the constituent unit (A) or the like) other than the constituent unit (B). Each of Tm (L) and Tm (H) may have a plurality of melting peak temperatures.

From the viewpoint that the heat storage performance of the heat storage material containing the copolymerized polycarbonate resin is further improved, Tm (L) of the copolymerized polycarbonate resin is preferably 10°C or higher and 100°C or lower. A lower limit of Tm (L) of the copolymerized polycarbonate resin is more preferably 15°C and further preferably 20°C, from the viewpoint that the heat storage performance in the vicinity of a practical temperature range (specifically, 10 to 100°C) is further improved, thereby making the copolymerized polycarbonate resin more practical as a heat storage material. From the same viewpoint, an upper limit is more preferably 80°C and further preferably 60°C.

When the copolymerized polycarbonate resin has Tm(H) described above, Tm(H) is preferably 150°C or higher and 350°C or lower, and more preferably 200°C or higher and 300°C or lower, from the viewpoint that shape retention property, moldability, processability, and heat resisting property are further improved.

[II] Second Aspect

Then, the copolymerized polycarbonate resin according to the second aspect of the present disclosure will be described. The second aspect of the present disclosure is, as described above, a copolymerized polycarbonate resin having, at least,

a constituent unit (A) derived from one or more dihydroxy compounds selected from the group consisting of an aliphatic dihydroxy compound, an alicyclic dihydroxy compound, and a heteroalicyclic dihydroxy compound, and
a constituent unit (B) derived from a polyoxyalkylene glycol,
wherein a carbon number of an alkylene group R in a repeating unit which constitutes the polyoxyalkylene glycol and is represented by the following formula (7) is 7 or more, and a number average molecular weight of the polyoxyalkylene glycol is 800 or more and 20,000 or less,

[Chemical Formula 25]

$$\left( O - R \right)_n \qquad (7)$$

(in the formula (7), R represents an alkylene group, and n represents a number of repetitions).

• Constituent unit (A)

The constituent unit (A) in the second aspect is the same as that in the first aspect described above.

• Constituent unit (B)

The copolymerized polycarbonate resin has a constituent unit (B) derived from a polyoxyalkylene glycol. The polyoxyalkylene glycol includes the repeating unit represented by Formula (7), the carbon number of the alkylene group R in the repeating unit represented by Formula (7) is 7 or more, and the number average molecular weight of the polyoxyalkylene glycol is 800 or more and 2,000 or less. Thus, the copolymerized polycarbonate resin exhibits a melting peak temperature (that is, a melting peak temperature exceeding 35°C) higher than room temperature (specifically, 20 to 35°C), and exhibits excellent heat storage property in a high temperature range (specifically, higher than 35°C and 80°C or lower). Therefore, the copolymerized polycarbonate resin can be preferably used as a heat storage material required to have heat storage performance in a high temperature range (specifically, higher than 35°C and 80°C or lower). From the same viewpoint, it is preferable that the carbon number of the alkylene group R in the repeating unit represented by the formula (7) be 7 or more and 15 or less, and that the number average molecular weight be 800 or more and 15,000 or less. It is more preferable that the carbon number of the alkylene group R in the repeating unit represented by the formula (7) be 8 or more and 12 or less, and that the number average molecular weight be 800 or more and 10,000 or less. It is particularly preferable that the carbon number of the alkylene group R in the repeating unit represented by the formula (7) be 9 or more and 10 or less, and that the number average molecular weight be 900 or more and 8,000 or less.

The weight ratio of the constituent unit (B) to the total weight of the copolymerized polycarbonate resin is not

particularly limited, but is preferably more than 20 wt% and 99 wt% or less. When the weight ratio of the constituent unit (B) exceeds 20 wt%, crystallinity increases and the enthalpy of fusion further increases, so that heat storage property is improved. When the weight ratio of the constituent unit (B) is 99 wt% or less, heat resisting property and shape retention property are improved. From the viewpoint that heat storage property is further improved, the weight ratio of the constituent unit (B) is more preferably 25 wt% or more, further preferably 30 wt% or more, even more preferably 50 wt% or more, and particularly preferably 65 wt% or more. On the other hand, from the viewpoint that heat resisting property and shape retention property are further improved, the weight ratio of the constituent unit (B) is more preferably 95 wt% or less, further preferably 90 wt% or less, and particularly preferably 85 wt% or less.

Other preferred forms and the like of the constituent unit (B) in the second aspect are the same as those in the first aspect described above.

[Physical Properties of Copolymerized Polycarbonate Resin]

From the viewpoint that the heat storage performance of the heat storage material containing the copolymerized polycarbonate resin is further improved, Tm (L) of the copolymerized polycarbonate resin is preferably 20°C or higher and 100°C or lower. The lower limit of Tm (L) of the copolymerized polycarbonate resin is more preferably 30°C and further preferably 40°C, from the viewpoint that the heat storage performance in the vicinity of a high temperature range (specifically, higher than 35°C and 80°C or lower) is excellent, thereby making the copolymerized polycarbonate resin more practical as a heat storage material. From the same viewpoint, an upper limit is more preferably 80°C and further preferably 70°C.

Other physical properties of the copolymerized polycarbonate resin of the second aspect are the same as those of the first aspect described above.

[III] Third Aspect

Then, the copolymerized polycarbonate resin according to the third aspect of the present disclosure will be described. The third aspect of the present disclosure is, as described above, a copolymerized polycarbonate resin having, at least,

a constituent unit (A) derived from a dihydroxy compound, and
a constituent unit (B) derived from a polyoxyalkylene glycol,
wherein a carbon number of an alkylene group R in a repeating unit which constitutes the polyoxyalkylene glycol and is represented by the following formula (7) is 2 or more, and
wherein a weight ratio of the constituent unit (B) to a total weight of the copolymerized polycarbonate resin is more than 50 wt% and 99 wt% or less.

• Constituent unit (A)

The copolymerized polycarbonate resin has a constituent unit (A) derived from a dihydroxy compound. The dihydroxy compound forming the constituent unit (A) is not particularly limited. Examples of the dihydroxy compound can include aliphatic dihydroxy compounds, alicyclic dihydroxy compounds, and heteroalicyclic dihydroxy compounds. The copolymerized polycarbonate resin preferably has the constituent unit (A) derived from one or more dihydroxy compounds selected from the group consisting of an aliphatic dihydroxy compound, an alicyclic dihydroxy compound, and a heteroalicyclic dihydroxy compound. In this case, shape retention property and molding processability are further improved.

• Constituent unit (B)

The copolymerized polycarbonate resin has a constituent unit (B) derived from a polyoxyalkylene glycol. The weight ratio of the constituent unit (B) to the total weight of the copolymerized polycarbonate resin is more than 50 wt% and 99 wt% or less as described above. From the viewpoint that heat storage property is further improved since crystallinity and enthalpy of fusion increase, the weight ratio of the constituent unit (B) is preferably 55 wt% or more, more preferably 60 wt% or more, and particularly preferably 70 wt% or more. On the other hand, from the viewpoint that heat resisting property and shape retention property are further improved, the weight ratio of the constituent unit (B) is preferably 95 wt% or less, more preferably 90 wt% or less, and particularly preferably 85 wt% or less.

Other forms of the constituent units in the third aspect are the same as those in the first aspect described above.

[IV]Fourth Aspect

Then, the copolymerized polycarbonate resin according to the fourth aspect of the present disclosure will be described. The fourth aspect of the present disclosure is, as described above, a copolymerized polycarbonate resin having, at least,

a constituent unit (A) derived from an alicyclic dihydroxy compound and/or a heteroalicyclic dihydroxy compound, and
a constituent unit (B) derived from a polytetramethylene glycol having a number average molecular weight of 1,500 or more and 20,000 or less,
wherein an enthalpy of fusion ΔH(L) observed in a temperature range of -30°C or higher and 80°C or lower by differential scanning calorimetry is 20 J/g or more.

[Copolymerized Polycarbonate Resin]

The copolymerized polycarbonate resin is a copolymerized polycarbonate resin having, at least, the constituent unit (A) derived from an alicyclic dihydroxy compound and/or a heteroalicyclic dihydroxy compound, and the constituent unit (B) derived from a polytetramethylene glycol (also referred to as polytetramethylene ether glycol; referred to as "PTMG" in some cases) having a number average molecular weight (hereinafter, referred to as "Mn" in some cases) of 1,500 or more and 20,000 or less, wherein an enthalpy of fusion observed in the temperature range of -30° C or higher and 80° C or lower by differential scanning calorimetry is 20 J/g or more.

In the copolymerized polycarbonate resin, the enthalpy of fusion (hereinafter, referred to as "ΔH(L)" in some cases) observed in a temperature range of -30°C or higher and 80°C or lower by differential scanning calorimetry is 20 J/g or more. ΔH(L) is preferably 30 J/g or more, more preferably 40 J/g or more, further preferably 50 J/g or more, and particularly preferably 55 J/g or more. From the viewpoint of difficulty in realization, ΔH(L) is usually 500 J/g or less, more preferably 200 J/g or less, and particularly preferably 150 J/g or less. When ΔH(L) is within the above range, the copolymerized polycarbonate resin is more excellent in heat storage property.

Herein, the enthalpy of fusion is heat of fusion obtained by analyzing a portion within a specific temperature range of a melting curve as measured by differential scanning calorimetry according to the method of JIS K7122-1987. When a plurality of melting peaks are present within a specific temperature range, a sum of peak areas within the temperature range is defined as enthalpy of fusion.

Herein, a temperature range of 160°C or higher and 280°C or lower is selected in differential scanning calorimetry, and the enthalpy of fusion may be measured in addition to the enthalpy of fusion ΔH(L) observed in the temperature range of -30°C or higher and 80°C or lower. Herein, the enthalpy of fusion observed in the temperature range of 160°C or higher and 280°C or lower by differential scanning calorimetry is referred to as ΔH(H) in some cases.

The copolymerized polycarbonate resin may have ΔH(H) in addition to ΔH(L). It is presumed that ΔH(L) is an enthalpy of fusion derived from a constituent unit mainly derived from PTMG and a repeating constituent unit composed of a carbonyl group, and that ΔH(H) is an enthalpy of fusion derived from a constituent unit mainly derived from a dihydroxy compound other than PTMG (specifically, an alicyclic dihydroxy compound, a heteroalicyclic dihydroxy compound, or the like) and a repeating constituent unit composed of a carbonyl group. When the copolymerized polycarbonate resin has ΔH(H) described above, ΔH(H) is preferably 1 J/g or more, more preferably 5 J/g or more, and further preferably 15 J/g from the viewpoint of moldability and shape retention property. ΔH(H) is usually 100 J/g or less, more preferably 70 J/g or less, and particularly preferably 50 J/g or less.

The enthalpies of fusion (ΔH(L) and ΔH(H) described above) are specifically measured as follows. When the melting peak temperature (Tm) is 200°C or lower, first, an aluminum sample pan enclosing about 10 mg of a measurement sample (specifically, a copolymerized polycarbonate resin) is cooled to -120°C in a nitrogen atmosphere using a differential scanning calorimeter "EXSTAR 6220" manufactured by SII NanoTechnology Inc., then heated from about - 120°C to 200°C at a temperature rising rate of 20°C/min. Subsequently, the sample pan is cooled at a temperature lowering rate of 20°C/min, and the temperature is lowered to -120°C. Thereafter, the sample pan is heated again at a temperature rising rate of 20°C/min, and the temperature is raised to 200°C. A differential scanning calorimetry curve obtained by the second temperature increase is taken as a measurement curve. ΔH(L) is obtained by analyzing a portion in a temperature range of -30°C or higher and 80°C or lower according to the method of JIS K7122:1987.

When the melting peak temperature (Tm) is higher than 200°C, the measurement is performed by changing an upper limit temperature of the measurement to, for example, 300°C, and using the same other conditions (for example, start temperature, temperature rising rate, temperature lowering rate, and retention time). For example, when the melting peak temperature (Tm) is 280°C or lower, first, an aluminum sample pan enclosing about 10 mg of a measurement sample (specifically, a copolymerized polycarbonate resin) is cooled to -120°C in a nitrogen atmosphere using a differential scanning calorimeter "EXSTAR 6220" manufactured by SII NanoTechnology Inc., then heated from about -120°C to 280°C at a temperature rising rate of 20°C/min. Subsequently, the sample pan is cooled at a temperature lowering

rate of 20°C/min, and the temperature is lowered to -120°C. Thereafter, the sample pan is heated again at a temperature rising rate of 20°C/min, and the temperature is raised to 280°C. A differential scanning calorimetry curve obtained by the second temperature increase is taken as a measurement curve. ΔH(L) is obtained by analyzing a portion in a temperature range of -30°C or higher and 80°C or lower, and ΔH(H) is obtained by analyzing a portion in a temperature range of 160°C or higher and 280°C or lower, in accordance with the method of JIS K7122:1987.

• Constituent unit (A)

The copolymerized polycarbonate resin has the constituent unit (A) derived from an alicyclic dihydroxy compound and/or a heteroalicyclic dihydroxy compound. That is, the copolymerized polycarbonate resin has at least either one of a constituent unit derived from an alicyclic dihydroxy compound and a constituent unit derived from a heteroalicyclic dihydroxy compound. The copolymerized polycarbonate resin may also have both a constituent unit derived from an alicyclic dihydroxy compound and a constituent unit derived from a heteroalicyclic dihydroxy compound. In this case, these constituent units are collectively referred to as constituent unit (A).

The dihydroxy compound forming the constituent unit (A) is an alicyclic dihydroxy compound and/or a heteroalicyclic dihydroxy compound.

Herein, the alicyclic dihydroxy compound is defined as carbocyclic dihydroxy compound having no aromaticity. Also, the heteroalicyclic dihydroxy compound herein is defined as cyclic dihydroxy compound containing one or more heteroatoms as atoms constituting the ring. The heteroalicyclic dihydroxy compound herein is a concept that does not include the alicyclic dihydroxy compound described above.

Because the copolymerized polycarbonate resin has a constituent unit derived from an alicyclic dihydroxy compound and/or a heteroalicyclic dihydroxy compound, a rigid ring structure is introduced into the molecular chain, so that the glass transition temperature of the resin is improved, and heat resisting property, shape retention property, and moldability are excellent.

The alicyclic dihydroxy compound is not particularly limited, and examples thereof include dihydroxy compounds containing one or more four-membered ring structures in a part of the structure, and dihydroxy compounds containing one or more five-membered ring structures or one or more six-membered ring structures in a part of the structure. The six-membered ring structure may be fixed in a chair shape or a boat shape by a covalent bond. The alicyclic dihydroxy compound has at least one five-membered ring structure or six-membered ring structure in the structure, and thus there is a possibility that the heat resisting property of the resulting polycarbonate resin may be further enhanced. Therefore, the alicyclic dihydroxy compound is preferably a compound having one or more five-membered ring structures or one or more six-membered ring structures in a part of the structure. The carbon number of the alicyclic dihydroxy compound is usually 70 or less, preferably 50 or less, and more preferably 30 or less. When the carbon number is excessively large, heat resisting property is increased, but synthesis tends to be difficult, purification tends to be difficult, and cost tends to be high. As the carbon number is smaller, the alicyclic dihydroxy compound tends to be purified and obtained more easily.

Specific examples of the alicyclic dihydroxy compound having one or more five-membered ring structures or one or more six-membered ring structures as a part of the structure include alicyclic dihydroxy compounds represented by the following general formula (I) or (II).

$$HOCH_2\text{-}R^5\text{-}CH_2OH \qquad (I)$$

$$HO\text{-}R^6\text{-}OH \qquad (II)$$

(It is noted that in Formulas (I) and (II), $R^5$ and $R^6$ each independently represent a substituted or unsubstituted divalent group containing a cycloalkyl structure having a carbon number of 4 to 30).

Cyclohexane dimethanol (hereinafter, referred to as "CHDM" in some cases), which is an alicyclic dihydroxy compound represented by the above general formula (I), includes various isomers of the general formula (I) in which $R^5$ is represented by the following general formula (Ia), wherein $R^7$ represents a hydrogen atom or a substituted or unsubstituted alkyl group having a carbon number of 1 to 12. Specifically, such compounds include 1,2-cyclohexanedimethanol, 1,3-cyclohexanedimethanol, and 1,4-cyclohexanedimethanol.

[Chemical Formula 26]

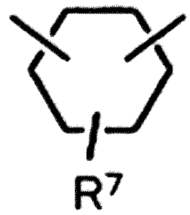

(I a)

Tricyclodecane dimethanol (hereinafter, referred to as "TCDDM" in some cases) and pentacyclopentadecane dimethanol, which are alicyclic dihydroxy compounds represented by the general formula (I), include various isomers of the general formula (I) in which $R^5$ is represented by the following general formula (Ib), wherein n represents 0 or 1.

[Chemical Formula 27]

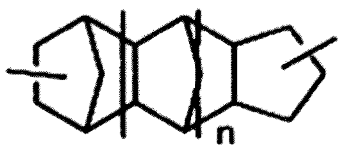

(I b)

Decalin dimethanol or tricyclotetradecane dimethanol, which is an alicyclic dihydroxy compound represented by the general formula (I), include various isomers of the general formula (I) in which $R^5$ is represented by the following general formula (Ic), wherein m represents 0 or 1. Specifically, such compounds include 2,6-decalin dimethanol, 1,5-decalin dimethanol, and 2,3-decalin dimethanol.

[Chemical Formula 28]

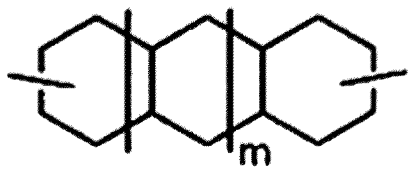

(I c)

Norbornane dimethanol, which is an alicyclic dihydroxy compound represented by the general formula (I), includes various isomers of the general formula (I) in which $R^5$ is represented by the following general formula (Id), wherein p represents 1 or 2. Specifically, such compounds include bicyclo[2.2.1]heptane-2,3-dimethanol (2,3-norbornane dimethanol) and bicyclo[2.2.1]heptane 2,5-dimethanol when p = 1.

[Chemical Formula 29]

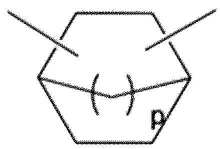

(I d)

When p = 2, bicyclooctane dimethanol, which is an alicyclic dihydroxy compound, includes various isomers of the general formula (I) in which $R^5$ is represented by the following general formula (Id). Specifically, such compounds include bicyclo[2,2,2]octane-1,4-dimethanol (hereinafter, referred to as "BODM" in some cases) represented by the following formula (Id-1).

[Chemical Formula 30]

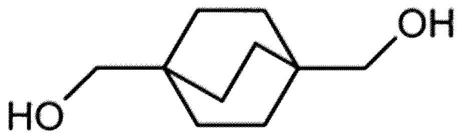

( I d-1 )

Adamantane dimethanol (hereinafter, referred to as "ADDM" in some cases), which is an alicyclic dihydroxy compound represented by the general formula (I), includes various isomers of the general formula (I) in which $R^5$ is represented by the following general formula (Ie). Specifically, such compounds include tricyclo[3,3,1,$1^{3,7}$]-1, 3-dimethanol and tricyclo[3,3,1,$1^{3,7}$]-2,2-dimethanol.

[Chemical Formula 31]

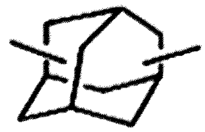

( I e )

Cyclohexanediol, which is an alicyclic dihydroxy compound represented by the general formula (II), includes various isomers of the general formula (II) in which $R^6$ is represented by the following general formula (IIa), wherein $R^7$ represents a hydrogen atom or a substituted or unsubstituted alkyl group having a carbon number of 1 to 12. Specifically, such compounds include 1,2-cyclohexanediol, 1,3-cyclohexanediol, 1,4-cyclohexanediol, and 2-methyl-1,4-cyclohexanediol.

[Chemical Formula 32]

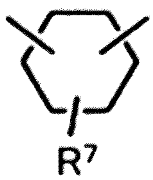

( I I a )

Tricyclodecanediol and pentacyclopentadecanediol, which are alicyclic dihydroxy compounds represented by the general formula (II), include various isomers of the general formula (II) in which $R^6$ is represented by the following general formula (IIb), wherein n represents 0 or 1.

[Chemical Formula 33]

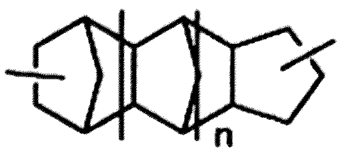

( I I b )

Decalinediol or tricyclotetradecanediol, which are alicyclic dihydroxy compounds represented by the general formula (II), include various isomers of the general formula (II) in which $R^6$ is represented by the following general formula (IIc), wherein m represents 0 or 1. Specifically, 2,6-decalinediol, 1,5-decalinediol, 2,3-decalinediol and the like are used as such compounds.

[Chemical Formula 34]

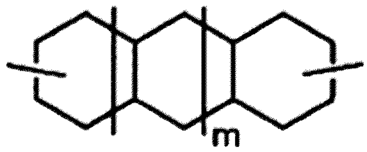

(I I c)

Norbomanediol, which is an alicyclic dihydroxy compound represented by the general formula (II), includes various isomers of the general formula (II) in which $R^6$ is represented by the following general formula (IId), wherein p represents 1 or 2. Specifically, when P = 1, bicyclo[2.2.1]heptane-2,3-diol (2,3-norbomanediol), bicyclo[2.2.1]heptane-2,5-diol, or the like is used as such a compound.

[Chemical Formula 35]

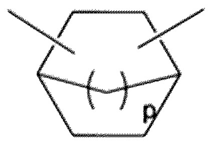

(I I d)

In Formula (IId), when p = 2, bicyclooctanediol, which is an alicyclic dihydroxy compound represented by the general formula (II), includes various isomers of the general formula (II) in which $R^6$ is represented by the following general formula (IId). Specifically, such compounds include bicyclo[2,2,2]octane-1, 4-diol represented by the following formula (Hd-1).

[Chemical Formula 36]

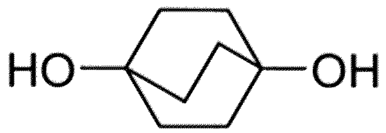

(I I d-1)

Adamantanediol, which is an alicyclic dihydroxy compound represented by the general formula (II), include various isomers of the general formula (II) in which $R^6$ is represented by the following general formula (IIe). Specifically, such compounds include tricyclo[3,3,1,$1^{3,7}$]-1,3-diol and tricyclo[3,3,1,$1^{3,7}$]-2,2-diol.

[Chemical Formula 37]

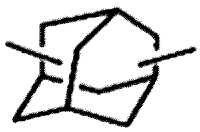

(I I e)

The exemplary compounds described above are examples of the alicyclic dihydroxy compound that can be used, and the alicyclic dihydroxy compound is not limited thereto at all. These alicyclic dihydroxy compounds may be used alone, or two or more kinds thereof may be used in combination. When two or more alicyclic dihydroxy compounds are used in combination, the copolymerized polycarbonate resin has a constituent unit derived from each alicyclic dihydroxy compound. In this case, constituent units derived from each alicyclic dihydroxy compound are collectively referred to as constituent unit (A).

Among the alicyclic dihydroxy compounds containing one or more five-membered ring structures or one or more six-membered ring structures in a part of the structure described above, compounds containing two or more five-membered ring structures and six-membered ring structures in total in a part of the structure are preferred, from the viewpoints that the molecular skeleton is more rigid and that the heat resisting property, shape retention property, and moldability of the copolymerized polycarbonate resin are further improved. In this case, a plurality of rings may be fused rings or spiro rings. Preferred specific examples of such compounds include ADDM represented by the following formula (3), BODM represented by the following formula (4), and TCDDM represented by the following formula (5).

[Chemical Formula 38]

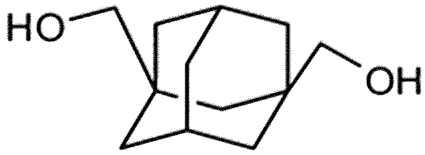

(3)

[Chemical Formula 39]

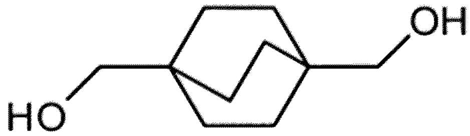

(4)

[Chemical Formula 40]

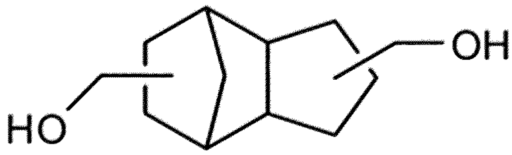

(5)

Among the alicyclic dihydroxy compounds containing one or more five-membered ring structures or one or more six-membered ring structures in a part of the structure described above, one or more compounds selected from the group consisting of CHDM represented by the following formula (6), TCDDM, BODM, and ADDM are preferred, from the viewpoint of availability.

[Chemical Formula 41]

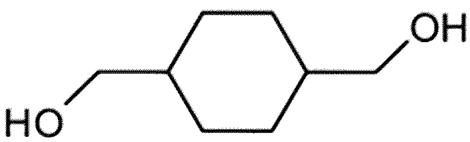

(6)

Among the alicyclic dihydroxy compounds containing one or more five-membered ring structures or one or more six-membered ring structures in a part of the structure described above, one or more compounds selected from the group consisting of TCDDM, BODM, and ADDM are preferred, from the viewpoint that heat resisting property can be imparted to polycarbonate, and BODM and/or ADDM are/is more preferred from the viewpoint that crystallinity can be imparted in addition to heat resisting property.

Examples of the hetero atom in the heteroalicyclic dihydroxy compound include an oxygen atom, a sulfur atom, a nitrogen atom, and a halogen atom. The hetero atom is preferably an oxygen atom and/or a sulfur atom from the viewpoint of low water absorption, coloration prevention, and light resistance. The hetero atom is more preferably an oxygen atom from the viewpoint of coloration prevention and light resistance.

The heteroalicyclic dihydroxy compound is not particularly limited, and examples thereof include a dihydroxy compound having a cyclic ether structure and a dihydroxy compound having a cyclic thioether structure. The heteroalicyclic dihydroxy compound is preferably a dihydroxy compound having a cyclic ether structure from the viewpoint of preventing coloration and generation of an acidic substance.

Specific examples of the dihydroxy compound having a cyclic ether structure include a dihydroxy compound represented by the following formula (1) and a dihydroxy compound represented by the following formula (2).

[Chemical Formula 42]

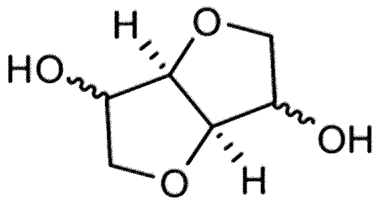

(1)

[Chemical Formula 43]

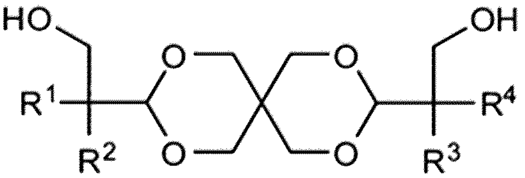

(2)

In the above formula (2), $R^1$ to $R^4$ each independently represent an alkyl group having a carbon number of 1 to 3.

The dihydroxy compound represented by Formula (1) includes isosorbide, isomannide, and isoidet having a stereoisomeric relationship. These compounds may be used alone, or two or more kinds thereof may be used in combination. Among these dihydroxy compounds, isosorbide, which is obtained by dehydration condensation of sorbitol produced from various starches abundantly present as plant-derived resources and easily available, is most preferable from the viewpoint of availability and easy production, light resistance, optical properties, moldability, heat resisting property, and carbon neutrality.

Examples of the dihydroxy compound represented by the above formula (2) include 3,9-bis(1,1-dimethyl-2-hydroxyethyl)-2,4,8,10-tetraoxaspiro(5.5)undecane (common name: spiroglycol), 3,9-bis(1,1-diethyl-2-hydroxyethyl)-2,4,8,10-tetraoxaspiro(5.5)undecane, 3,9-bis(1,1-dipropyl-2-hydroxyethyl)-2,4,8,10-tetraoxaspiro(5.5)undecane, and dioxane glycol. These compounds may be used alone, or two or more kinds thereof may be used in combination. Spiroglycol is preferred as the dihydroxy compound represented by Formula (2) from the viewpoint of availability and an increase in glass transition temperature of the resin.

Among the dihydroxy compounds having a cyclic ether structure, compounds containing two or more five-membered ring structures and six-membered ring structures in total in a part of the structure are preferred, from the viewpoints that the molecular skeleton is more rigid and that the heat resisting property and moldability of the copolymerized polycarbonate resin are further improved. In this case, a plurality of rings may be fused rings or spiro rings. Preferred examples of such a compound include the dihydroxy compound represented by the above formula (1) and the dihydroxy compound represented by the above formula (2).

The dihydroxy compound having a cyclic ether structure is more preferably a dihydroxy compound represented by the above formula (1) and/or a dihydroxy compound represented by the above formula (2), from the viewpoints that the heat resisting property and moldability of the copolymerized polycarbonate resin are improved and that raw materials are available.

From the viewpoint that the heat resisting property, shape retention property, and moldability of the copolymerized polycarbonate resin are improved, the constituent unit (A) is preferably the constituent unit derived from the alicyclic dihydroxy compound containing one or more five-membered ring structures or one or more six-membered ring structures in a part of the structure and/or the constituent unit derived from the dihydroxy compound having the cyclic ether structure, and more preferably the constituent unit derived from the alicyclic dihydroxy compound containing two or more five-membered ring structures and six-membered ring structures in total in a part of the structure and/or a constituent unit derived from a dihydroxy compound having a cyclic ether structure containing two or more five-membered ring structures and six-membered ring structures in total in a part of the structure. From the same viewpoint, the constituent unit (A) is preferably the constituent unit derived from one or more dihydroxy compounds selected from the group

consisting of CHDM, TCDDM, BODM, ADDM, the dihydroxy compound represented by the above formula (1), and the dihydroxy compound represented by the above formula (2). The constituent unit (A) is more preferably the constituent unit derived from one or more dihydroxy compounds selected from the group consisting of TCDDM, BODM, ADDM, the dihydroxy compound represented by the above formula (1), and the dihydroxy compound represented by the above formula (2).

In a case where the constituent unit (A) includes the constituent unit derived from an alicyclic dihydroxy compound containing two or more five-membered ring structures and six-membered ring structures in total in a part of the structure and/or the dihydroxy compound having a cyclic ether structure containing two or more five-membered ring structures and six-membered ring structures in total in a part of the structure, the constituent unit (A) can further include a constituent unit derived from an alicyclic dihydroxy compound and/or a heteroalicyclic dihydroxy compound different from the alicyclic dihydroxy compound containing two or more five-membered ring structures and six-membered ring structures in total in a part of the structure and the dihydroxy compound having a cyclic ether structure containing two or more five-membered ring structures and six-membered ring structures in total in a part of the structure. When the constituent unit (A) includes a constituent unit derived from an alicyclic dihydroxy compound containing two or more five-membered ring structures and six-membered ring structures in total in a part of the structure and/or a dihydroxy compound having a cyclic ether structure containing two or more five-membered ring structures and six-membered ring structures in total in a part of the structure, it is preferable that the constituent unit (A) further has a constituent unit derived from an alicyclic dihydroxy compound containing only one five-membered ring structure or six-membered ring structure in the structure. In this case, the heat storage property of the copolymerized polycarbonate resin may be able to be further improved. Preferred specific examples of the constituent unit derived from an alicyclic dihydroxy compound containing only one five-membered ring structure or only one six-membered ring structure in the structure include the constituent unit derived from CHDM.

From the viewpoints that the heat storage property, heat resisting property, shape retention property, and moldability of the copolymerized polycarbonate resin are excellent in a more balanced manner, and that raw materials are easily available, the constituent unit (A) is particularly preferably composed only of the constituent unit derived from the dihydroxy compound represented by the above formula (1), or composed of the constituent unit derived from the dihydroxy compound represented by the above formula (1) and the constituent unit derived from TCDDM and/or CHDM. From the viewpoint that heat storage property is further improved, the constituent unit (A) is most preferably composed only of the constituent unit derived from the dihydroxy compound represented by the above formula (1), or composed of the constituent unit derived from the dihydroxy compound represented by the above formula (1) and the constituent unit derived from CHDM.

From the viewpoint that the heat storage property and heat resisting property of the copolymerized polycarbonate resin are more excellent, the constituent unit (A) is particularly preferably composed only of the constituent unit derived from ADDM or composed of the constituent unit derived from ADDM and the constituent unit derived from TCDDM and/or CHDM. From the viewpoint that heat storage property is further improved, the constituent unit (A) is most preferably composed only of the constituent unit derived from ADDM, or composed of the constituent unit derived from ADDM and the constituent unit derived from CHDM.

From the viewpoint that the heat storage property and heat resisting property of the copolymerized polycarbonate resin are more excellent, the constituent unit (A) is particularly preferably composed only of the constituent unit derived from BODM or composed of the constituent unit derived from BODM and the constituent unit derived from TCDDM and/or CHDM. From the viewpoint that heat storage property is further improved, the constituent unit (A) is most preferably composed only of the constituent unit derived from BODM, or composed of the constituent unit derived from BODM and the constituent unit derived from CHDM.

From the viewpoints that the heat storage property, heat resisting property, and shape retention property of the copolymerized polycarbonate resin are more excellent, and that raw materials are easily available, the constituent unit (A) is particularly preferably composed only of the constituent unit derived from the dihydroxy compound represented by the above formula (2), or composed of the constituent unit derived from the dihydroxy compound represented by the above formula (2) and the constituent unit derived from TCDDM and/or CHDM. From the viewpoint that heat storage property is further improved, the constituent unit (A) is most preferably composed only of the constituent unit derived from the dihydroxy compound represented by the above formula (2), or composed of the constituent unit derived from the dihydroxy compound represented by the above formula (2) and the constituent unit derived from CHDM.

A weight ratio of the constituent unit (A) to a total weight of the polycarbonate resin is not particularly limited, but is preferably 5 wt% or more and 75 wt% or less. A lower limit of the weight ratio of the constituent unit (A) is more preferably 15 wt%, further preferably 20 wt%, and particularly preferably 30 wt%. On the other hand, the upper limit is more preferably 70 wt%, further preferably 60 wt%, and particularly preferably 45 wt%. When the weight ratio of the constituent unit (A) is within the above range, heat storage property, heat resisting property, and molding retention property is excellent in more balanced manner. Herein, the weight ratio of the constituent unit derived from the dihydroxy compound (for example, the constituent unit (A), a constituent unit (B) which will be described later, and the like) in the

copolymerized polycarbonate resin is for a constituent unit containing one carbonyl group as a linking group, that is, for a repeating constituent unit.

•Constituent unit (B)

The copolymerized polycarbonate resin has the constituent unit (B) derived from a polytetramethylene glycol (PTMG) having a number average molecular weight of 1,500 or more and 20,000 or less.

As the dihydroxy compound forming the constituent unit (B), PTMG having a number average molecular weight of 1,500 or more and 20,000 or less is used.

The copolymerized polycarbonate resin has the constituent unit derived from PTMG having a number average molecular weight ranging from 1,500 or more to 20,000, and thus the copolymerized polycarbonate resin has a large enthalpy of fusion and is excellent in heat storage property. In addition, the melting peak temperature can be set within a practical temperature range.

The number average molecular weight of PTMG is more preferably 2,000 or more, further preferably 2,500 or more, and particularly preferably 3,500 or more. The number average molecular weight of PTMG is more preferably 20,000 or less, further preferably 15,000 or less, particularly preferably 10,000 or less, and most preferably 7,000 or less. When the number average molecular weight of PTMG is within the above range, crystallinity and enthalpy of fusion further increase, so that heat storage property is more excellent.

The number average molecular weight of PTMG can be calculated by, for example, a method of measuring the number average molecular weight by gel permeation chromatography (GPC), a method of determining the number average molecular weight from a hydroxyl value of a terminal group, or the like. The number average molecular weight of PTMG constituting the constituent unit (B) in the copolymerized polycarbonate resin can be calculated, for example, from the area ratio between a main chain signal of the constituent unit (B) and a terminal signal of the constituent unit (B) in a 1H or 13 C-NMR spectrum.

PTMG is commercially available for use. Alternatively, for example, PTMG can be produced by the method described in Example 1 of JP 2004-161893 A.

The weight ratio of the constituent unit (B) to the total weight of the copolymerized polycarbonate resin is not particularly limited, but is preferably 25 wt% or more and 99 wt% or less. A lower limit of the weight ratio of the constituent unit (B) is more preferably 30 wt%, further preferably 50 wt%, and particularly preferably 65 wt%. On the other hand, the upper limit is more preferably 95 wt%, further preferably 90 wt%, particularly preferably 85 wt%, and most preferably 80 wt%. When the weight ratio of the constituent unit (B) is the lower limit or more, crystallinity and enthalpy of fusion increase, so that heat storage property is further improved. When the weight ratio is the upper limit or less, heat resisting property and shape retention property is excellent in more balanced manner.

The copolymerized polycarbonate resin may contain a constituent unit other than the constituent unit (A) and the constituent unit (B) described above. Hereinafter, the constituent unit other than the constituent unit (A) and the constituent unit (B) is referred to as "constituent unit (C)" in some cases. The dihydroxy compound forming the constituent unit (C) does not contain the dihydroxy compound forming the constituent unit (A) or the dihydroxy compound forming the constituent unit (B). Examples of the dihydroxy compound constituting the constituent unit (C) include acyclic aliphatic dihydroxy compounds, acyclic ether-containing dihydroxy compounds, acetal-containing dihydroxy compounds other than the dihydroxy compound represented by the above (2). As the compound forming the constituent unit (C), a hydroxy compound containing three or more hydroxy groups in the molecule may be used. Note that a polycarbonate resin partially incorporating a constituent unit derived from a diester compound is referred to as polyester carbonate resin. Herein, the polycarbonate resin includes a polyester carbonate resin.

Examples of the acyclic aliphatic dihydroxy compound include the following dihydroxy compounds: linear aliphatic dihydroxy compounds such as ethylene glycol, 1,3-propanediol, 1,2-propanediol, 1,4-butanediol, 1,5-heptanediol, 1,6-hexanediol, 1,7-peptanediol, 1,8-octanediol, 1,9-nonanediol, 1,10-decanediol, and 1,12-dodecanediol; and aliphatic dihydroxy compounds having a branched chain, such as 1,3-butanediol, 1,2-butanediol, neopentyl glycol, and hexylene glycol.

Examples of the acyclic ether-containing dihydroxy compound include oxyalkylene glycols. As the oxyalkylene glycol, diethylene glycol, triethylene glycol, tetraethylene glycol, polyethylene glycol, polypropylene glycol or the like can be used.

Examples of the diester compound include the following dicarboxylic acids: aromatic dicarboxylic acids such as terephthalic acid, phthalic acid, isophthalic acid, 4,4'-diphenyldicarboxylic acid, 4,4'-diphenyl ether dicarboxylic acid, 4,4'-benzophenone dicarboxylic acid, 4,4'-diphenoxyethane dicarboxylic acid, 4,4'-diphenylsulfonedicarboxylic acid, and 2,6-naphthalenedicarboxylic acid; alicyclic dicarboxylic acids such as 1,2-cyclohexanedicarboxylic acid, 1,3-cyclohexanedicarboxylic acid, and 1,4-cyclohexanedicarboxylic acid; and aliphatic dicarboxylic acids such as malonic acid, succinic acid, glutaric acid, adipic acid, pimelic acid, suberic acid, azelaic acid, and sebacic acid. These dicarboxylic acid components can be used as raw materials for polyester carbonates resin as dicarboxylic acids themselves, but dicarboxylic acid derivatives such as dicarboxylic acid esters including methyl ester bodies and phenyl ester bodies, and dicarboxylic acid halides can also be used as raw materials depending on the production method.

Examples of the hydroxy compound containing three or more hydroxy groups in the molecule include the following hydroxy compounds: polyhydric alcohols having three hydroxyl groups, such as glycerin, trimethylolpropane, and triethanolamine; polyhydric alcohols having four hydroxyl groups, such as pentaerythritol, diglycerin, xylose, and sorbitan; polyhydric alcohols having five hydroxyl groups, such as xylitol, triglycerin, glucose, and fructose; polyhydric alcohols having six hydroxyl groups, such as sorbitol, malbitol, tetraglycerin, and inositol; polyglycerin having more than six hydroxyl groups, disaccharides such as sucrose, trehalose, and lactose; and trisaccharides such as maltotriose. These compounds may be used alone, or two or more kinds thereof may be used in combination. Among them, trimethylolpropane and glycerin are suitably used.

When the constituent unit (C) is introduced into the polycarbonate resin, a content of the constituent unit (C) is set to a relatively small amount, and the constituent unit (C) is preferably used, for example, for the purpose of improving heat storage property. Among the constituent units (C) described above, a linear aliphatic dihydroxy compound having a carbon number of 6 or more and 30 or less is preferred, from the viewpoint of further improving the enthalpy of fusion. There is a possibility that the constituent unit formed by such a linear aliphatic dihydroxy compound can be crystallized and thus the enthalpy of fusion of the resin can be further improved. From the same viewpoint, a linear aliphatic dihydroxy compound having a carbon number of 8 or more and 20 or less is more preferred.

When the polycarbonate resin has the constituent unit (C), the weight ratio of the constituent unit (C) to the total weight of the polycarbonate resin is preferably 1 wt% or more, and more preferably 3 wt% or more. The weight ratio is preferably 10 wt% or less, and more preferably 7 wt% or less. When the weight ratio is within the range described above, heat storage property and shape retention property is excellent in more balanced manner.

When the polycarbonate resin contains, as the constituent unit (C), a constituent unit derived from a hydroxy compound having 3 or more hydroxy groups in the molecule, the weight ratio of the constituent unit derived from the hydroxy compound having 3 or more hydroxy groups in the molecule to the total weight of the polycarbonate resin is preferably 0.1 wt% or more, and more preferably 0.3 wt% or more. The weight ratio is preferably 3 wt% or less, and more preferably 1 wt% or less. When the weight ratio is within the range described above, heat storage property and shape retention property is excellent in more balanced manner.

[Method for Producing Copolymerized Polycarbonate Resin]

A method for producing the copolymerized polycarbonate resin of the fourth aspect will be described, and the same applies to the first to third aspects.

The copolymerized polycarbonate resin can be synthesized by a step of performing polycondensation by a transesterification reaction using, at least, a dihydroxy compound forming the constituent unit (A), a dihydroxy compound forming the constituent unit (B), and a carbonic acid diester as raw materials. More specifically, it can be obtained by removing a monohydroxy compound and the like by-produced in the transesterification reaction to the outside of the system together with the polycondensation.

In the step, the compounds described above can be used as the dihydroxy compound forming the constituent unit (A) and the dihydroxy compound forming the constituent unit (B).

The transesterification reaction proceeds in the presence of a transesterification catalyst (hereinafter, the transesterification catalyst is referred to as "polymerization catalyst"). The type of polymerization catalyst can have a considerable influence on the reaction rate of the transesterification reaction and the quality of the resulting polycarbonate resin.

The polymerization catalyst is not particularly limited as long as it can satisfy the transparency, color tone, heat resisting property, weather resistance, and mechanical properties of the resulting polycarbonate resin. As the polymerization catalyst, for example, a metal compound of Group I or Group II (hereinafter, simply referred to as "Group 1" and "Group 2") in the long-period periodic table, and a basic compound such as a basic boron compound, a basic phosphorus compound, a basic ammonium compound, or an amine-based compound can be used. Among them, a Group 1 metal compound and/or a Group 2 metal compound are/is preferred.

Examples of the Group 1 metal compound include the following compounds: sodium hydroxide, potassium hydroxide, lithium hydroxide, cesium hydroxide, sodium bicarbonate, potassium bicarbonate, lithium bicarbonate, cesium bicarbonate, sodium carbonate, potassium carbonate, lithium carbonate, cesium carbonate, sodium acetate, potassium acetate, lithium acetate, cesium acetate, sodium stearate, potassium stearate, lithium stearate, cesium stearate, sodium borohydride, potassium borohydride, lithium borohydride, cesium borohydride, phenylated boron sodium, phenylated boron potassium, phenylated boron lithium, phenylated boron cesium, sodium benzoate, potassium benzoate, lithium benzoate, cesium benzoate, disodium hydrogen phosphate, dipotassium hydrogen phosphate, dilithium hydrogen phosphate, dicesium hydrogen phosphate, disodium phenyl phosphate, dipotassium phenyl phosphate, dilithium phenyl phosphate, dicesium phenyl phosphate, alcoholates and phenolates of sodium, potassium, lithium, and cesium, disodium salts, dipotassium salts, dilithium salts, and dicesium salts of bisphenol A, and the like. The Group 1 metal compound

is preferably a lithium compound from the viewpoint of the polymerization activity and the color tone of the resulting polycarbonate resin.

Examples of the Group 2 metal compound include the following compounds: calcium hydroxide, barium hydroxide, magnesium hydroxide, strontium hydroxide, calcium hydrogen carbonate, barium hydrogen carbonate, magnesium hydrogen carbonate, strontium hydrogen carbonate, calcium carbonate, barium carbonate, magnesium carbonate, strontium carbonate, calcium acetate, barium acetate, magnesium acetate, strontium acetate, calcium stearate, barium stearate, magnesium stearate, strontium stearate, and the like. As the Group 2 metal compound, a magnesium compound, a calcium compound, or a barium compound is preferred. From the viewpoint of the polymerization activity and the color tone of the resulting polycarbonate resin, a magnesium compound and/or a calcium compound are/is further preferred, and a calcium compound is most preferred.

Incidentally, it is also possible to use a basic compound such as a basic boron compound, a basic phosphorus compound, a basic ammonium compound, or an amine-based compound supplementally in combination with the Group 1 metal compound and/or the Group 2 metal compound, but it is more preferable to use only the Group 1 metal compound and/or the Group 2 metal compound. From the viewpoint of the color tone of the resulting polycarbonate resin, only the Group 2 metal compound is most preferred.

An amount of the polymerization catalyst used is preferably 1 μmol or more, further preferably 5 μmol or more, and particularly preferably 25 μmol or more per one mol of the total dihydroxy compound used in the reaction. Also, the amount of the polymerization catalyst used is preferably 500 μmol or less, further preferably 300 μmol or less, and particularly preferably 100 μmol or less per one mol of the total dihydroxy compound used in the reaction.

By adjusting the amount of the polymerization catalyst used within the above range, the polymerization rate can be increased, thereby making it possible to obtain a polycarbonate resin having a desired molecular weight without necessarily increasing a polymerization temperature. Thus, deterioration in color tone of the polycarbonate resin can be suppressed. In addition, because the molar ratio between the dihydroxy compound and the carbonic acid diester can be prevented from unintentional unbalance caused by vaporization of unreacted raw materials during polymerization, a resin having a desired molecular weight and a desired copolymerization ratio can be obtained more reliably. Furthermore, since the occurrence of side reactions can be suppressed, deterioration in color tone of the polycarbonate resin or coloration during molding processing can be further prevented.

In consideration of the adverse effect of sodium, potassium, and cesium, among the Group 1 metals, on the color tone of the polycarbonate resin and the adverse effect of iron on the color tone of the polycarbonate resin, a total content of sodium, potassium, cesium, and iron in the polycarbonate resin is preferably 1 ppm by weight or less. In this case, deterioration in color tone of the polycarbonate resin can be further prevented, and the color tone of the polycarbonate resin can be further improved. From the same viewpoint, the total content of sodium, potassium, cesium, and iron in the polycarbonate resin is more preferably 0.5 ppm by weight or less. These metals may be mixed not only from the catalyst to be used but also from raw materials or a reactor. Regardless of the source, the total amount of these metal compounds in the polycarbonate resin is preferably within the above range as the total content of sodium, potassium, cesium, and iron.

The method for polycondensing the dihydroxy compound and the carbonic acid diester is carried out in multiple stages using a plurality of reactors in the presence of the above-described catalyst. As a type of the reaction, there are a batch type, a continuous type, or a combination of a batch type and a continuous type. It is preferable to adopt a continuous type which can provide a polycarbonate resin with less thermal history and has excellent productivity.

From the viewpoint of control of the polymerization rate and the quality of the resulting polycarbonate resin, it is important to appropriately select a jacket temperature and an internal temperature, and a pressure in the reaction system according to the reaction stage. Specifically, it is preferable to obtain a prepolymer at a relatively low temperature and in low vacuum in an early stage of the polycondensation reaction, and to increase the molecular weight to a predetermined value at a relatively high temperature and in high vacuum in a late stage of the reaction. In this case, the distillation of unreacted monomers is suppressed, and the molar ratio between the dihydroxy compound and the carbonic acid diester is easily adjusted to a desired ratio. As a result, a reduction in polymerization rate can be suppressed. In addition, it becomes possible to obtain a polymer having a desired molecular weight and a terminal group more reliably.

By adjusting the temperature of the polycondensation reaction, it is possible to improve productivity and avoid an increase in thermal history to a product. Furthermore, it is possible to further prevent volatilization of the monomers, and decomposition and coloration of the polycarbonate resin. Specifically, the following conditions can be adopted as reaction conditions in the first-stage reaction. That is, a maximum internal temperature of the polymerization reactor is usually set in a range of 160 to 230°C, preferably 170 to 220°C, and more preferably 180 to 210°C. The pressure (hereinafter, the pressure represents an absolute pressure) of the polymerization reactor is usually set within a range of 1 to 110 kPa, preferably 5 to 50 kPa, and further preferably 7 to 30 kPa. The reaction time is usually set within a range of 0.1 to 10 hours, and preferably 1 to 5 hours. The first-stage reaction is preferably performed while distilling off the generated monohydroxy compound to the outside of the reaction system.

In the second and subsequent stages, it is preferable that the pressure of the reaction system be gradually

reduced from the pressure in the first stage, and finally that the pressure (absolute pressure) of the reaction system be set to 1 kPa or less while removing the continuously generated monohydroxy compound to the outside of the reaction system. Also, the maximum internal temperature of the polymerization reactor is usually set in a range of 200 to 260°C, preferably 210 to 250°C, and more preferably 215 to 240°C. The reaction time is usually set within a range of 0.1 to 10 hours, preferably 0.5 to 5 hours, and particularly preferably 1 to 3 hours.

After confirmation that a predetermined melt viscosity (molecular weight) has reached by using stirring power or the like as an index, the polymerization reaction is stopped by introducing nitrogen into the reactor to return the pressure to normal pressure or extracting the molten resin from the reactor. The molten resin is discharged from a die head in the form of a strand, cooled and solidified, and pelletized by a rotary cutter or the like. If necessary, steps of extrusion devolatilization, extrusion kneading, and extrusion filtration may be added before the pelletization. In this step, an additive is mixed with the resin, a low-molecular-weight component is devolatilized by a vacuum vent, or foreign substances are removed using a polymer filter. In Examples which will be described later, there is a resin that does not solidify at room temperature. In this case, the molten resin after the polymerization reaction was taken out in the form of a lump, and the resin was cut into pellets and used for molding and evaluation.

[Physical Properties of Copolymerized Polycarbonate Resin]

The physical properties of the polycarbonate resin are not particularly limited as long as the enthalpy of fusion observed in the temperature range of -30°C or higher and 80°C or lower by differential scanning calorimetry is 20 J/g or more as described above, but those satisfying the following physical properties are preferred.

•Reduced viscosity

The molecular weight of the polycarbonate resin can be represented by reduced viscosity, and the higher the reduced viscosity, the larger the molecular weight. The reduced viscosity is usually 0.30 dL/g or more, and preferably 0.40 dL/g or more. In this case, the shape retention property of the heat storage material can be further improved. On the other hand, the reduced viscosity is usually 2.0 dL/g or less, more preferably 1.50 dL/g or less, and further preferably 1.00 dL/g or less. In these cases, the strength of the molded body can be improved while fluidity during molding is maintained, and productivity and moldability can be further improved.

The reduced viscosity of the copolymerized polycarbonate resin is measured as follows. First, a polycarbonate resin is dissolved using a solvent to prepare a polycarbonate solution having a concentration of 1.00 g/dl. As the solvent, a mixed solvent of phenol and 1,1,2,2-tetrachloroethane is used. A mixing ratio between phenol and 1,1,2,2-tetrachloroethane is 1:1 in mass ratio. A value measured under the condition of a temperature of 30.0°C $\pm$ 0.1°C by an Ubbelohde viscometer is used. Details of a method for measuring the reduced viscosity will be described in the Examples.

•Glass transition temperature (Tg)

When the copolymerized polycarbonate resin has a glass transition temperature (Tg), Tg is preferably 100°C or higher, and more preferably 120°C or higher, from the viewpoint that shape retention property and heat resisting property are further improved. From the viewpoint of difficulty in realization, Tg is preferably 300°C or lower, and more preferably 200°C or lower. Within the above range, the heat resisting property of the resin is more excellent.

The glass transition temperature is measured in accordance with the method specified in JIS K7121-1987. More specifically, measurement was performed using a differential scanning calorimeter ("EXSTAR 6220" manufactured by SII NanoTechnology Inc.). As conditions for the measurement, an aluminum sample pan enclosing about 10 mg of a polycarbonate sample of a copolymerized polycarbonate resin was cooled to -120°C in a nitrogen atmosphere, then heated from about -120°C to 200°C at a temperature rising rate of 20°C/min. Further, the sample pan was cooled to -120°C at a temperature lowering rate of 20°C/min. Thereafter, the temperature was raised again to 200°C at a temperature rising rate of 20°C/min. From the DSC data obtained by the second temperature increase, the extrapolated glass transition start temperature can be determined. A midpoint glass transition start temperature is determined from a temperature at which a straight line equidistant in the vertical axis direction from a straight line extending a low-temperature side baseline and a high-temperature side baseline intersects with a curve of a stepwise change portion of the glass transition. This midpoint glass transition start temperature is treated as glass transition temperature Tg.

When the glass transition temperature Tg is higher than 200°C, the measurement is performed by changing an upper limit temperature of the measurement to, for example, 300°C, and using the same other conditions (for example, start temperature, temperature rising rate, temperature lowering rate, and retention time).

The glass transition temperature of the copolymerized polycarbonate can be adjusted, for example, by copolymerization composition of the constituent unit (A) and the constituent unit (B).

•Melting peak temperature (Tm)

Herein, the melting peak temperature (Tm) is a temperature at an apex of a melting peak obtained by analyzing, by the method in accordance with JIS K7121-1987, a melting curve as measured by differential scanning calorimetry in the same way as in the case of the glass transition temperature described above. Herein, a melting peak temperature obtained by analyzing a portion in a temperature range of -30°C or higher and 80°C or lower by the method in accordance with JIS K7121-1987 is defined as Tm (L), and a melting peak temperature obtained by similarly analyzing a portion in a temperature range of 160°C or higher and 280°C or lower is defined as Tm (H).

The copolymerized polycarbonate resin usually has Tm (L), but may have both Tm (L) and Tm (H). It is presumed that the former is a melting peak temperature derived from a constituent unit mainly derived from PTMG and a repeating constituent unit composed of a carbonyl group, and that the latter is a melting peak temperature derived from a constituent unit mainly derived from a dihydroxy compound other than PTMG (specifically, an alicyclic dihydroxy compound, a heteroalicyclic dihydroxy compound, or the like) and a repeating constituent unit composed of a carbonyl group. Each of Tm (L) and Tm (H) may have a plurality of melting peak temperatures.

Tm (L) of the copolymerized polycarbonate resin is preferably 10°C or higher and 50°C or lower, so that the heat storage performance of the heat storage material containing the copolymerized polycarbonate resin is further improved. The lower limit of Tm (L) of the copolymerized polycarbonate resin is more preferably 15°C, and further preferably 20°C. On the other hand, the upper limit is more preferably 45°C and further preferably 40°C. When Tm (L) is within the above range, heat storage performance at around room temperature is further improved, and practicability as the heat storage material is more excellent.

When the copolymerized polycarbonate resin has Tm(H) described above, Tm(H) is preferably 150°C or higher and 350°C or lower, from the viewpoint that shape retention property, moldability, processability, and heat resisting property are further improved. Tm(H) is more preferably 200°C or higher and 300°C or lower. Within the above range, shape retention property, moldability, processability, and heat resisting property are more excellent.

[Use of Copolymerized Polycarbonate Resin]

The copolymerized polycarbonate resin can be suitably used as a heat storage material because it is excellent in heat storage property, heat resisting property, moldability, shape retention property, and the like. The same applies to the first to third aspects.

[Polycarbonate Resin Composition]

The copolymerized polycarbonate resin can contain various additives as long as the effects are not impaired. Examples of the additive include an antioxidant, a heat stabilizer, a light stabilizer, an ultraviolet absorber, and filler materials such as a filler, a neutralizing agent, a lubricant, an antifogging agent, an antiblocking agent, a slipping agent, a dispersant, a colorant, a flame retardant, an antistatic agent, a conductivity imparting agent, a crosslinking agent, a crosslinking aid, a metal inactivating agent, a molecular weight adjusting agent, an antibacterial agent, an antifungal material, a fluorescent brightening agent, and light diffusing agents such as an organic diffusing agent and an inorganic diffusing agent.

The copolymerized polycarbonate resin can be blended with any other resin different from the copolymerized polycarbonate resin as long as the effect is not impaired. Specific examples of the other resin include polyethylene, polypropylene, polyester, polyester carbonate, aromatic polycarbonate, polyamide, polyimide, ABS, PMMA, and PET. From the viewpoint of being able to improve the shape retention property, it is preferable to blend the above-described copolymerized polycarbonate resin with any other resin different from the copolymerized polycarbonate resin.

[Method for Producing Polycarbonate Resin Composition]

The polycarbonate resin composition can be produced, for example, by a method of mechanically melting and kneading each of the above-described components constituting the resin composition. As a melt-kneader, for example, a single-screw extruder, a twin-screw extruder, a Brabender, a Banbury mixer, a kneader blender, a roll mill, or the like can be used. At the time of kneading, the respective components may be kneaded collectively, or a multi-stage division kneading method may be used in which arbitrary components are kneaded, and then other remaining components are added and kneaded. Among them, a method, in which a twin-screw extruder equipped with a vacuum vent is used, of continuously charging each component to continuously obtain a resin composition is preferred from the viewpoint of productivity and uniformity in quality. A lower limit of the kneading temperature is usually 150°C, preferably 180°C, and more preferably 200°C. An upper limit of the kneading temperature is usually 280°C, preferably 260°C, more preferably 250°C, and particularly preferably 240°C. Within this range, the productivity (kneading processing rate) is also enhanced

while suppressing thermal degradation due to heating by the kneader and shear heat generation.

The description about the polycarbonate resin composition is also applied to the first to third aspects.

[V] Fifth Aspect

Next, the heat storage material according to the fifth aspect of the present disclosure will be described. The fifth aspect of the present disclosure is, as described above, a heat storage material containing the copolymerized polycarbonate resin (specifically, the copolymerized polycarbonate resin according to any one of the first to fourth aspects).

[Heat Storage Material]

The heat storage material is not particularly limited as long as it contains the above-described copolymerized polycarbonate resin, but is preferably the above-described polycarbonate resin composition.

[VI] Sixth Aspect

Next, the heat storage molded body according to the sixth aspect of the present disclosure will be described. The sixth aspect of the present disclosure is, as described above, a heat storage molded body obtained by molding the heat storage material. The sixth aspect of the present disclosure is a heat storage molded body composed of the heat storage material.

[Heat Storage Molded Body]

The heat storage molded body is obtained by molding the heat storage material, and, specifically, is produced by molding the heat storage material into various shapes such as a sheet shape, a plate shape, a granular shape, a pellet shape, and a tubular shape. At this time, the heat storage molded body can be produced by molding the heat storage material by a general molding method, for example, extrusion molding, injection molding (an insert molding method, a dichroic molding method, a sandwich molding method, a gas injection molding method, or the like), blow molding, vacuum molding, pressure molding, press molding, or the like. Specifically, there is exemplified a method in which a molten product obtained by mixing components during production of the heat storage material is poured into a mold as it is or in a slightly cooled state to form a sheet shape or plate shape. In addition, since the heat storage material is solidified at a temperature lower than the flow start temperature, the heat storage material may be molded into a block shape and then cut into a sheet shape or a plate shape. Furthermore, the heat storage material may be attached or applied onto, or impregnated into, a film, cloth, fibers, a particle board, or the like to form a sheet shape or a plate shape. It is also possible to pack it in a bag of polyethylene/or the like and form it into a sheet shape, a plate shape, or a rod shape in the cooling process. Further, extrusion molding into a sheet or plate shape may be performed using an extruder. It is also possible to form a granular or pellet shape by cutting a product molded into a rod shape or a pipe shape by an extruder. In each molding method, the apparatus and the processing conditions are not particularly limited.

The shape of the molded body is not particularly limited, and examples thereof include a sheet, a film, a plate shape, a particle shape, a lump shape, a fiber, a rod shape, a porous body, and a foam, and a sheet, a film, and a plate shape are preferred. The molded film can also be uniaxially or biaxially stretched. Examples of the stretching method include a roll method, a tenter method, and a tubular method. Furthermore, it is also possible to perform surface treatment such as corona discharge treatment, flame treatment, plasma treatment, ozone treatment, or the like which is usually industrially used.

When a molded body is obtained by extrusion molding, the heat storage material is charged into an extruder that has reached a temperature at which the heat storage material sufficiently melts, kneaded while melting, discharged from a mouthpiece having various shapes, and then cooled by air cooling or water cooling to obtain a desired molded body. As the extruder, either a single-screw extruder or a twin-screw extruder may be used, but, from the viewpoint of dispersibility, it is preferable to use a twin-screw extruder. At this time, a temperature of the extruder is preferably 100°C or higher and 200°C or lower, more preferably 110°C or higher and 190°C or lower, and further preferably 120°C or higher and 180°C or lower. When the temperature of the extruder is in such a range, volatilization of the heat storage component during kneading and extrusion molding can be suppressed.

When a molded body is obtained by injection molding, the heat storage material is charged into an extruder that has reached a temperature at which the heat storage material or the like sufficiently melts, and injected into a mold having various shapes to obtain a desired molded body. The molding temperature at this time is also preferably in the same range as in the case of extrusion molding.

[Use of Heat Storage Molded Body]

The use of the heat storage molded body is not particularly limited, however, because the heat storage molded body is excellent in heat storage performance, heat resisting property, moldability, and shape retention property, it can be suitably applied, for example, to a product for which heat/cool keeping performance is directly or indirectly required, or part(s) of such product.

Examples of a product or a member thereof which is directly or indirectly required to have heat/cool keeping performance include building materials, furniture, interior goods, bedding, bathroom materials, vehicles, air conditioning equipment, electrical appliances, heat insulating containers, food packaging films, clothing, daily necessities, agricultural materials, fermentation systems, thermoelectric conversion systems, and heat transfer media.

The above descriptions about the heat storage material and heat storage molded body are also applied to the first to third aspects.

[VII] Seventh Aspect

Next, the phase transition material according to the seventh aspect of the present disclosure will be described. The seventh aspect of the present disclosure is, as described above, a phase transition material composed of a polymer, the polymer having a carbonate bond in a molecular chain thereof and having an enthalpy of fusion $\Delta H(L)$ of 20 J/g or more observed in a temperature range of -30°C or higher and 80°C or lower by differential scanning calorimetry.

The phase transition material (that is, PCM) is a material that performs heat storage and dissipation using latent heat accompanying a phase change in substance. The phase transition material of the present disclosure is made of, for example, a copolymerized polycarbonate resin. That is, the polymer is, for example, a copolymerized polycarbonate resin. Such a phase transition material is a resin-type phase transition material, which stores and dissipates heat using latent heat associated with solid-phase/solid-phase transition, not latent heat associated with solid-phase to liquid phase transition as in conventional paraffin-type phase transition materials.

The polymer constituting the phase transition material has an enthalpy of fusion $\Delta H(L)$ of 20 J/g or more observed in a temperature range of -30°C or higher and 80°C or lower by differential scanning calorimetry. Thus, the phase transition material is excellent in heat storage property. From the viewpoint that heat storage property is further improved, the enthalpy of fusion $\Delta H(L)$ of the polymer is preferably 30 J/g or more, more preferably 40 J/g or more, further preferably 50 J/g or more, and particularly preferably 55 J/g or more. From the viewpoint of difficulty in realization, $\Delta H(L)$ of the polymer is usually 500 J/g or less, more preferably 200 J/g or less, and particularly preferably 150 J/g or less.

The polymer preferably has, at least, a constituent unit (A) derived from one or more dihydroxy compounds selected from the group consisting of an aliphatic dihydroxy compound, an alicyclic dihydroxy compound, and a heteroalicyclic dihydroxy compound, and a constituent unit (B) derived from a polyoxyalkylene glycol. In this case, shape retention property and molding processability are further improved.

A weight ratio of the constituent unit (B) to a total weight of the polymer constituting the phase transition material is preferably more than 20 wt% and 99 wt% or less. The weight ratio of the constituent unit (B) exceeds 20 wt%, and thus the crystallinity of the phase transition material increases and the enthalpy of fusion increases, so that the heat storage property of the phase transition material is further improved. The weight ratio of the constituent unit (B) is 99 wt% or less, and thus the heat resisting property and shape retention property of the phase transition material are further improved. From the viewpoint that the heat storage property of the phase transition material is further improved, the weight ratio of the constituent unit (B) is preferably 25 wt% or more, more preferably 30 wt% or more, further preferably 50 wt% or more, and particularly preferably 65 wt% or more. On the other hand, from the viewpoint that the heat resisting property and shape retention property of the phase transition material are further improved, the weight ratio of the constituent unit (B) is preferably 95 wt% or less, more preferably 90 wt% or less, and particularly preferably 85 wt% or less.

It is preferable that the carbon number of the alkylene group R in the repeating unit which constitutes the polyoxyalkylene glycol and is represented by Formula (7) be 2 to 3, and that the number average molecular weight be 3,000 or more and 20,000 or less. In this case, the phase transition material exhibits a melting peak temperature (that is, a melting peak temperature exceeding 35°C) higher than room temperature (specifically, 20 to 35°C), and exhibits excellent heat storage property in a high temperature range (specifically, higher than 35°C and 80°C or lower). Therefore, the phase transition material is preferably used as a heat storage material required to have heat storage performance in a high temperature range (specifically, higher than 35°C and 80°C or lower). From the same viewpoint, it is more preferable that the carbon number of the alkylene group R in the repeating unit which constitutes the polyoxyalkylene glycol and is represented by Formula (7) be 2 to 3, and that the number average molecular weight be 3,500 or more and 15,000 or less, and it is particularly preferable that the carbon number of the alkylene group R in the repeating unit which constitutes the polyoxyalkylene glycol and is represented by Formula (7) be 2 to 3, and that the number average molecular weight be 4,000 or more and 12,000 or less.

[Chemical Formula 44]

$$\left( O - R \right)_n \quad (7)$$

(In the formula (7), R represents an alkylene group, and n represents a number of repetitions.)

Also, it is preferable that the carbon number of the alkylene group R in the repeating unit which constitutes the polyoxyalkylene glycol and is represented by Formula (7) be 4 to 6, and that the number average molecular weight be 1,500 or more and 20,000 or less. In this case, the phase transition material exhibits a melting peak temperature close to room temperature (specifically, 20 to 35°C) and exhibits excellent heat storage property at room temperature. Therefore, the phase transition material is preferably used as a heat storage material required to have heat storage performance at room temperature (specifically, 20 to 35°C). From the same viewpoint, it is more preferable that the carbon number of the alkylene group R in the repeating unit which constitutes the polyoxyalkylene glycol and is represented by Formula (7) be 4 to 6, and that the number average molecular weight be 2,000 or more and 15,000 or less, it is further preferable that the carbon number of the alkylene group R in the repeating unit which constitutes the polyoxyalkylene glycol and is represented by Formula (7) be 4 to 6, and that the number average molecular weight be 2,500 or more and 10,000 or less, and it is particularly preferable that the carbon number of the alkylene group R in the repeating unit which constitutes the polyoxyalkylene glycol and is represented by Formula (7) be 4 to 6, and that the number average molecular weight be 3,500 or more and 7,000 or less.

Also, it is preferable that the carbon number of the alkylene group R in the repeating unit which constitutes the polyoxyalkylene glycol and is represented by Formula (7) be 7 or more, and that the number average molecular weight be 800 or more and 20,000 or less. In this case, the phase transition material exhibits a melting peak temperature (that is, a melting peak temperature exceeding 35°C) higher than room temperature (specifically, 20°C to 35°C), and exhibits excellent heat storage property in a high temperature range (specifically, higher than 35°C and 80°C or lower). Therefore, the copolymerized polycarbonate resin is preferably used as a heat storage material required to have heat storage performance in a high temperature range (specifically, higher than 35°C and 80°C or lower). From the same viewpoint, it is more preferable that the carbon number of the alkylene group R in the repeating unit which constitutes the polyoxyalkylene glycol and is represented by Formula (7) be 7 or more and 15 or less, and that the number average molecular weight be 800 or more and 15,000 or less, it is further preferable that the carbon number of the alkylene group R in the repeating unit which constitutes the polyoxyalkylene glycol and is represented by Formula (7) be 8 or more and 12 or less, and that the number average molecular weight be 800 or more and 10,000 or less, and it is particularly preferable that the carbon number of the alkylene group R in the repeating unit which constitutes the polyoxyalkylene glycol and is represented by Formula (7) be 9 or more and 10 or less, and that the number average molecular weight be 900 or more and 8,000 or less.

Other configurations of the phase transition material are the same as those in the first aspect. In addition, the phase transition material can be said to be a heat storage material, and thus the heat storage material and heat storage molded body in the fourth aspect are referred to, as for other configurations.

## EXAMPLES

Hereinafter, the present invention will be further described with reference to examples, but is not limited thereto. The symbol "%" indicates "wt%" unless otherwise specified.

### [Evaluation Method]

Physical properties or properties of polycarbonate resin compositions and molded bodies were evaluated by the following methods.

### (1) Preparation of Press Film

The obtained polycarbonate resin copolymer was used without being dried. A metal plate (specifically, a SUS plate) having an outer width of 10 cm long and 10 cm wide, and a thickness of 0.5 mm was cut leaving a margin of 1 cm to prepare a spacer thus cut out and having an inner width of 8 cm long and 8 cm wide. This spacer was sandwiched between two Teflon (registered trademark) films having a length of 15 cm, a width of 15 cm, and a thickness of 1 mm, and about 4 g of pellets were placed in a frame of the spacer and hot-pressed. A hot pressing temperature was 150°C, a preheating time was 5 to 7 minutes, and a pressure during pressing was 40 MPa. A pressurization time during pressing

was 1 minute. After the hot pressing, a sheet-shaped sample was taken out together with a mirror surface plate and the spacer, and was pressurized and cooled for 3 minutes at a pressure of 20 MPa by water pipe cooling type press. A Film having a thickness of 400 to 500 μm was prepared.

When the polycarbonate resin was solidified slowly, it was left as it was overnight to be solidified, and then a film was obtained.

(2) Glass transition temperature (Tg, unit:°C), melting peak temperature (Tm, unit:°C), and enthalpy of fusion (ΔH, unit: J/g)

Measurements were performed using a differential scanning calorimeter "EXSTAR 6220" manufactured by SII NanoTechnology Inc. The obtained polycarbonate copolymer was used as a measurement sample without being dried. Specifically, an aluminum sample pan enclosing about 10 mg of the measurement sample was cooled to -120°C in a nitrogen atmosphere, and then heated from about -120°C to 200°C at a temperature rising rate of 20°C/min. Further, the sample pan was cooled to -120°C at a temperature lowering rate of 20°C/min. Thereafter, the temperature was raised again to 200°C at a temperature rising rate of 20°C/min.

A differential scanning calorimetry curve obtained by the second temperature rise was analyzed as a measurement curve. A glass transition temperature and a melting peak temperature were analyzed in accordance with JIS K7121:1987. A midpoint glass transition start temperature is determined from a temperature at which a straight line equidistant in the vertical axis direction from a straight line extending a low-temperature side baseline and a high-temperature side baseline intersects with a curve of a stepwise change portion of the glass transition. This midpoint glass transition start temperature is treated as glass transition temperature Tg. A melting peak temperature Tm was a temperature at an apex of the melting peak.

Regarding the enthalpy of fusion, ΔH(L) was determined by analyzing a region in a temperature range of -30°C or higher and 80°C or lower, and ΔH(H) was determined by analyzing a region in a temperature range of 160°C or higher and 280°C or lower, in accordance with the method of JIS K7122:1987.

(3) Reduced viscosity

A polycarbonate resin was dissolved using a solvent to prepare a polycarbonate solution having a concentration of 1.00 g/dl. As the solvent, a mixed solvent of phenol and 1,1,2,2-tetrachloroethane was used. A mixing ratio between phenol and 1,1,2,2-tetrachloroethane is 1:1 in mass ratio. The polycarbonate resin was dissolved in the mixed solvent over 30 minutes while stirring at 110°C, and the cooled polycarbonate solution was used for measurement of the reduced viscosity. The reduced viscosity was measured at a temperature of 30.0°C ± 0.1°C using an Ubbelohde viscometer "DT-504 type automatic viscometer" manufactured by CHUORIKA, CO. LTD. From a passage time t0 of the solvent and a passage time t of the solution, a relative viscosity ηrel was calculated by the following formula (α), and, from the relative viscosity ηrel, a specific viscosity ηsp (unit: $g \cdot cm^{-1} \cdot sec^{-1}$) was calculated by the following formula (β). In Formula (β), η0 is a viscosity of the solvent. The specific viscosity ηsp was divided by a concentration c (g/dL) of the polycarbonate solution to calculate a reduced viscosity η (η = ηsp/c). A higher value means a larger molecular weight.

$$\eta rel = t/t0 \cdots (\alpha)$$

$$\eta sp = (\eta - \eta 0)/\eta 0 = \eta rel - 1 \cdots (\beta)$$

(4) Evaluation of Shape Retention Property

The press film formed in (1) was retained at 30°C for 1 day, and a change in shape was observed. When the film shape after the press molding did not flow and was not deformed, the shape retention property was determined as favorable, and evaluated as "favorable (◦)". On the other hand, when the film shape flowed and was deformed, the shape retention property was evaluated as "poor (×)".

<NMR>

About 30 mg of a sample was placed in an NMR sample tube having an outer diameter of 5 mm, and dissolved in 0.7 ml of deuterated chloroform (containing 0.03 v/v% tetramethylsilane). 1H-NMR was measured at a resonance frequency of 950.3 MHz, a flip angle of 30°, and a measurement temperature of 25°C with "AVANCE III 950" manufactured by Bruker Corporation.

[Synthesis Examples]

<GPC (Gel Permeation Chromatography) Measurement>

Column: two TSKgel GMHHR-N (Tosoh Corporation, 7.8·300 mm, 9 mm) columns
Column oven temperature: 40°C
Mobile phase: THF 1 mL/min
Analysis time: 30 min
Detection: RI detector
Sample: 50 μL injected
Calibration method: in terms of polystyrene
Calibration curve approximate expression: cubic expression

•Synthesis Example 1 <Production Example of PDMG Mn 1000>

Into a four-necked flask equipped with a distillation tube, a nitrogen introduction tube, a thermocouple and a stirrer, 250 g (1.43 mol) of 1,10 decanediol was charged, while nitrogen was supplied at 0.20 NL/min. 5.50 g (28.9 mmol) of p-toluenesulfonic acid monohydrate was slowly added with stirring. The flask was immersed in an oil bath and heated, and the liquid temperature in the flask reached 170°C in about 0.5 to 1 hour. The reaction was started when the liquid temperature in the flask reached 170°C, and, thereafter, the reaction was carried out for 13 hours while the liquid temperature was maintained at 168 to 172°C. Water generated by the reaction was distilled off together with nitrogen. Into the reaction solution allowed to cool to around 90°C, 25 g of a 10 wt% aqueous sodium hydroxide solution was poured, and the solution mixture was heated under reflux at 110°C for 15 hours to hydrolyze the ester. The solution mixture was cooled to around 90°C, and 250 g of ion exchanged water was poured. The solution mixture was stirred at 90°C for about 15 minutes and left to stand for 1 to 2 hours. After it was confirmed that the mixture was separated into an oil layer and an aqueous layer, the aqueous layer was extracted. The conductivity of the aqueous layer was measured, and the addition of ion exchanged water and oil-water separation were repeated a total of 7 times until the conductivity reached 0 to 10 μS/cm. The oil layer was taken out and then dried under reduced pressure at 170°C for 2 hours at 5 torr to obtain a target polydecamethylene ether glycol. A number average molecular weight determined by GPC was 1,040, a mass average molecular weight was 1,810, a molecular weight distribution was 1.74, a terminal olefination rate determined by NMR was 0.524%, and a terminal esterification rate was a lower limit of NMR detection or less.

•Synthesis Example 2 <Production Example of PDMG Mn 2700>

Into a four-necked flask equipped with a distillation tube, a nitrogen introduction tube, a thermocouple and a stirrer, 250 g (1.43 mol) of 1,10 decanediol was charged, while nitrogen was supplied at 0.20 NL/min. 5.50 g (28.9 mmol) of p-toluenesulfonic acid monohydrate was slowly added with stirring. The flask was immersed in an oil bath and heated, and the liquid temperature in the flask reached 190°C in about 1 hour. The reaction was started when the liquid temperature in the flask reached 170°C, and, thereafter, the reaction was carried out for 9 hours while the liquid temperature was maintained at 188 to 192°C. Water generated by the reaction was distilled off together with nitrogen. Into the reaction solution allowed to cool to around 90°C, 250 g of a 1 wt% aqueous sodium hydroxide solution was poured, and the solution mixture was heated under reflux at 110°C for 15 hours to hydrolyze the ester. The solution mixture was cooled to around 90°C, and 250 g of ion exchanged water was poured. The solution mixture was stirred at 90°C for about 15 minutes and left to stand for 1 to 2 hours. After it was confirmed that the mixture was separated into an oil layer and an aqueous layer, the aqueous layer was extracted. The conductivity of the aqueous layer was measured, and the addition of ion exchanged water and oil-water separation were repeated a total of 7 times until the conductivity reached 0 to 10 μS/cm. Thereafter, 500 mL of ethanol was added, the mixture was heated and dissolved at 60°C, allowed to cool to room temperature, and filtered to remove unreacted 1,10 decanediol and polydecamethylene ether glycol having a molecular weight as low as that of a dimer or trimer. The obtained solid was vacuum-dried at 70°C for 6 hours to obtain a target polydecamethylene ether glycol. The number average molecular weight determined by GPC was 2,670, the mass average molecular weight was 3,600, the molecular weight distribution was 1.35, the terminal olefination rate determined by NMR was 1.48%, and the terminal esterification rate was a lower limit of NMR detection or less.

•Synthesis Example 3 <Production Example of PNMG Mn 1000>

Into a four-necked flask equipped with a distillation tube, a nitrogen introduction tube, a thermocouple and a

stirrer, 450 g (2.81 mol) of 1,9 nonanediol was charged, while nitrogen was supplied at 0.20 NL/min. 9.90 g (52.0 mmol) of p-toluenesulfonic acid monohydrate was slowly added with stirring. The flask was immersed in an oil bath and heated, and the liquid temperature in the flask reached 170°C in about 0.5 to 1 hour. The reaction was started when the liquid temperature in the flask reached 170°C, and, thereafter, the reaction was carried out for 19 hours while the liquid temperature was maintained at 168 to 172°C. Water generated by the reaction was distilled off together with nitrogen. Into the reaction solution allowed to cool to around 90°C, 45 g of a 10 wt% aqueous sodium hydroxide solution was poured, and the solution mixture was heated under reflux at 110°C for 20 hours to hydrolyze the ester. The solution mixture was cooled to around 90°C, and 450 g of ion exchanged water was poured. The solution mixture was stirred at 80°C for about 15 minutes and left to stand for 1 to 2 hours. After it was confirmed that the mixture was separated into an oil layer and an aqueous layer, the aqueous layer was extracted. The conductivity of the aqueous layer was measured, and the addition of ion exchanged water and oil-water separation were repeated a total of 10 times until the conductivity reached 0 to 10 μS/cm. The oil layer was taken out and then dried under reduced pressure at 150°C for 2 hours at 5 torr to obtain a target polynonamethylene ether glycol. The number average molecular weight determined by GPC was 1,016, the mass average molecular weight was 1,760, the molecular weight distribution was 1.73, the terminal olefination rate determined by NMR was 0.447%, and the terminal esterification rate was a lower limit of NMR detection or less.

•Synthesis Example 4 <Production Example of PHMG Mn 1000>

Into a four-necked flask equipped with a distillation tube, a nitrogen introduction tube, a thermocouple and a stirrer, 450 g (3.81 mol) of 1,6-hexanediol was charged, while nitrogen was supplied at 0.20 NL/min. 9.90 g (52.0 mmol) of p-toluenesulfonic acid monohydrate was slowly added with stirring. The flask was immersed in an oil bath and heated, and the liquid temperature in the flask reached 170°C in about 0.5 to 1 hour. The reaction was started when the liquid temperature in the flask reached 170°C, and, thereafter, the reaction was carried out for 23 hours while the liquid temperature was maintained at 168 to 172°C. Water and byproducts generated by the reaction were distilled off together with nitrogen. Into the reaction solution allowed to cool to around 90°C, 45 g of a 10 wt% aqueous sodium hydroxide solution was poured, and the solution mixture was heated under reflux at 110°C for 23 hours to hydrolyze the ester. The solution mixture was cooled to around 55°C, and 400 g of ion exchanged water was poured. The solution mixture was stirred at 55°C for about 15 minutes and left to stand for 1 to 2 hours. After it was confirmed that the mixture was separated into an oil layer and an aqueous layer, the aqueous layer was extracted. The conductivity of the aqueous layer was measured, and the addition of ion exchanged water and oil-water separation were repeated a total of 30 times until the conductivity reached 0 to 10 μS/cm. Further, liquid separation and washing were performed 4 times with 1 L of hexane at around 50°C. The obtained compound was dried under reduced pressure at 130°C for 2 hours at 1 torr to obtain a target polyhexamethylene ether glycol. The number average molecular weight determined by GPC was 1,055, the mass average molecular weight was 1,690, the molecular weight distribution was 1.60, the terminal olefination rate determined by NMR was 0.789%, and the terminal esterification rate was a lower limit of NMR detection or less.

•Synthesis Example 5 <Production Example of PHMG Mn 2700>

Into a four-necked flask equipped with a distillation tube, a nitrogen introduction tube, a thermocouple and a stirrer, 450 g (3.81 mol) of 1,6-hexanediol was charged, while nitrogen was supplied at 0.20 NL/min. 22.25 g (116.97 mmol) of p-toluenesulfonic acid monohydrate was slowly added with stirring. The flask was immersed in an oil bath and heated, and the liquid temperature in the flask reached 170°C in about 0.5 to 1 hour. The reaction was started when the liquid temperature in the flask reached 170°C, and, thereafter, the reaction was carried out for 28 hours while the liquid temperature was maintained at 168 to 172°C. Water and byproducts generated by the reaction were distilled off together with nitrogen. Into the reaction solution allowed to cool to around 90°C, 104 g of a 10 wt% aqueous sodium hydroxide solution was poured, and the solution mixture was heated under reflux at 110°C for 78 hours. Thereafter, a solution obtained by dissolving 4.50 g of tetrabutylammonium bromide in 5.58 g of a 10 wt% aqueous sodium hydroxide solution was poured, and the solution was heated under reflux at 110°C for 28 hours to hydrolyze the ester. The solution mixture was cooled to around 80°C, and 500 g of ion exchanged water was poured. The solution mixture was stirred at 80°C for about 60 minutes and left to stand for 15 to 60 minutes. After it was confirmed that the mixture was separated into an oil layer and an aqueous layer, the aqueous layer was extracted. The conductivity of the aqueous layer was measured, and the addition of ion exchanged water and oil-water separation were repeated a total of 52 times until the conductivity reached 0 to 10 μS/cm. Further, it was dissolved in 604 g of cyclohexane at around 50°C, and then 1,384 g of heptane was added at 25°C. The solution mixture was allowed to stand for 2 hours for crystallization. The solid was separated by filtration, and dried under reduced pressure at 80°C for 8 hours at 1 torr to obtain a target polyhexamethylene ether glycol. The number average molecular weight determined by GPC was 2,672, the mass average molecular weight was 5,123, the molecular weight distribution was 1.92, the terminal olefination rate determined by NMR was 0.501%, and the terminal esterification rate was 0.357%.

[Production and Evaluation of Copolymerized Polycarbonate Resin]

(Raw materials used)

Raw materials used in producing a polycarbonate copolymer in the following Examples and Comparative Examples are as follows.

- DPC: diphenyl carbonate, manufactured by Mitsubishi Chemical Corporation
- ISB: isosorbide, manufactured by Roquette Frères
- CHDM: 1,4-cyclohexanedimethanol, manufactured by SK Chemicals Co., Ltd.
- TCDDM: tricyclodecane dimethanol, manufactured by Oxea Corporation
- DPC: diphenyl carbonate, manufactured by Mitsubishi Chemical Corporation
- SPG: spiroglycol, manufactured by MITSUBISHI GAS CHEMICAL COMPANY, INC.
- ADDM: tricyclo[3,3,1,$1^{3,7}$]-1,3-dimethanol, manufactured by Channelpharm Ltd.
- BODM: bicyclo[2,2,2] octane- 1,4-dimethanol, manufactured by Ark Pharm, Inc.
- Calcium acetate monohydrate ($Ca(CH_3COO)_2 \cdot H_2O$): manufactured by Kishida Chemical Co., Ltd.
- PEG4000 (polyethylene glycol Mn 4000): FUJIFILM Wako Pure Chemical Corporation
- PTMG1000 (polytetramethylene glycol Mn 1000): manufactured by Mitsubishi Chemical Corporation
- PTMG3000 (polytetramethylene glycol Mn 3000): manufactured by Mitsubishi Chemical Corporation
- PTMG4000 (polytetramethylene glycol Mn 4000): manufactured by Mitsubishi Chemical Corporation
- VELVETOL H2700 (polytrimethylene glycol (PO3G) Mn 2700): manufactured by Allessa Chemie
- PDMG1000, polydecamethylene glycol Mn 1070 obtained in Synthesis Example 1
- PDMG2700, polydecamethylene glycol Mn 2700 obtained in Synthesis Example 2
- PNMG1000, polynonamethylene glycol Mn 1000 obtained in Synthesis Example 3
- PHMG1000, polyhexamethylene glycol Mn 1000 obtained in Synthesis Example 4
- PHMG2700, polyhexamethylene glycol Mn 2700 obtained in Synthesis Example 5
- 1,10-DD: 1.10-decanediol, manufactured by Tokyo Chemical Industry Co., Ltd.
- 1,12-DD: 1,12-dodecanediol, manufactured by Tokyo Chemical Industry Co., Ltd.
- 1,18-OD: 1,18-octadecanediol which can be synthesized according to a known method (for example, RSC ADVANCES, 3 (15), p. 4927-4934; 2013)

Compositions and evaluation results of copolymerized polycarbonate resins are shown in Tables 1 to 7. Weight ratios and molar ratios of constituent units derived from a dihydroxy compound in Tables 1 to 7 were calculated as repeating constituent units containing one carbonyl group.

[Example 1]

Into a reaction vessel, 6.26 g (0.0016 mol) of PTMG4000, 7.39 g (0.0506 mol) of ISB, 11.61 g (0.0542 mol) of DPC, and $2.76 \times 10^{-3}$ g ($1.56 \times 10^{-5}$ mol) of calcium acetate monohydrate as a catalyst in a form of 2 wt% aqueous solution were charged. A heating tank temperature was raised to 150°C, by heating, in a nitrogen atmosphere, and stirring was performed as necessary. The temperature was raised to 220°C at normal pressure in 60 minutes to dissolve the raw materials (molar ratio of DPC/ISB/PTMG4000 = 104/97/3).

As a first step of the reaction, the pressure was reduced from normal pressure to 13.3 kPa in 40 minutes while the temperature was kept at 220°C. The solution was then retained at 13.3 kPa for 60 minutes, and the generated phenol was extracted to the outside of the reaction vessel. As a second step, the heating tank temperature was raised to 240°C in 20 minutes and the pressure was controlled to be 0.200 kPa or less in 30 minutes, and the generated phenol was extracted to the outside of the reaction vessel. After arrival at a predetermined stirring torque, the reaction was terminated, and the generated reaction product was taken out from the reaction vessel to obtain a polycarbonate copolymer.

The obtained polycarbonate copolymer had a reduced viscosity of 0.822 dl/g, a Tm (L) of 27°C, and a ΔH(L) of 27 J/g. Tg was 156°C. Tm (H) was not observed, and ΔH(H) was 0. The obtained polycarbonate was pressed at 150°C to obtain a pressed film. The shape retention property was good.

[Example 2]

A polycarbonate copolymer was obtained in the same manner as in Example 1 except that PTMG3000 was used as polytetramethylene glycol, and that the molar ratio of DPC/ISB/PTMG3000 was set to 104/95/5.

The obtained polycarbonate copolymer had a reduced viscosity of 0.415 dl/g, a Tm (L) of 18°C, and a ΔH(L) of 25 J/g. Tg was 111°C. Tm (H) was not observed, and ΔH(H) was 0. The obtained polycarbonate was pressed at

150°C to obtain a pressed film. The shape retention property was good.

[Examples 3 to 6]

A polycarbonate copolymer was obtained in the same manner as in Example 1 except that the molar ratio of ISB/PTMG4000 was as shown in Table 2. The NMR spectra of the polycarbonate copolymers obtained in Examples 4 and 6 are shown in Figs. 1 and 2, respectively.

[Example 7]

A polycarbonate copolymer was obtained in the same manner as in Example 1 except that ISB was used as a heteroalicyclic dihydroxy compound, that CHDM was used as an alicyclic dihydroxy compound, and that the molar ratio of DPC/ISB/PTMG4000/CHDM was set to 104/63/10/27. The NMR spectrum of this polycarbonate copolymer is shown in Fig. 6.

[Examples 8 and 9]

A polycarbonate copolymer was obtained in the same manner as in Example 10 except that ISB was used as a heteroalicyclic dihydroxy compound, that TCDDM was used as an alicyclic dihydroxy compound, and that the molar ratio of ISB/PTMG4000/TCDDM was the composition shown in Table 2. The NMR spectra of these polycarbonate copolymers are shown in Figs. 7 and 8.

[Example 10]

A polycarbonate copolymer was obtained in the same manner as in Example 1 except that PTMG2000 was used as polytetramethylene glycol, and that the molar ratio of DPC/ISB/PTMG2000 was set to 104/90/10.

[Comparative Example 1]

A polycarbonate copolymer was obtained in the same manner as in Example 1 except that PTMG1000 was used as polytetramethylene glycol, and that the molar ratio of DPC/ISB/PTMG1000 was set to 104/90/10.

[Comparative Example 2]

A polycarbonate copolymer was obtained in the same manner as in Example 1 except that ISB was used as a heteroalicyclic dihydroxy compound, that CHDM was used as an alicyclic dihydroxy compound, that PTMG1000 was used as polytetramethylene glycol, and that the molar ratio of DPC/ISB/PTMG1000/CHDM was set to 104/72/10/18.

[Comparative Example 3]

A polycarbonate copolymer was obtained in the same manner as in Example 1 except that VELVETOL H2700 was used as polytrimethylene glycol, and that the molar ratio of DPC/ISB/H2700 was set to 104/95/5.

[Example 11]

A polycarbonate copolymer was obtained in the same manner as in Example 1 except that ISB was used as a heteroalicyclic dihydroxy compound, that PEG4000 was used as a polyethylene glycol, and that the molar ratio of DPC/ISB/PEMG4000 was set to 104/90/10.

[Example 12]

A polycarbonate copolymer was obtained in the same manner as in Example 1 except that BODM was used as an alicyclic dihydroxy compound, and that the molar ratio of DPC/BODM/PTMG4000 was set to 104/90/10. The NMR spectrum of this polycarbonate copolymer is shown in Fig. 3.

[Example 13]

A polycarbonate copolymer was obtained in the same manner as in Example 1 except that ADDM was used

as an alicyclic dihydroxy compound, and that the molar ratio of DPC/ADDM/PTMG4000 was set to 104/90/10. The NMR spectrum of this polycarbonate copolymer is shown in Fig. 4. A plurality of melting peaks were observed as Tm (H). Specifically, melting peaks were observed at 209°C, 249°C, and 267°C.

[Example 14]

A polycarbonate copolymer was obtained in the same manner as in Example 1 except that SPG was used as a heteroalicyclic dihydroxy compound, and that the molar ratio of DPC/SPG/PTMG4000 was set to 104/90/10. The NMR spectrum of this polycarbonate copolymer is shown in Fig. 5. A plurality of melting peaks were observed as Tm (H). Specifically, melting peaks were observed at 209°C, 227°C, and 253°C.

[Example 15]

A polycarbonate copolymer was obtained in the same manner as in Example 1 except that 1,10-DD was used as an aliphatic dihydroxy compound, and that the molar ratio of DPC/1,10-DD/PTMG4000 was set to 104/90/10.

The analysis of ΔH(L) was obtained by analyzing the results of the second temperature rise. Fig. 9 shows the DSC curve of Example 15 and the results of peak separation by vertical division. In this example, as shown in Fig. 9, there were two peaks where the melting peak temperature (Tm) of the constituent unit (A) derived from 1,10-DD and the melting peak temperature (Tm) of the constituent unit (B) derived from PTMG4000 were present at positions close to each other, and the enthalpy of fusion was not separated (unseparated) on one baseline $L_1$. Of the two peaks, the low temperature-side peak was defined as first peak (that is, peak of the constituent unit (B)), and the high temperature-side peak was defined as second peak (that is, peak of the constituent unit (A)). The individual peaks were divided by a perpendicular line $L_2$ drawn from a point where data became maximum between the first peak and the second peak (that is, a point on the DCS curve at 35°C existing between the first peak and the second peak in Fig. 9) to the baseline $L_1$. That is, the vertical division described above was performed. The maximum point (that is, the point on the DSC curve at 35°C in Fig. 9) of the data between the first peak and the second peak is a peak end of the first peak and a peak start of the second peak. A peak start of the first peak is the same point as a base start on the low temperature side (point on the DSC curve at -14°C in Fig. 9). Each peak area is an area of a region surrounded by the DSC curve, the division line (that is, perpendicular line $L_2$), and the baseline $L_1$, and the enthalpy of fusion was determined by calculating this area. As shown in Fig. 9, the area of the first peak on the low temperature side is the enthalpy of fusion of the constituent unit (B) derived from PTMG4000, and the area of the second peak on the high temperature side is the enthalpy of fusion of the constituent unit (A) derived from 1,10-DD. Table 4 shows Tm (L) and ΔH(L) of the first peak and Tm (L) and ΔH(L) of the second peak, respectively. ΔH(L) of Example 15 was calculated as a sum of ΔH(L) of the first peak and ΔH(L) of the second peak, and was 71 J/g.

[Example 16]

A polycarbonate copolymer was obtained in the same manner as in Example 1 except that 1,12-DD was used as an aliphatic dihydroxy compound, and that the molar ratio of DPC/1,12-DD/PTMG4000 was set to 104/90/10. The enthalpy of fusion ΔH(L) was calculated separately by vertical division in the same manner as in Example 15.

[Example 17]

A polycarbonate copolymer was obtained in the same manner as in Example 1 except that 1,18-OD was used as an aliphatic dihydroxy compound, and that the molar ratio of DPC/1,18-OD/PTMG4000 was set to 104/85/15. The enthalpy of fusion ΔH(L) was calculated separately by vertical division in the same manner as in Example 15.

[Example 18]

A polycarbonate copolymer was obtained in the same manner as in Example 1 except that 1,18-OD was used as an aliphatic dihydroxy compound, and that the molar ratio of DPC/1,18-OD/PTMG3000 was set to 104/90/10. The enthalpy of fusion ΔH(L) was calculated separately by vertical division in the same manner as in Example 15.

[Example 19]

A polycarbonate copolymer was obtained in the same manner as in Example 1 except that ISB was used as a heteroalicyclic dihydroxy compound, that PDMG2700 was used as polydecamethylene glycol, and that the molar ratio of DPC/ISB/PDMG2700 was set to be 104/98/2.

[Example 20]

A polycarbonate copolymer was obtained in the same manner as in Example 1 except that ISB was used as a heteroalicyclic dihydroxy compound, that PDMG1000 was used as polydecamethylene glycol, and that the molar ratio of DPC/ISB/PDMG1000 was set to be 104/88/12.

[Example 21]

A polycarbonate copolymer was obtained in the same manner as in Example 1 except that ISB was used as a heteroalicyclic dihydroxy compound, that CHDM was used as an alicyclic dihydroxy compound, that PDMG1000 was used as polydecamethylene glycol, and that the molar ratio of DPC/ISB/CHMD/PDMG1000 was set to 102/72/18/10.

[Example 22]

A polycarbonate copolymer was obtained in the same manner as in Example 1 except that ISB was used as a heteroalicyclic dihydroxy compound, that PNMG1000 was used as polynonamethylene glycol, and that the molar ratio of DPC/ISB/PNMG1000 was set to 104/90/10.

[Example 23]

A polycarbonate copolymer was obtained in the same manner as in Example 1 except that ISB was used as a heteroalicyclic dihydroxy compound, that CHDM was used as an alicyclic dihydroxy compound, that PNMG1000 was used as polynonamethylene glycol, and that the molar ratio of DPC/ISB/CHMD/PDMG1000 was set to 102/69.6/17.4/13.

[Example 24]

A polycarbonate copolymer was obtained in the same manner as in Example 1 except that ISB was used as a heteroalicyclic dihydroxy compound, that PHMG2700 was used as polyhexamethylene glycol, and that the molar ratio of DPC/ISB/PHMG2700 was set to 104/97/3.

[Comparative Example 4]

A polycarbonate copolymer was obtained in the same manner as in Example 1 except that ISB was used as a heteroalicyclic dihydroxy compound, that PHMG1000 was used as polyhexamethylene glycol, and that the molar ratio of DPC/ISB/PHMG1000 was set to 102/90/10.

[Example 25]

A polycarbonate copolymer was obtained in the same manner as in Example 1 except that ISB was used as a heteroalicyclic dihydroxy compound, that PDMG1000 was used as polydecamethylene glycol, and that the molar ratio of DPC/ISB/PDMG1000 was set to be 104/70/30.

[Example 26]

A polycarbonate copolymer was obtained in the same manner as in Example 1 except that ISB was used as a heteroalicyclic dihydroxy compound, that PDMG1000 was used as polydecamethylene glycol, and that the molar ratio of DPC/ISB/PDMG1000 was set to be 104/50/50.

[Example 27]

A polycarbonate copolymer was obtained in the same manner as in Example 1 except that ISB was used as a heteroalicyclic dihydroxy compound, that PNMG1000 was used as polynonamethylene glycol, and that the molar ratio of DPC/ISB/PNMG1000 was set to 104/70/30.

[Example 28]

A polycarbonate copolymer was obtained in the same manner as in Example 1 except that ISB was used as a heteroalicyclic dihydroxy compound, that PNMG1000 was used as polynonamethylene glycol, and that the molar ratio

of DPC/ISB/PNMG1000 was set to 102/50/50.

[Example 29]

A polycarbonate copolymer was obtained in the same manner as in Example 1 except that ISB was used as a heteroalicyclic dihydroxy compound, that PHMG2700 was used as polyhexamethylene glycol, and that the molar ratio of DPC/ISB/PHMG2700 was set to 104/90/10.

[Table 1]

Table 1

| Example Comparative Example No. | Constituent Unit Derived From Dihydroxy Compound (i.e., Diol Component) | | | | | | Alkylene Group Numbers | Polyether Mn | Evaluation Results | | | | | | |
|---|---|---|---|---|---|---|---|---|---|---|---|---|---|---|---|
| | PTMG 4000 | PTMG 3000 | PTMG 1000 | H2700 | ISB | CHDM | | | Reduced Viscosity | Tg | Tm (L) | ΔH (L) | Tm (H) | ΔH (H) | Shape Retention Property |
| | wt% (mol%) | wt% (mol%) | wt% (mol%) | wt% (mol%) | wt% (mol%) | wt% (mol%) | | | dl/g | °c | °c | J/g | °c | J/g | - |
| Example 1 | 42 (3) | | | | 58 (97) | | 4 | 4000 | 0.822 | 156 | 27 | 27 | nd | 0 | ○ |
| Example 2 | | 48 (5) | | | 52 (95) | | 4 | 3000 | 0.415 | 111 | 18 | 25 | nd | 0 | ○ |
| Example 3 | 32 (2) | | | | 68 (98) | | 4 | 4000 | 1.045 | 165 | 25 | 24 | nd | 0 | ○ |
| Comparative Example 1 | | | 40 (10) | | 60 (90) | | 4 | 1000 | 0.624 | 125 | 13 | 10 | nd | 0 | ○ |
| Comparative Example 2 | | | 40 (10) | | 48 (72) | 12 (18) | 4 | 1000 | 0.630 | 96 | 14 | 6 | nd | 0 | ○ |
| Comparative Example 3 | | | | 45 (5) | 55 (95) | | 3 | 2700 | 0.906 | 149 | nd | 0 | nd | 0 | × |

nd shows non-observation.
Alkylene group numbers show the number of alkylene groups in an oxyalkylene group as a repeating unit which constitutes polyoxyalkylene glycol

[Table 2]

Table 2

| Example No. | Constituent Unit Derived From Di hydroxy Compound (i.e., Diol Component) | | | | | | Alkylene Group Numbers | Polyether Mn | Evaluation Results | | | | | | |
|---|---|---|---|---|---|---|---|---|---|---|---|---|---|---|---|
| | PTMG 4000 | PTMG 2000 | PEG 4000 | ISB | CHDM | TCDDM | | | Reduced Viscosity | Tg | Tm (L) | ΔH (L) | Tm (H) | ΔH (H) | Shape Retention Property |
| | wt% (mol%) | wt% (mol%) | wt % (mol%) | wt% (mol%) | wt % (mol%) | wt % (mol%) | | | dl/g | °C | °C | J/g | °c | J/g | - |
| Example 4 | 72 (10) | | | 28 (90) | | | 4 | 4000 | 1.096 | 166 | 26 | 59 | nd | 0 | ○ |
| Example 5 | 64 (7) | | | 36 (93) | | | 4 | 4000 | 1.437 | nd | 27 | 41 | nd | 0 | ○ |
| Example 6 | 55 (5) | | | 45 (95) | | | 4 | 4000 | 1.339 | 172 | 28 | 41 | nd | 0 | ○ |
| Example 7 | 72 (10) | | | 20 (63) | 8 (27) | | 4 | 4000 | 1.478 | 117 | 27 | 58 | nd | 0 | ○ |
| Example 8 | 70 (10) | | | 19 (63) | | 11 (27) | 4 | 4000 | 0.920 | 117 | 27 | 67 | nd | 0 | ○ |
| Example 9 | 53 (5) | | | 30 (66.5) | | 17 (28.5) | 4 | 4000 | 0.786 | 121 | 26 | 56 | nd | 0 | ○ |
| Example 10 | | 57 (10) | | 43 (90) | | | 4 | 2000 | 0.529 | 150 | 24 | 42 | nd | 0 | ○ |
| Example 11 | | | 72 (10) | 28 (90) | | | 2 | 4000 | 0.617 | 139 | 48 | 63 | nd | 0 | ○ |

nd shows non-observation.
Alkylene group numbers show the number of alkylene groups in an oxyalkylene group as a repeating unit which constitutes polyoxyalkylene glycol.

[Table 3]

Table 3

| Example No. | Constituent Unit Derived From Dihydroxy Compound (i.e., Diol Component) | | | | | | | | Alkylene Group Numbers | Polyether Mn |
|---|---|---|---|---|---|---|---|---|---|---|
| | PTMG 4000 | PTMG 3000 | ADDM | B0DM | SPG | 1,10-DD | 1, 12-DD | 1, 18-0D | | |
| | wt% (mol%) | wt% (mol%) | wt% (mol%) | wt% (mol%) | wt% (mol%) | wt% (mol%) | wt% (mol%) | wt% (mol%) | | |
| Example 12 | 69 (10) | | | 31 (90) | | | | | 4 | 4000 |
| Example 13 | 67 (10) | | 33 (90) | | | | | | 4 | 4000 |
| Example 14 | 57 (10) | | | | 43 (90) | | | | 4 | 4000 |
| Example 15 | 69 (10) | | | | | 31 (90) | | | 4 | 4000 |
| Example 16 | 66 (10) | | | | | | 34 (90) | | 4 | 4000 |
| Example 17 | 61 (15) | | | | | | | 39 (85) | 4 | 4000 |
| Example 18 | | 42 (10) | | | | | | 58 (90) | 3 | 3000 |
| Alkylene group numbers show the number of alkylene groups in an oxyalkylene group as a repeating unit which constitutes polyoxyalkylene glycol. | | | | | | | | | | |

[Table 4]

Table 4

| Example No. | Evaluation Results | | | | | | | | |
|---|---|---|---|---|---|---|---|---|---|
| | Reduced Viscosity | Tg | Tm(L) | ΔH(L) | Tm(L) | ΔH(L) | Tm (H) | ΔH(H) | Shape Retention Property |
| | dl/g | °C | °C | J/g | °C | J/g | °C | J/g | - |
| Example 12 | 0.807 | nd | 27 | 39 | | | 226 | 8 | ○ |
| Example 13 | 0.625 | nd | 26 | 32 | | | 209<br>249<br>267 | 5 | ○ |
| Example 14 | 0. 475 | nd | 23 | 27 | | | 209<br>227<br>253 | 22 | ○ |
| Example 15 | 1.233 | nd | 27 | 53 | 43<br>47 | 18 | nd | 0 | ○ |
| Example 16 | 0.892 | nd | 27 | 47 | 55<br>59 | 25 | nd | 0 | ○ |
| Example 17 | 1.021 | nd | 29 | 75 | 56 | 10 | nd | 0 | ○ |
| Example 18 | 1. 148 | nd | 24 | 40 | 79 | 58 | nd | 0 | ○ |
| nd shows non-observation. | | | | | | | | | |

[Table 5]

Table 5

| Example Comparative Example No. | Constituent Unit Derived From Dihydroxy Compound (i.e., Diol Component) | | | | | | | Alkylene Group Numbers | Polyether Mn |
|---|---|---|---|---|---|---|---|---|---|
| | PDMG 2700 | PDMG 1000 | PNMG 1000 | PHMG 2700 | PHMG 1000 | ISB | CHDM | | |
| | wt% (mol%) | wt% (mol%) | wt% (mol%) | wt% (mol%) | wt% (mol%) | wt% (mol%) | wt% (mol%) | | |
| Example 19 | 24 (2) | | | | | 76 (98) | | 10 | 2700 |
| Example 20 | | 44 (12) | | | | 56 (88) | | 10 | 1070 |
| Example 21 | | 39 (10) | | | | 49 (72) | 12 (18) | 10 | 1070 |
| Example 22 | | | 39 (10) | | | 61 (90) | | 9 | 1000 |
| Example 23 | | | 46 (13) | | | 43 (69. 6) | 11 (17.4) | 9 | 1000 |
| Examp le 24 | | | | 33 (3) | | 67 (97) | | 6 | 2700 |
| Comparative Examp le 4 | | | | | 39 (10) | 61 (90) | | 6 | 1000 |
| Alkylene group numbers show the number of alkylene groups in an oxyalkylene group as a repeating unit which constitutes polyoxyalkylene glycol. | | | | | | | | | |

[Table 6]

Table 6

| Example Comparative Example No. | Evaluation Results | | | | | | |
|---|---|---|---|---|---|---|---|
| | Reduced Viscosity | Tg | Tm(L) | ΔH(L) | Tm(H) | ΔH(H) | Shape Retention Property |
| | dl/g | °C | °C | J/g | °C | J/g | - |
| Example 19 | 0. 541 | 145 | 66 | 23 | nd | 0 | ○ |
| Example 20 | 0. 709 | 123 | 54 | 20 | nd | 0 | ○ |
| Example 21 | 0. 484 | nd | 56 | 20 | nd | 0 | ○ |
| Example 22 | 0. 360 | 108 | 54 | 26 | nd | 0 | ○ |
| Example 23 | 0.618 | nd | 53 | 21 | nd | 0 | ○ |
| Example 24 | 1. 127 | 167 | 51 | 30 | nd | 0 | ○ |
| Comparative Example 4 | 0. 896 | 114 | 21 | 5 | nd | 0 | ○ |
| nd shows non-observation. | | | | | | | |

[Table 7]

Table 7

| Example No. | Constituent Unit Derived From Dihydroxy Compound (i.e., Diol Component) | | | | Alkylene Group Numbers | Polyether Mn | Evaluation Results | | | | | | |
|---|---|---|---|---|---|---|---|---|---|---|---|---|---|
| | PDMG 1000 | PNMG 1000 | PHMG 2700 | ISB | | | Reduced Viscosity | Tg | Tm (L) | ΔH (L) | Tm (H) | ΔH (H) | Shape Retention Property |
| | wt% (mol%) | wt% (mol%) | wt% (mol%) | wt% (mol%) | | | dl/g | °C | °C | J/g | °C | J/g | - |
| Example 25 | 71 (30) | | | 29 (70) | 10 | 1070 | 0.690 | 116 | 60 | 74 | nd | 0 | ○ |
| Example 26 | 85 (50) | | | 15 (50) | 10 | 1070 | 0.802 | nd | 66 | 99 | nd | 0 | ○ |
| Example 27 | | 71 (30) | | 29 (70) | 9 | 1000 | 1051 | 153 | 54 | 63 | nd | 0 | ○ |
| Example 28 | | 85 (50) | | 15 (50) | 9 | 1000 | 1045 | 153 | 60 | 94 | nd | 0 | ○ |
| Example 29 | | | 64 (10) | 36 (90) | 6 | 2700 | 2.246 | 164 | 49 | 30 | nd | 0 | ○ |

nd shows non-observation.
Alkylene group numbers show the number of alkylene groups in an oxyalkylene group as a repeating unit which constitutes polyoxyalkylene glycol.

As can be understood from Tables 1 and 2, the copolymerized polycarbonate resins of Examples 1 to 13 containing specific constituent units are excellent in heat storage property, heat resisting property, and shape retention property. On the other hand, Comparative Examples 1 to 3 containing no specific constituent unit exhibited insufficient heat storage property.

As can be understood from Table 1, when the number average molecular weight of PTMG was too small, the heat storage property was insufficient. As can be understood from comparison between Examples 1 and 3 and Comparative Example 3, when polytrimethylene glycol (PO3G) was used, instead of PTMG, as a dihydroxy compound, the copolymerized polycarbonate resin did not have heat storage performance and could not retain the shape, even when having an equivalent weight ratio of the constituent unit derived from polyether and a close number average molecular weight of the polyether.

As can be understood from Tables 3 and 4, it can be seen that Examples 12 to 14 containing the constituent units of ADDM, BODM, and SPG which are alicyclic dihydroxy compounds exhibit Tm (H) derived from the constituent units of ADDM, BODM, and SPG, respectively, Tm (L) derived from the constituent unit of PTMG4000, and $\Delta$H(L). It can be seen that these copolymerized polycarbonate resins are excellent in heat storage property, heat resisting property, and shape retention property. It can be seen that Examples 15 to 18 containing the constituent units of 1,10-DD, 1,12-DD, and 1,18-OD which are aliphatic dihydroxy compounds exhibit Tm (L) derived from the constituent units of PTMG 4000 and PTMG 3000, and $\Delta$H(L). Furthermore, it can be seen that these examples exhibit Tm (L) derived from the constituent units of 1,10-DD, 1,12-DD, and 1,18-OD, and $\Delta$H(L), and are excellent in heat storage property, heat resisting property, and shape retention property.

As understood from Tables 5 to 7, the copolymerized polycarbonate resins of Examples 19 to 29 containing specific constituent units are excellent in heat storage property, heat resisting property, and shape retention property. On the other hand, Comparative Example 4 in which the molecular weight of PHMG was small (specifically, 1,000) was insufficient in heat storage property. The copolymerized polycarbonate resins having, as constituent units, PNMG1000 and PDMG1000 in which the carbon number of the alkylene group R in the repeating unit which constitutes the polyoxyalkylene glycol and is represented by Formula (7) is 9 and 10 are excellent in heat storage property, heat resisting property, and shape retention property.

## Claims

**1.** A copolymerized polycarbonate resin comprising, at least, a constituent unit (A) derived from one or more dihydroxy compounds selected from the group consisting of an aliphatic dihydroxy compound, an alicyclic dihydroxy compound, and a heteroalicyclic dihydroxy compound, and a constituent unit (B) derived from a polyoxyalkylene glycol,

wherein a weight ratio of the constituent unit (B) to a total weight of the copolymerized polycarbonate resin is more than 20 wt% and 99 wt% or less, and
wherein a carbon number $m_1$ of an alkylene group R in a repeating unit which constitutes the polyoxyalkylene glycol and is represented by the following formula (7) and a number average molecular weight of the polyoxyalkylene glycol satisfy any one of the following relationships ($\alpha$1) to ($\alpha$3):

$m_1$ is 2 or 3, and the number average molecular weight is 3,000 or more and 20,000 or less ··· ($\alpha$1);
$m_1$ is 4, 5, or 6, and the number average molecular weight is 1,500 or more and 20,000 or less ··· ($\alpha$2); and
$m_1$ is an integer of 7 or more, and the number average molecular weight is 800 or more and 20,000 or less ··· ($\alpha$3),

[Chemical Formula 1]

$$\left( O - R \right)_n \qquad (7)$$

wherein R represents an alkylene group, and n represents a number of repetitions.

**2.** A copolymerized polycarbonate resin comprising, at least, a constituent unit (A) derived from one or more dihydroxy compounds selected from the group consisting of an aliphatic dihydroxy compound, an alicyclic dihydroxy compound, and a heteroalicyclic dihydroxy compound, and a constituent unit (B) derived from a polyoxyalkylene glycol, wherein a carbon number of an alkylene group R in a repeating unit which consists the polyoxyalkylene glycol and

is represented by the following formula (7) is 7 or more, and a number average molecular weight of the polyoxyalkylene glycol is 800 or more and 20,000 or less,

[Chemical Formula 2]

$$\left( O - R \right)_n \qquad (7)$$

wherein R represents an alkylene group, and n represents a number of repetitions.

**3.** A copolymerized polycarbonate resin comprising, at least, a constituent unit (A) derived from a dihydroxy compound and a constituent unit (B) derived from a polyoxyalkylene glycol,

wherein a carbon number of an alkylene group R in a repeating unit which consists the polyoxyalkylene glycol and is represented by the following formula (7) is 2 or more, and
wherein a weight ratio of the constituent unit (B) to a total weight of the copolymerized polycarbonate resin is more than 50 wt% and 99 wt% or less.

[Chemical Formula 3]

$$\left( O - R \right)_n \qquad (7)$$

**4.** The copolymerized polycarbonate resin according to any one of claims 1 to 3, wherein an enthalpy of fusion $\Delta H(L)$ observed in a temperature range of -30°C or higher and 80°C or lower by differential scanning calorimetry is 20 J/g or more.

**5.** The copolymerized polycarbonate resin according to any one of claims 1 to 4, wherein the dihydroxy compound is an alicyclic dihydroxy compound and/or a dihydroxy compound having a cyclic ether structure, both containing one or more five-membered ring structures or one or more six-membered ring structures in a part of the structure.

**6.** The copolymerized polycarbonate resin according to any one of claims 1 to 5, wherein the dihydroxy compound is one or more compounds selected from the group consisting of the following formulas (1) to (6).

[Chemical Formula 4]

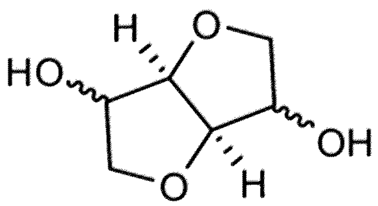

(1)

[Chemical Formula 5]

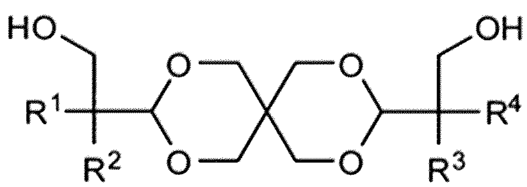

(2)

[Chemical Formula 6]

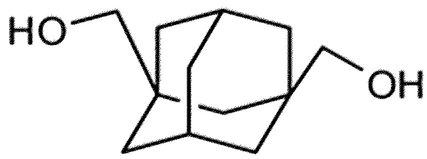

(3)

[Chemical Formula 7]

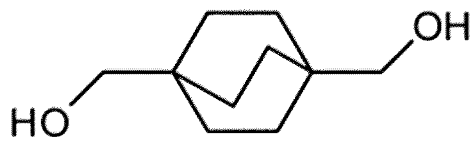

(4)

[Chemical Formula 8]

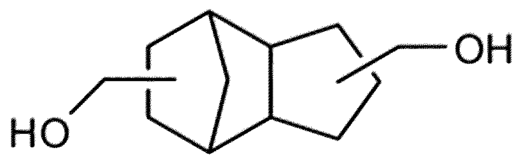

(5)

[Chemical Formula 9]

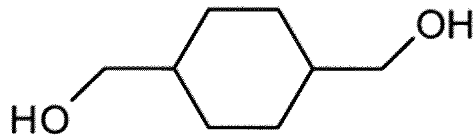

(6)

**7.** A copolymerized polycarbonate resin comprising, at least, a constituent unit (A) derived from an alicyclic dihydroxy compound and/or a heteroalicyclic dihydroxy compound and a constituent unit (B) derived from a polytetramethylene glycol having a number average molecular weight of 1,500 or more and 20,000 or less,
wherein an enthalpy of fusion $\Delta H(L)$ observed in a temperature range of -30°C or higher and 80°C or lower by differential scanning calorimetry is 20 J/g or more.

**8.** The copolymerized polycarbonate resin according to claim 7, wherein a weight ratio of the constituent unit (B) to a total weight of the copolymerized polycarbonate resin is 25 wt% or more and 99 wt% or less.

**9.** The copolymerized polycarbonate resin according to claim 7 or 8, wherein the constituent unit (A) is a constituent unit derived from an alicyclic dihydroxy compound and/or a constituent unit derived from a dihydroxy compound having a cyclic ether structure, both containing one or more five-membered ring structures or one or more six-membered ring structures as a part of the structure.

**10.** The copolymerized polycarbonate resin according to any one of claims 7 to 9, wherein the constituent unit (A) is a constituent unit derived from one or more dihydroxy compounds selected from the group consisting of dihydroxy compounds represented by the following formulas (1) to (6).

[Chemical Formula 10]

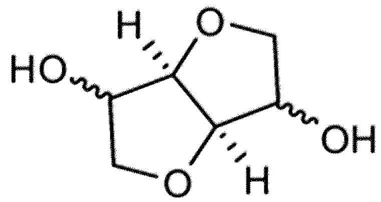

(1)

[Chemical Formula 11]

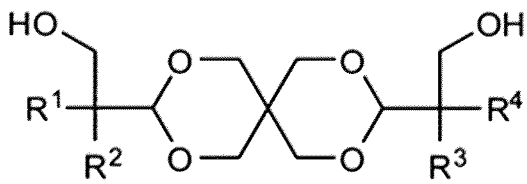

(2)

[Chemical Formula 12]

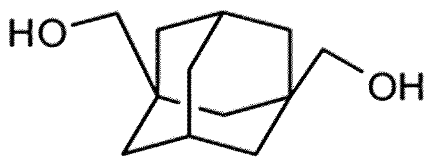

(3)

[Chemical Formula 13]

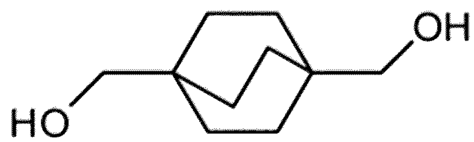

(4)

[Chemical Formula 14]

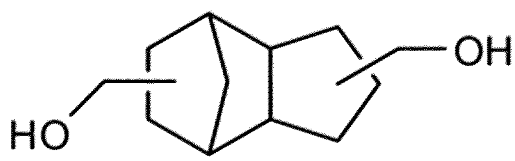

(5)

[Chemical Formula 15]

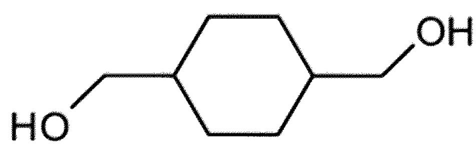

(6)

**11.** The copolymerized polycarbonate resin according to any one of claims 7 to 10, wherein the polytetramethylene glycol has a number average molecular weight of 2,000 or more and 10,000 or less.

**12.** A heat storage material comprising the copolymerized polycarbonate resin according to any one of claims 1 to 11.

**13.** A heat storage molded body obtained by molding the heat storage material according to claim 12.

**14.** A phase transition material comprising a polymer, the polymer having a carbonate bond in a molecular chain thereof and having an enthalpy of fusion $\Delta H(L)$ of 20 J/g or more observed in a temperature range of -30°C or higher and 80°C or lower by differential scanning calorimetry.

**15.** The phase transition material according to claim 14, wherein the polymer comprises, at least, a constituent unit (A) derived from one or more dihydroxy compounds selected from the group consisting of an aliphatic dihydroxy compound, an alicyclic dihydroxy compound, and a heteroalicyclic dihydroxy compound, and a constituent unit (B) derived from a polyoxyalkylene glycol.

**16.** The phase transition material according to claim 15, wherein a weight ratio of the constituent unit (B) to a total weight of the polymer constituting the phase transition material is more than 20 wt% and 99 wt% or less.

**17.** The phase transition material according to claim 15 or 16, wherein a carbon number of an alkylene group R in a repeating unit which constitutes the polyoxyalkylene glycol and is represented by the following formula (7) is 2 or 3, and a number average molecular weight is 3,000 or more and 20,000 or less,

[Chemical Formula 16]

$$\left( O-R \right)_n \quad (7)$$

wherein R represents an alkylene group, and n represents a number of repetitions.

**18.** The phase transition material according to claim 15 or 16, wherein a carbon number of an alkylene group R in a repeating unit which constitutes the polyoxyalkylene glycol and is represented by the following formula (7) is 4 to 6, and a number average molecular weight is 1,500 or more and 20,000 or less,

[Chemical Formula 17]

$$\left( O-R \right)_n \quad (7)$$

wherein R represents an alkylene group, and n represents a number of repetitions.

**19.** The phase transition material according to claim 15 or 16, wherein a carbon number of an alkylene group R in a repeating unit which constitutes the polyoxyalkylene glycol and is represented by the following formula (7) is 7 or more, and a number average molecular weight is 800 or more and 20,000 or less,

[Chemical Formula 18]

$$\left( O-R \right)_n \quad (7)$$

wherein R represents an alkylene group, and n represents a number of repetitions.

FIG. 1

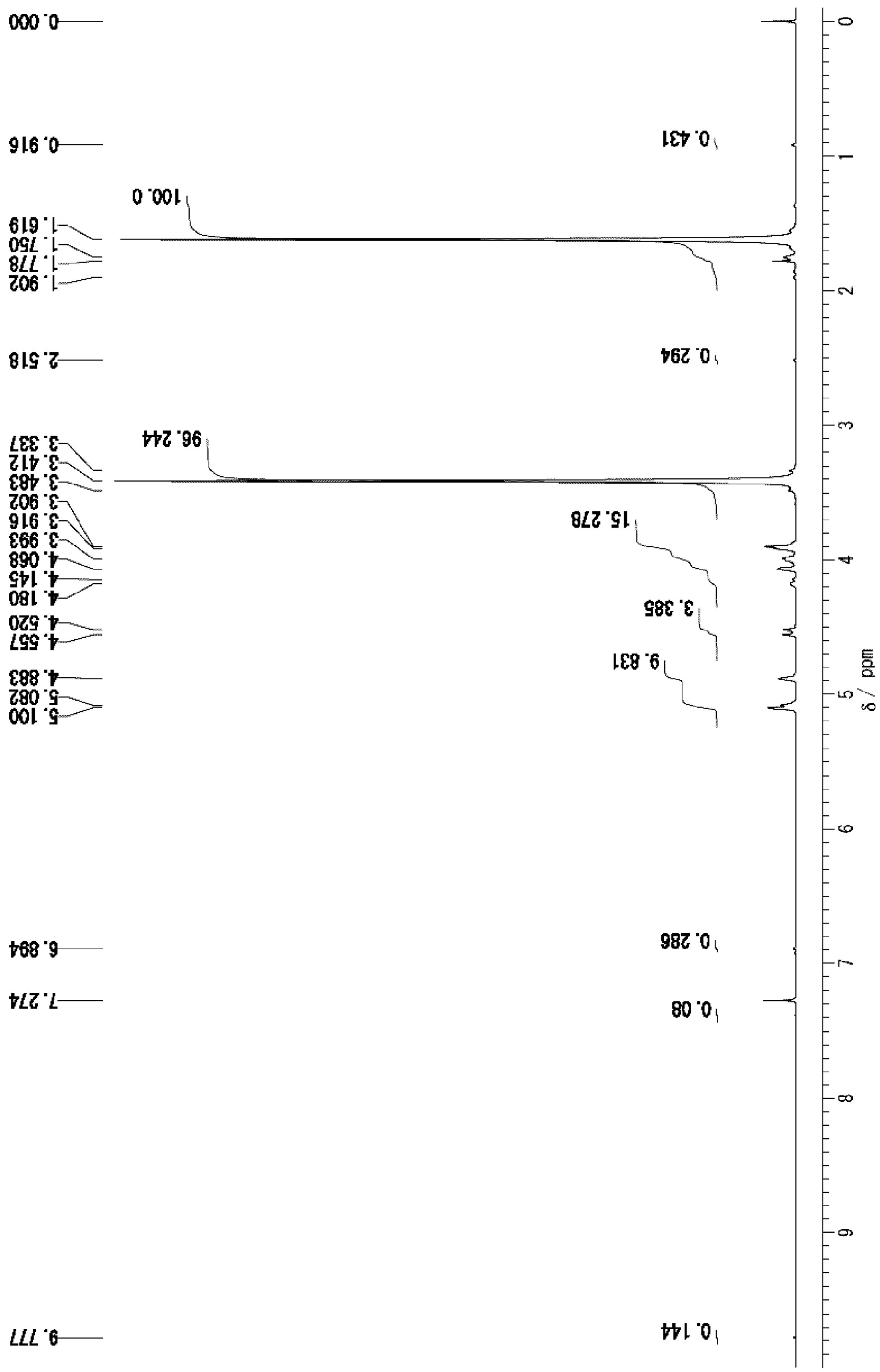


NMR spectrum in Example 4

FIG. 2

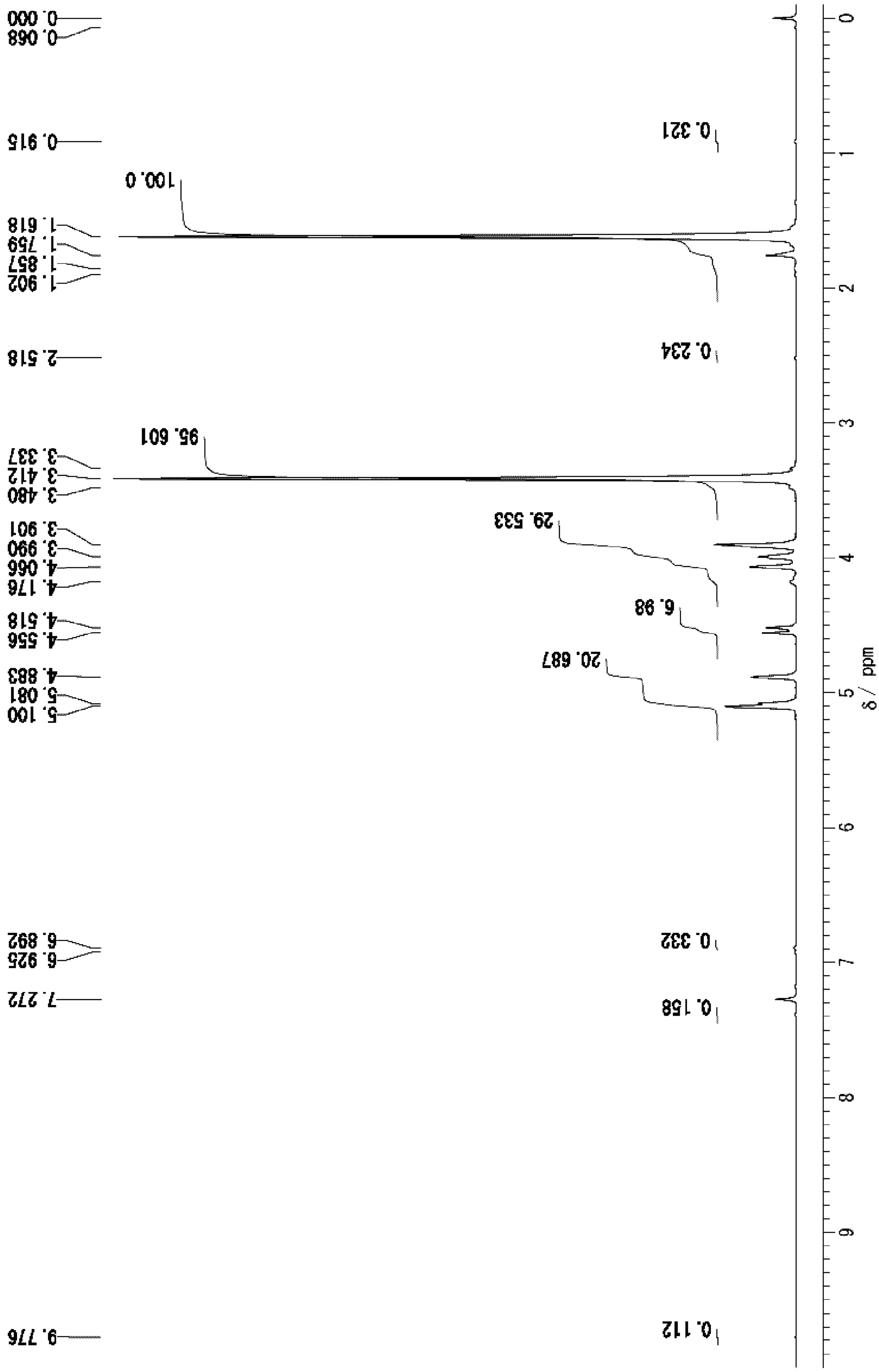


NMR spectrum in Example 6

FIG. 3

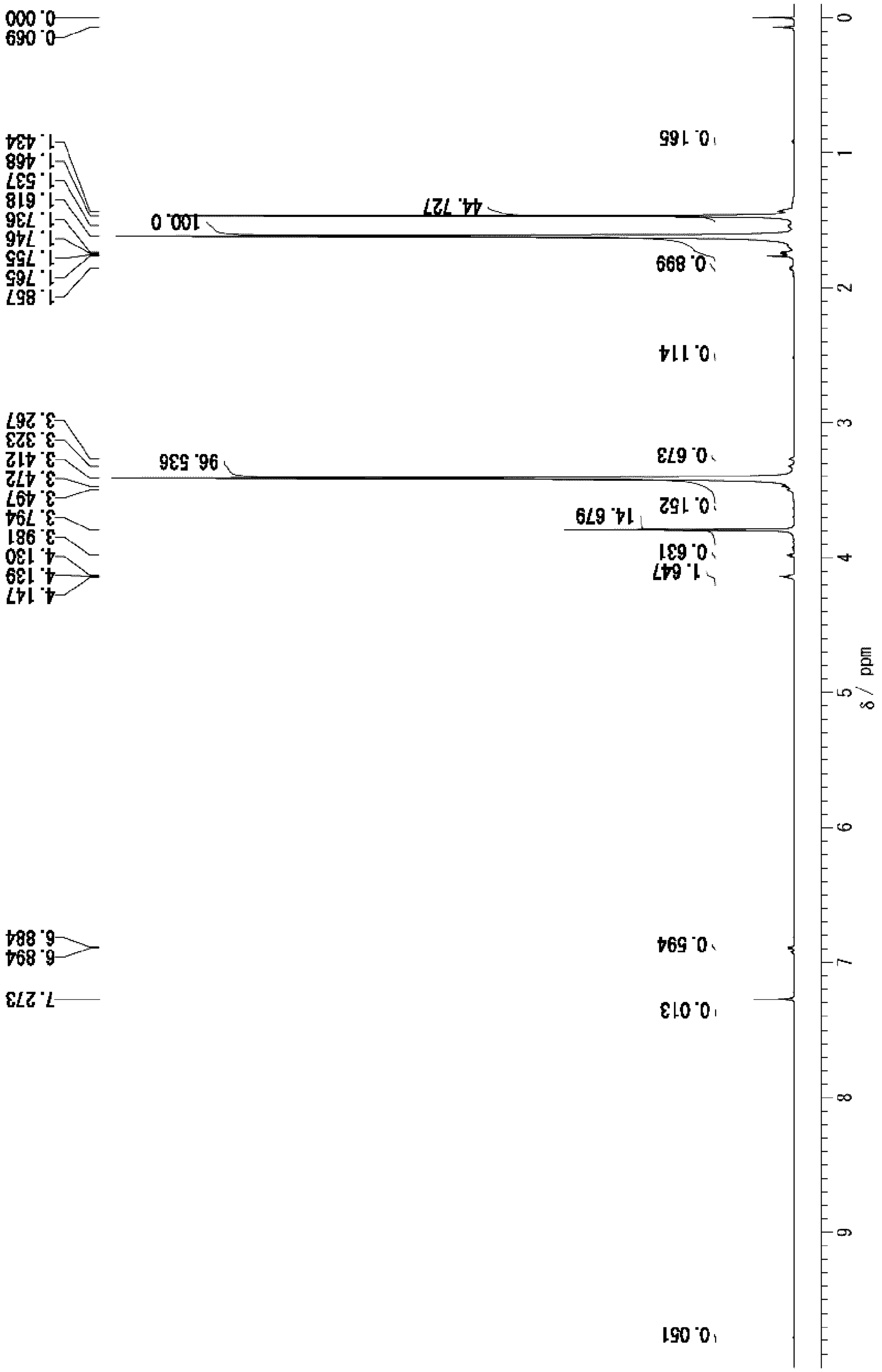


NMR spectrum in Example 12

FIG. 4

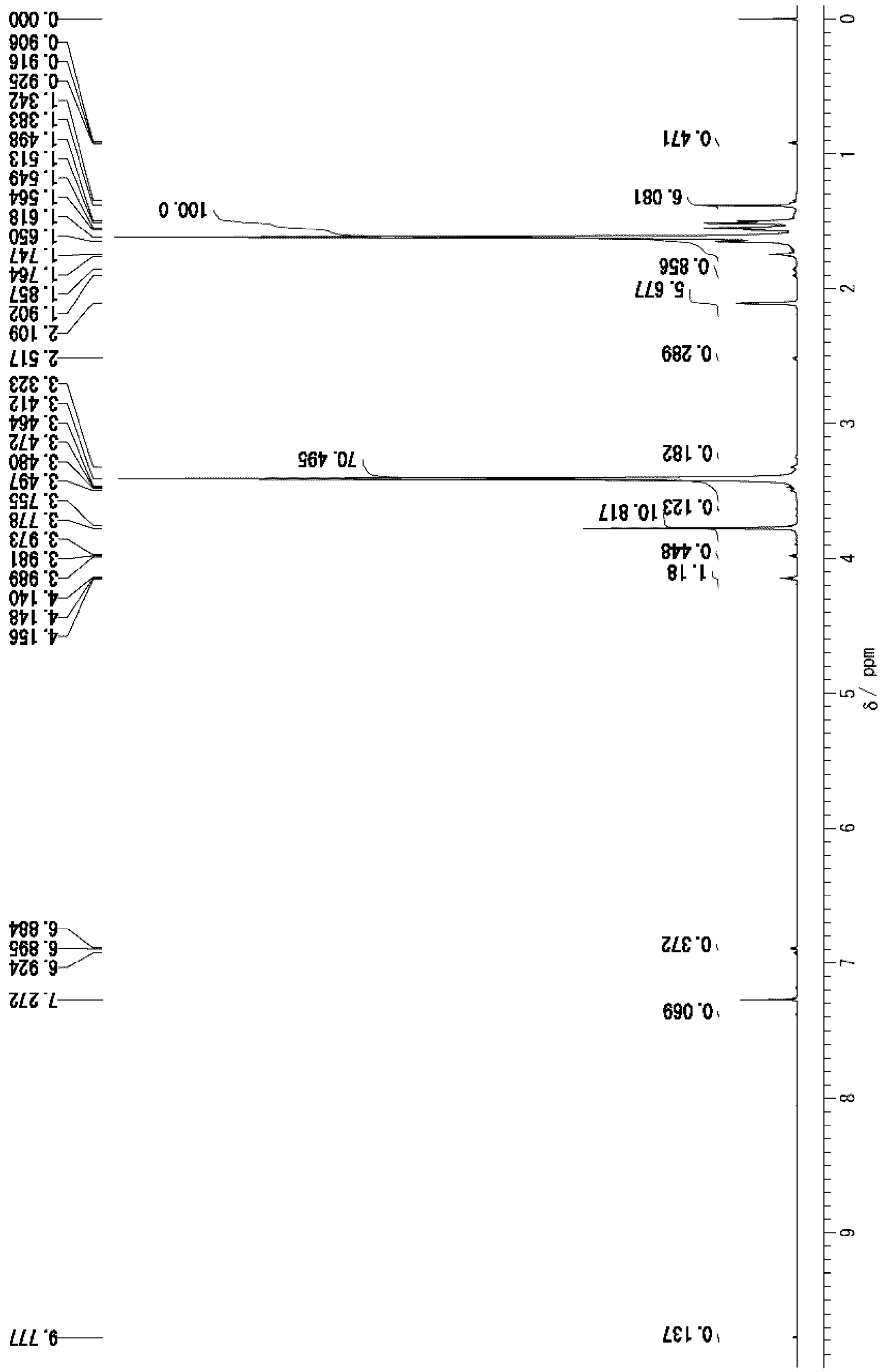


NMR spectrum in Example 13

FIG. 5

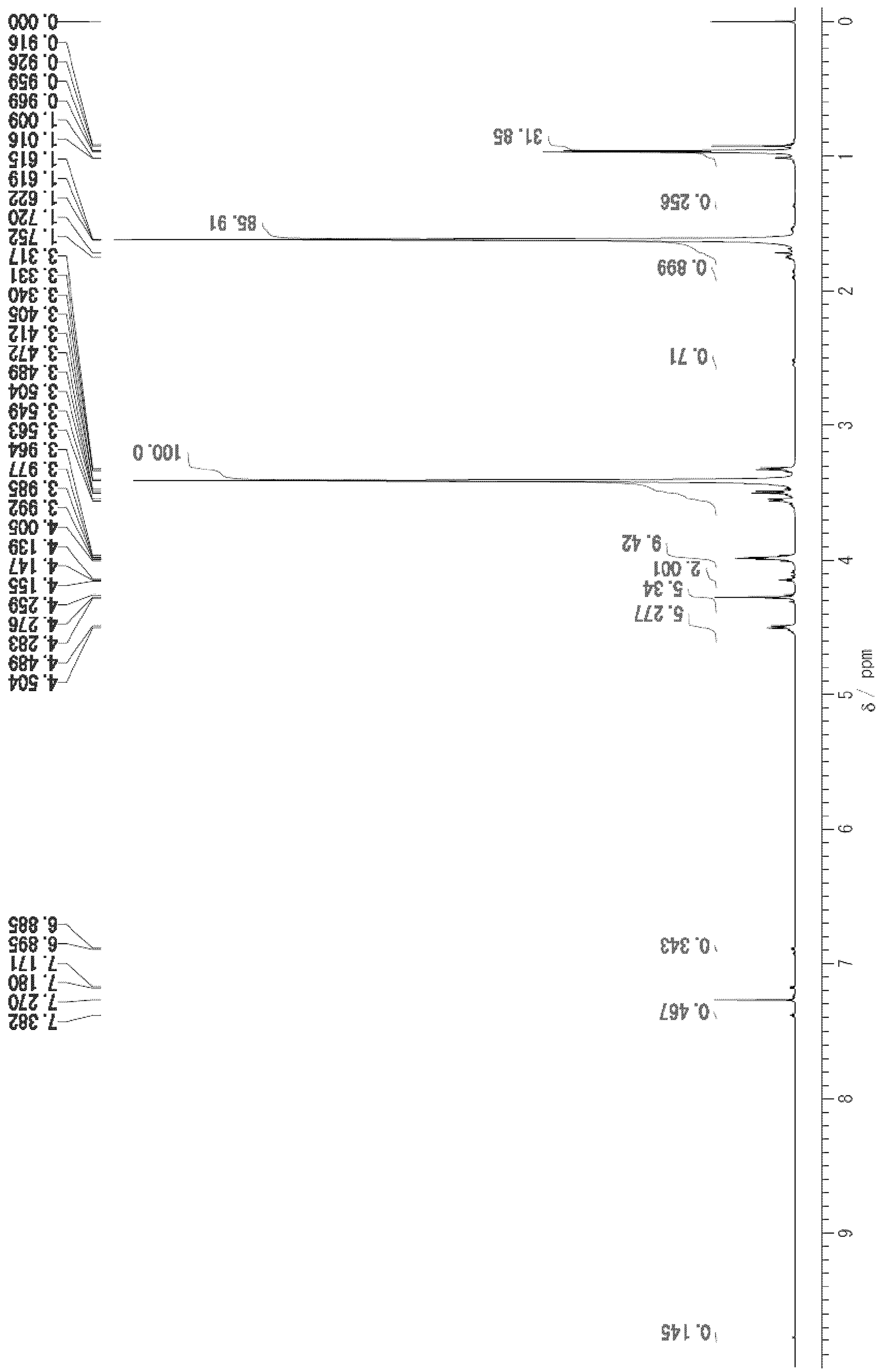


NMR spectrum in Example 14

FIG. 6

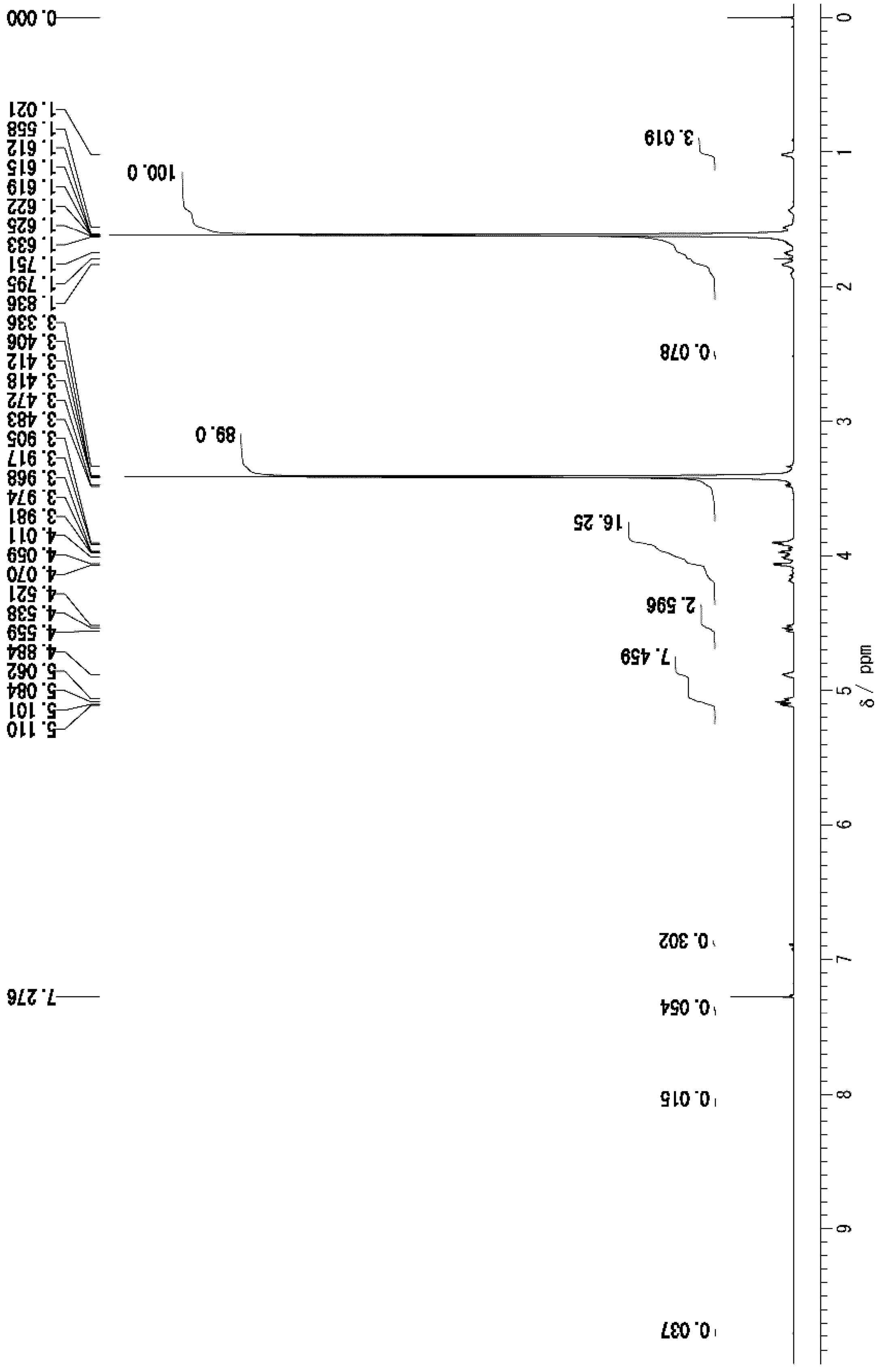


NMR spectrum in Example 7

FIG. 7

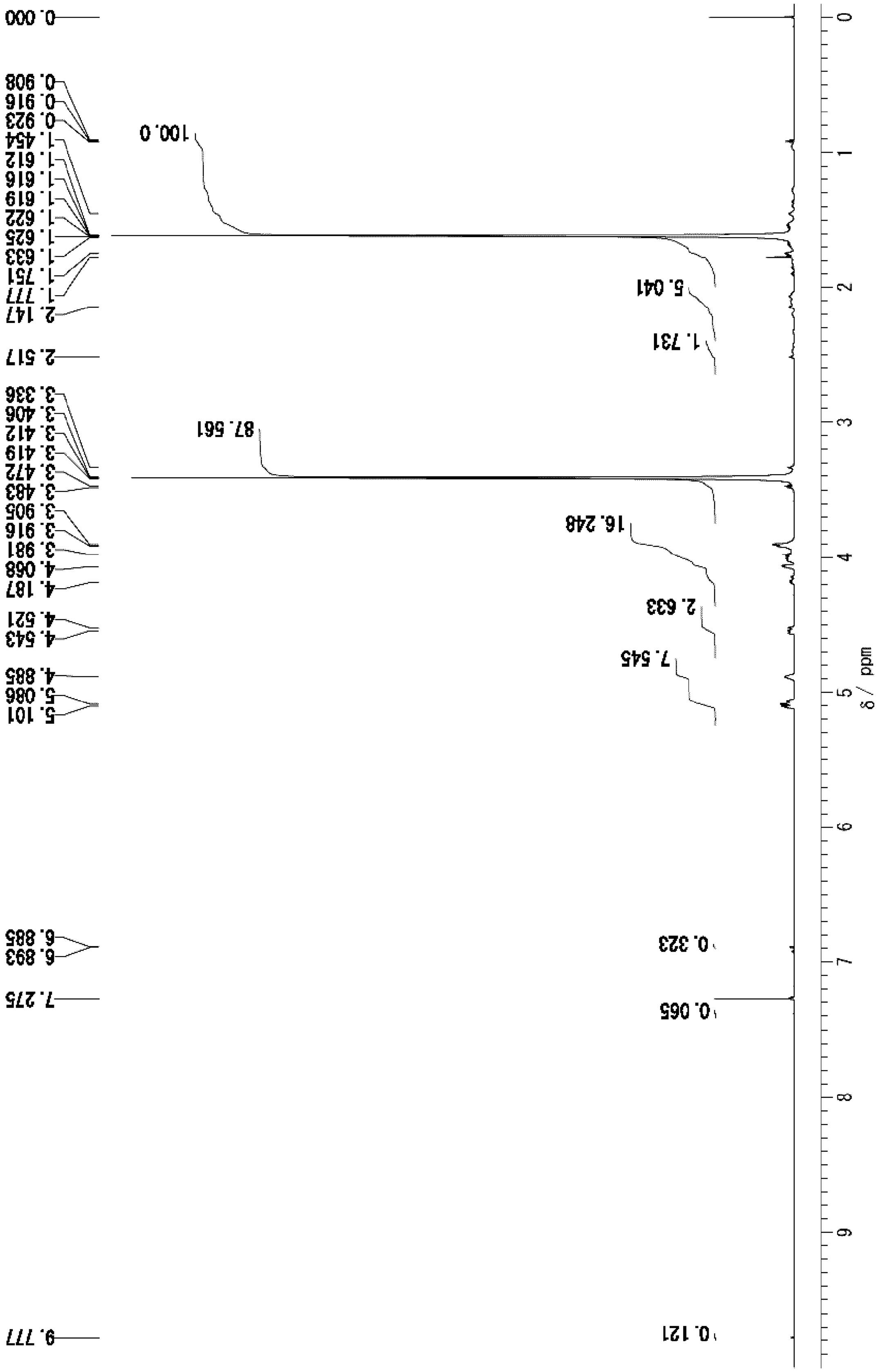


NMR spectrum in Example 8

FIG. 8

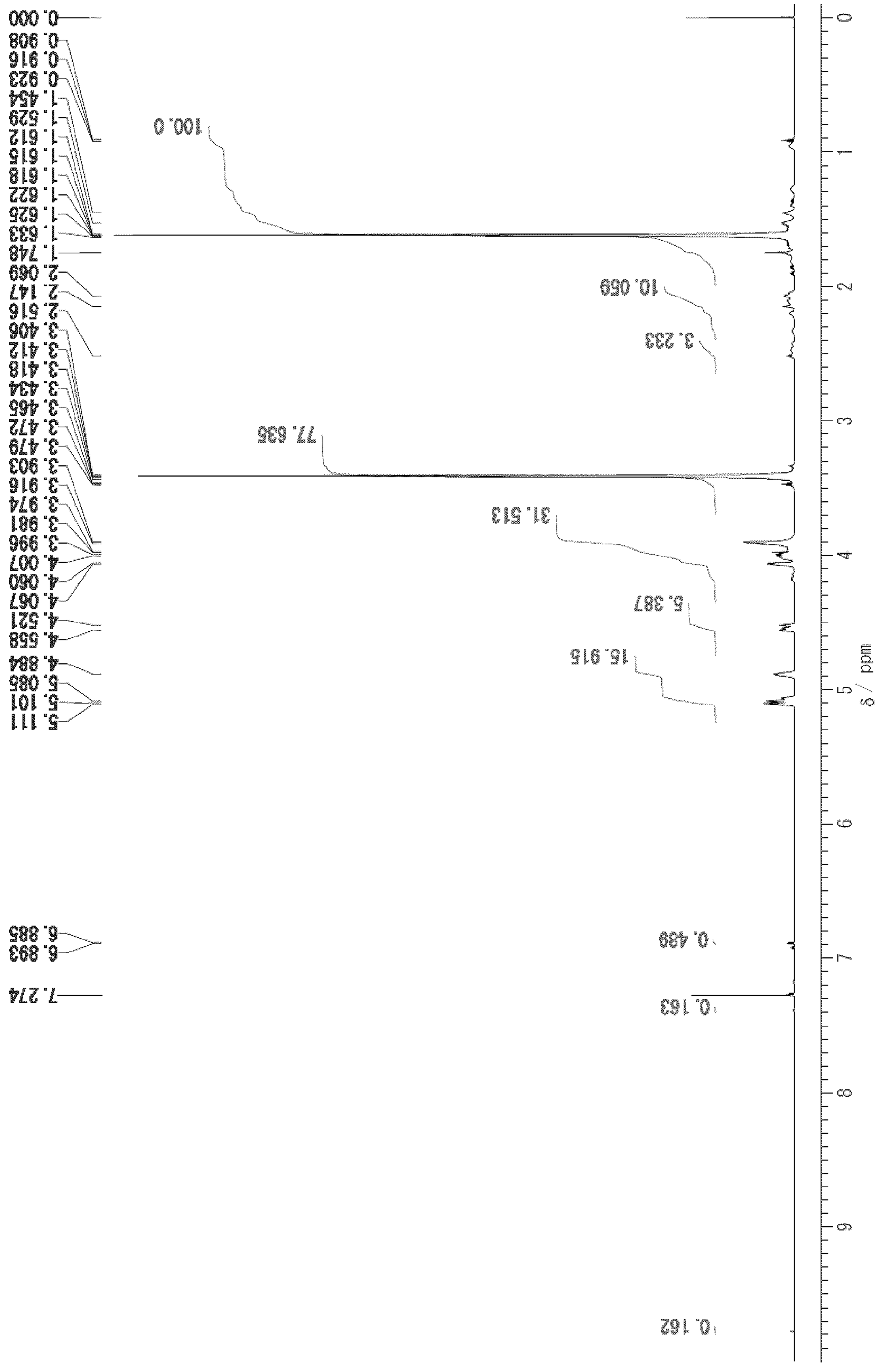


NMR spectrum in Example 9

FIG. 9

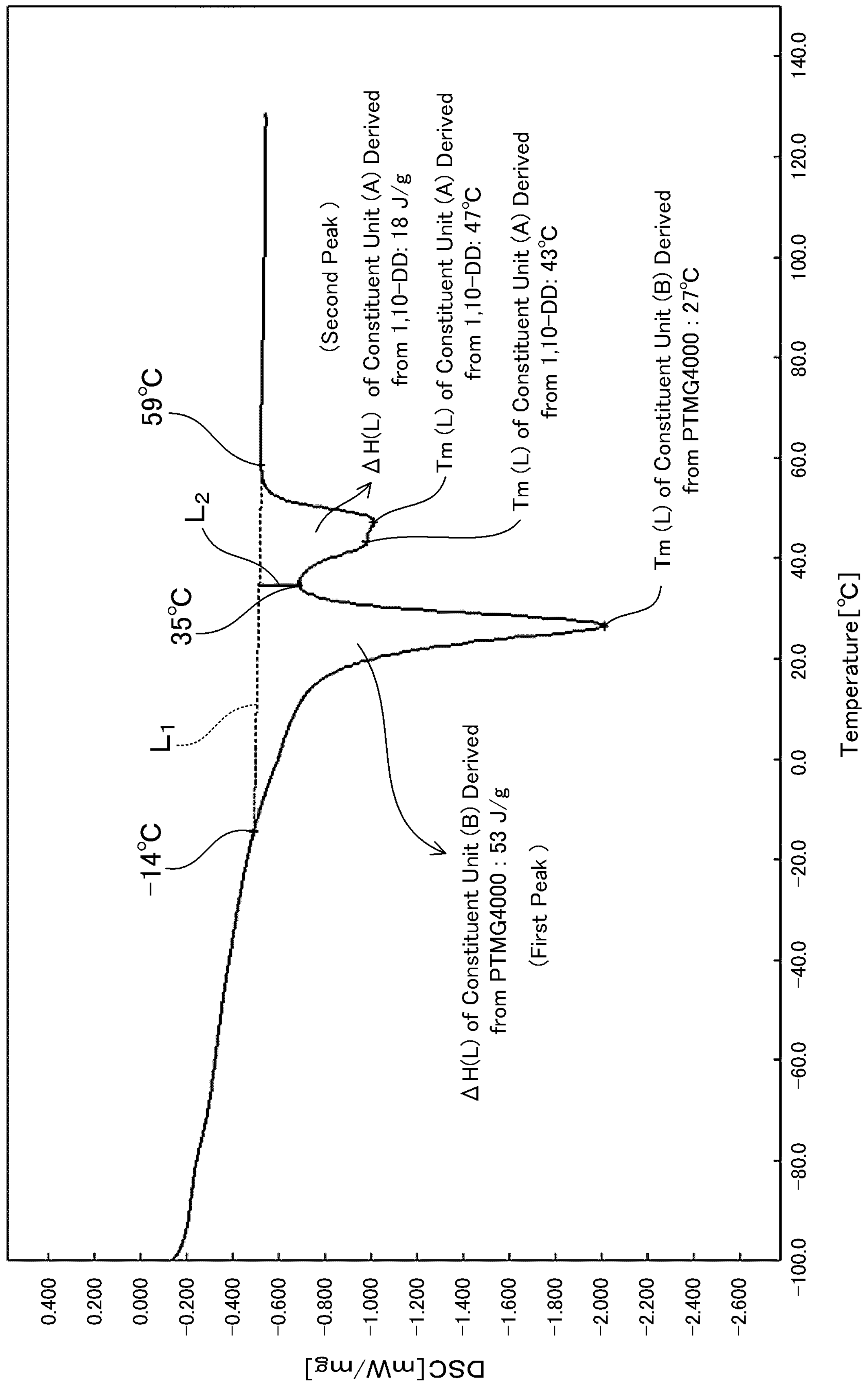

DSC[mW/mg]
0.400
0.200
0.000
−0.200
−0.400
−0.600
−0.800
−1.000
−1.200
−1.400
−1.600
−1.800
−2.000
−2.200
−2.400
−2.600
Temperature[°C]
−100.0
−80.0
−60.0
−40.0
−20.0
0.0
20.0
40.0
60.0
80.0
100.0
120.0
140.0
−14°C
L1
35°C
L2
59°C
(Second Peak)
ΔH(L) of Constituent Unit (A) Derived from 1,10-DD: 18 J/g
Tm (L) of Constituent Unit (A) Derived from 1,10-DD: 47°C
Tm (L) of Constituent Unit (A) Derived from 1,10-DD: 43°C
Tm (L) of Constituent Unit (B) Derived from PTMG4000 : 27°C
ΔH(L) of Constituent Unit (B) Derived from PTMG4000 : 53 J/g
(First Peak)

**INTERNATIONAL SEARCH REPORT**

International application No.
PCT/JP2021/015603

A. CLASSIFICATION OF SUBJECT MATTER
C08G 64/02(2006.01)i; C08G 64/18(2006.01)i; C09K 5/14(2006.01)i
FI: C08G64/18; C09K5/14 E; C08G64/02
According to International Patent Classification (IPC) or to both national classification and IPC

B. FIELDS SEARCHED

Minimum documentation searched (classification system followed by classification symbols)
C08G64/02; C08G64/18; C09K5/14

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 2019/187876 A1 (MITSUBISHI ENGINEERING-PLASTICS CORPORATION) 03 October 2019 (2019-10-03) claims, production example 3 | 3-4<br>1-2, 5-19 |
| X<br>A | JP 63-227627 A (IDEMITSU PETROCHEMICAL CO., LTD.) 21 September 1988 (1988-09-21) claims, examples 2-3 | 3-4<br>1-2, 5-19 |
| X<br>A | JP 2009-528428 A (SABIC INNOVATIVE PLASTICS IP B.V.) 06 August 2009 (2009-08-06) claims, examples 19-21 | 3-4<br>1-2, 5-19 |
| A | JP 2011-241277 A (MITSUBISHI CHEMICAL CORP.) 01 December 2011 (2011-12-01) claims, examples | 1-19 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 June 2021 (16.06.2021) | 29 June 2021 (29.06.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/015603

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (January 2015)

**INTERNATIONAL SEARCH REPORT**
Information on patent family members

International application No.
PCT/JP2021/015603

| Patent Documents referred in the Report | Publication Date | Patent Family | Publication Date |
|---|---|---|---|
| WO 2019/187876 A1 | 03 Oct. 2019 | (Family: none) | |
| JP 63-227627 A | 21 Sep. 1988 | (Family: none) | |
| JP 2009-528428 A | 06 Aug. 2009 | US 2007/0208159 A1<br>claims, examples 19-21<br>WO 2007/106296 A2<br>EP 2032628 A2 | |
| JP 2011-241277 A | 01 Dec. 2011 | (Family: none) | |

Form PCT/ISA/210 (patent family annex) (January 2015)

INTERNATIONAL SEARCH REPORT

International application No.
PCT/JP2021/015603

<Continuation of Box No. III>

The claims are classified into the following two inventions.

(Invention 1) Claims 1-13

The invention in claim 1 is a main invention.

Claim 2 shares, with claim 1, the common technical feature of a "copolymerized polycarbonate resin comprising at least a constitutional unit (A) derived from a specific dihydroxy compound, and a constitutional unit (B) derived from polyoxyalkylene glycol in which the number of carbon atoms in an alkylene group R in a repeating unit is at least 7 and the number-average molecular weight is 800-20,000", and is thus classified as invention 1.

Claim 3 shares, with claim 1, the common technical feature of a "copolymerized polycarbonate resin comprising at least a constitutional unit (A) derived from a dihydroxy compound, and a constitutional unit (B) derived from polyoxyalkylene glycol in which the number of carbon atoms in an alkylene group R in a repeating unit is at least 2, wherein the weight ratio of the constitutional unit (B) is within a certain range", and is thus classified as invention 1.

Claims 4-6 are dependent on any of claims 1-3, and thus classified as invention 1.

Claim 7 shares, with claim 1, the common technical feature of a "copolymerized polycarbonate resin comprising at least a constitutional unit (A) derived from a specific dihydroxy compound, and a constitutional unit (B) derived from polytetramethylene glycol having a number-average molecular weight of 1,500-20,000", and is thus classified as invention 1.

Claims 8-13 are dependent on any of claims 1-3 and 7, and thus classified as invention 1.

(Invention 2) Claims 14-19

Claim 14 does not share a common technical feature with claim 1. Moreover, claim 14 is not substantially identical or equivalent to any of the claims classified as invention 1.

Therefore, claim 14 cannot be classified as invention 1, and is classified as invention 2.

Claims 15-19 are dependent on claim 14, and thus classified as invention 2.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003268358 A
- JP 2004027189 A
- JP 2011528396 T
- JP 2005075908 A
- JP 2018165343 A
- JP 2004161893 A


### Non-patent literature cited in the description


- *RSC ADVANCES,* 2013, vol. 3 (15), 4927-4934